(19) Europäisches Patentamt
European Patent Office
Office européen des brevets

(11) **EP 2 177 420 B1**

(12) **EUROPEAN PATENT SPECIFICATION**

(45) Date of publication and mention
of the grant of the patent:
**28.12.2011 Bulletin 2011/52**

(51) Int Cl.:
***B62D 1/16*** *(2006.01)*       ***B62D 1/19*** *(2006.01)*
***B62D 5/04*** *(2006.01)*

(21) Application number: **09173152.1**

(22) Date of filing: **15.10.2009**

(54) **Steering force transmission device for vehicle**

Vorrichtung zur Lenkkraftübertragung für ein Fahrzeug

Dispositif de transmission de force de direction pour véhicule

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **16.10.2008  JP 2008267415
24.10.2008  JP 2008274259
28.10.2008  JP 2008277041
07.11.2008  JP 2008286150**

(43) Date of publication of application:
**21.04.2010  Bulletin 2010/16**

(73) Proprietor: **JTEKT CORPORATION
Osaka-shi
Osaka 542-8502 (JP)**

(72) Inventors:
• **Yamakawa, Tomonari
c/o JTEKT CORPORATION
Osaka-shi,
Osaka 542-8502 (JP)**

• **Tanaka, Hajime
c/o TOYOTA JIDOSHA KABUSHIKI KAISHA
Toyota-shi
Aichi 471-8571 (JP)**
• **Onoda, Yuichi
c/o TOYOTA JIDOSA KABUSHIKI KAISHA
Toyota-shi
Aichi 471-8571 (JP)**
• **Sato, Masaya
c/o TOYOTA JIDOSHA KABUSHIKI KAISHA
Toyota-shi
Aichi 471-8571 (JP)**

(74) Representative: **TBK
Bavariaring 4-6
80336 München (DE)**

(56) References cited:
**WO-A1-2009/077832     DE-A1- 4 102 913
JP-A- 6 092 245     US-A- 5 303 793**

Remarks:
The file contains technical information submitted after the application was filed and not included in this specification

**Description**

BACKGROUND OF THE INVENTION

1. Field of the Invention

The invention relates to a steering force transmission device for a vehicle that transmits steering force, which is input to a steering control member, to a steering device.

2. Description of the Related Art

Recently development of a steering force transmission device for a vehicle having a rotation transmission mechanism is progressing. This rotation transmission mechanism changes a rotational phase difference, that is, a difference between a rotational phase of a shaft of which one end is linked to one of a steering control member controlled by a driver and a steering device that steers wheels (may be referred to as "first shaft" herein below), and a rotational phase of a shaft of which one end is linked to the other (may be referred to as "second shaft" herein below), and transmits the rotation of one shaft, from among the first shaft and second shaft, to the other shaft while changing the above mentioned rotational phase difference. Examples of this rotation transmission mechanism are disclosed in Japanese Utility Model Application Publication No. 4-54769 (JP-U-4-54769), Japanese Patent Application Publication No. 3-227772 (JP-A-3-227772) also published as DE 41 02 913 A1 and Japanese Patent Application Publication No. 5-178222 (JP-A-5-178222).

The rotation transmission mechanism has a protruding portion disposed on the other end of the first shaft, and a groove having as pair of side wall faces formed on the other end of the second shaft. The two shafts are linked by the protruding portion engaging in the groove in a state of being sandwiched between the pair of side walls, whereby the rotation of one shaft, from among the two shafts, is transmitted to the other shaft via the protruding portion and the side wall faces. The protruding portion can move along the pair of side wall faces, and a clearance is formed between the protruding portion and the pair of side wall faces, so as to ensure smooth movement of the protruding portion. However because of this clearance, the protruding portion may rattle between the pair of side wall faces, which generates abnormal sound and vibration when running. Furthermore when starting or maneuvering the steering control member, rotation of one shaft, from among the two shafts, is not transmitted to the other shaft until the protruding portion and one of the pair of side wall faces contact. This may make the driver feel uncomfortable when controlling the steering control member. The steering force transmission device for a vehicle having the above mentioned rotation transmission mechanism is still in the process of development, and has various problems including the above mentioned problems, and leaves much room for improvement. The practicality of the steering force transmission device will therefore advance by various improvements.

The Document DE 41 02 913 (A1) discloses a front wheel steering device. This device comprises the features of the preamble of claim 1.

A further document JP 06 092245 A discloses a further steering device. In this device, an intermediate rotary member is eccentrically provided between an input shaft and output shaft connected to a steering wheel, and the rotation of the input shaft is moderated by a reduction gear consisting of an input pinion and internal gear to be transmitted to the intermediate rotary member.

A further document US 5 303 793 A discloses a further steering device. This device is of a rack-and-pinion type comprising an input shaft steered by a driver, an output shaft operatively connected to a rack bar through a rack-and-pinion gear mechanism, a hydraulic cylinder operatively connected to the rack bar, and a rotary valve operatively connected to the input shaft.

A further document WO 2009/077832 Al discloses a further steering device. This device includes an input shaft that transmits a steering force input from a steering wheel; an output shaft that transmits a steered force by which wheels are steered; and an eccentric pin mechanism that includes an eccentric cam and an adapting plate.

It is an object of the invention to provide a steering force transmission device for a vehicle having high practicality.

This object is solved by a steering force transmission device having the features of claim 1. Further developments are stated in the dependent claims.

The steering force transmission device for a vehicle according to an embodiment of the invention includes a first shaft and a second shaft that is installed in a state where a rotation axis of the first shaft and a rotation axis of this second shaft are in parallel, and these rotation axes are shifted by a predetermined distance. The first shaft includes: (i) a first shaft main body portion; (ii) a first shaft collar portion that is formed integrally with an edge on the second shaft side of the first shaft main body portion, and protrudes in a radial direction of the first shaft from the first shaft main body portion; and (iii) a protruding portion that is disposed in a position that is at a distance, by more than the predetermined distance, from the rotation axis of the first shaft in the radial direction of the first shaft, and protrudes from the first shaft collar portion toward the second shaft in a rotation axis direction that is an extending direction of the rotation axis of the first shaft. The second shaft includes: (i) a second shaft main body portion; (ii) a second shaft collar portion that is formed integrally with an edge on the first shaft side of the second shaft main body portion, and protrudes in a radial direction of the second shaft from the second shaft main body portion; and (iii) a guide passage that opens in an end face on the first shaft side of the second shaft collar portion, and is provided extending in the radial direction of the second shaft, and includes a pair of side wall faces sandwiching the protruding portion, so that the protruding portion of the first shaft is engaged and the protruding portion moves in the radial direction of the second shaft. The protruding portion disposed in the first shaft includes (i) a base body that rotates relative to the first shaft collar portion, wherein the protruding portion or the guide passage includes (ii) a first elastic body and (iii) a first smoothing member that is supported by the first elastic body and is urged by the elastic force of the first elastic body, wherein the first smoothing member is configured so as to contact the protruding portion or at least one of the side wall faces by being urged by the first elastic body.

According to the structure of the steering force transmission device for a vehicle in the above aspect, the first smoothing member contacts the protruding portion or at least one of the side wall faces in a state of being urged by the elastic force. Therefore the clearance between the protruding portion and the side wall faces can be decreased while ensuring smooth movement of the protruding portion in the guide passage, and abnormal sound, vibration and uncomfortable sensation with control when driving, caused by rattle of the protruding portion between the side wall faces, can be solved.

Also, in the steering force transmission device for a vehicle in the above aspect, the protruding portion may include all of (i) the base body, (ii) the first elastic body and (iii) the first smoothing member, and the first elastic body is held by the base body, and the first smoothing member contacts both of the pair of side wall faces of the guide passage in a state of being urged by the elastic force of the first elastic body.

Also, in the steering force transmission device for a vehicle in the above aspect, the first smoothing member constituting the protruding portion may be contact both of the pair of side wall faces in the state of being urged by the elastic force. Therefore according to the steering force transmission device for a vehicle of this aspect, the clearance between the protruding portion and the pair of side wall faces can be eliminated while ensuring smooth movement of the protruding portion in the guide passage.

The smoothing member in the above aspect may be constituted by a single member, or may be constituted by two pieces. In the case of being constituted by two pieces, one of the two pieces may contact one of the pair of side wall faces, and the other of the two pieces may contact the other of the pair of side wall faces. In the case of each of the two pieces contacting each of the pair of side wall faces respectively, the elastic body may be constituted by two pieces, so that one of the two pieces of the elastic body supports one of the two pieces of the smoothing member, and the other of the two pieces of the elastic body supports the other of the two pieces of the smoothing member.

The first shaft collar portion and the second shaft collar portion of the above aspect may protrude from a part of the outer surface of the main body portion of each shaft in a radial direction of each shaft. Each shaft collar portion may be a portion protruding in the radial direction of each shaft throughout the entire circumference of the outer surface of the main body portion of each shaft, that is, each shaft collar portion may be a circular flange portion, for example. The guide passage is sufficient if it is open toward the first shaft side and is provided in the end face of the second shaft collar portion, and the base portion is not essentially required. In other words, the guide passage may have a slit structure which penetrates from one end face of the second shaft collar portion to the other end face thereof, or may have a groove structure including the base portion. The linking of one of the steering control member and the steering device to the first shaft, or the linking of the other of the steering control member and the steering device to the second shaft may be a direct linking, or may be linking via an intermediate shaft (I/M) universal joint or the like.

Also, in the steering force transmission device for a vehicle in the above aspect, a rotation transmission mechanism may be configured such that a change in an engaging state of the protruding portion and the guide passage due to a rotation of one of the first shaft and the second shaft causes the other of the shafts to rotate while changing a difference in rotation phases between the first shaft and the second shaft.

Since the rotation transmission mechanism of the above aspect changes the rotation phase difference between the two shafts, the difference between the rotation axis of the first shaft and the rotation axis of the second shaft changes. For example, if the shaft linked to the steering control member, from among the two shafts in a state where there is no rotation angle difference (rotation phase difference) between the two shafts (this shaft may be called "control member side shaft" herein below), rotates from a predetermined rotation angle, this is a rotation angle of the control member side shaft, the shaft linked to the steering device, from among the two shafts, (this shaft may be called "steering device side shaft" herein below), rotates only by a rotation axis smaller than the rotation axis of the control member side shaft, until the control member side shaft rotates 180°. When the control member side shaft rotates 180°, the steeping device side shaft also rotates 180°, and there is no more rotation angle difference between the two shafts. In other words, when the control member side shaft rotates from a predetermined rotation angle to 180°, that is the other predetermined rotation angle, the rotation angle difference increases from 0°, begins to decrease at a certain point, then reaches 0° again. In this way, a gear ratio when the two shafts rotate, that is a ratio of the rotation speed of the steering device side shaft to the rotation speed of the control member side shaft, increases as the control member side shaft rotates from the predetermined rotation angle to 180°. Therefore when the former predetermined angle is a rotation angle of the control member side shaft at a pposition where the steering control member corresponds to the neutral steering position of the wheels, that is at a position in the neutral control position, gentle and stable handling is implemented if the control angle of the steering control member is small, and handling with good response is implemented as the control angle of the steering control member increases. This means that the control sensation of the steering control member can be improved, as mentioned above, without equipping a steering system to change the steering amount of the wheels with respect to a control amount of the steering control member depending on an actuator, such as an electromagnetic motor, that is a so called "Variable Gear Ratio Steering (VGRS)" system.

Also, in the steering force transmission device for a vehicle in the above aspect, the outer surface of the base body may have a cylindrical shape, the first elastic body may be held on the outer surface of the base body and may have a ring shape, and the first smoothing member may be externally inserted into the first elastic body and may be a ring shape.

According to the steering force transmission device for a vehicle in the above aspect; the first smoothing member, which is a ring-shaped member that contacts at least one of a pair of wall faces in a state of being urged by the elastic force, may be transformable in the radial direction of this member. In concrete terms, a ring-shaped member constituted by self-lubricating plastic, low friction nylon, such fluorine contained resin as PTFE (polytetrafluoroethylene) or the like, may be used.

Also, in the steering force transmission device for a vehicle in the above aspect, a first cylindrical face and a second cylindrical face, having a smaller, diameter than the first cylindrical face, may be formed on the outer surface of the base body, and the first elastic body may be held by the second cylindrical face.

Also, in the steering force transmission device for a vehicle in the above aspect, if a rotation torque, transmitted from one of the first shaft and second shaft to the other of the shafts is larger than a predetermined rotation torque, a part of the first smoothing member may move toward the second cylindrical face of the base body, and the protruding portion may rotate in a state of the first cylindrical face of the base body contacting one of the pair of the wall faces.

According to the steering force transmission device for a vehicle in the above aspect, if the rotation torque transmitted by the rotation transmission mechanism is small, the first smoothing member contacts at least one of the pair of side wall faces, but the base body itself contacts neither of the pair of side wall faces. It is structured such that the base body itself, along with the first smoothing member, contacts one of the pair of side wall faces as the rotation torque increases. Therefore the load on the first smoothing member can be decreased, so as to suppress abrasion and deterioration of the first smoothing member.

In the steering force transmission device for a vehicle in the above aspect, the base body may include a first cylindrical member, including a step face connecting the first cylindrical face and the second cylindrical face, and a second cylindrical member that is coaxially secured to the first cylindrical member the base body includes a first circumferential groove that is sectioned by the second cylindrical face and the step face of the first cylindrical member and the second cylindrical member, and the first elastic body is disposed in the first circumferential groove.

When the steering force transmission device is manufactured, it is difficult to assemble a ring-shaped first elastic body having an outer diameter smaller than the outer diameter of the outer surface of the cylindrical member in the ring-shaped first circumferential groove that is formed on the outer surface of the cylindrical member. In the steering force transmission device according to the above aspect, the first cylindrical member and the second cylindrical member can be coaxially secured after the ring-shaped first elastic body is assembled on the second cylindrical face of the first cylindrical member Therefore the manufacturing operation of the device can be simplified. The cylindrical member is a concept that includes not only a hollow form, but also a solid form. In other words, the cylindrical member may be a cylindrical column member.

In the steering force transmission device for a vehicle in the above aspect, an outer diameter of an outer surface of one of the first cylindrical member and the second cylindrical member may be smaller than an outer diameter of an outer surface of the other of the cylindrical members.

In the case of a base body having a structure to integratedly secure the first cylindrical member and the second cylindrical member, the center axis of the first cylindrical member and the center axis of the second cylindrical member may slightly shift depending on assembly accuracy and deterioration. If the base body rotates between the pair of side wall faces in a state where the center axes of the two cylindrical members are shifted, one and the other of these two cylindrical members alternately contact one of the pair of side wall faces, and smooth rotation transmission may be disrupted According to the steering force transmission device for a vehicle in the above aspect, even if the central axes of the two cylindrical members are slightly shifted, the cylindrical member having a small outer diameter, from among the two cylindrical members, does not contact the side wall face, so smooth rotation transmission can be ensured. In the case of a structure in which one of the first cylindrical member and the second cylindrical member separates from the other of the cylindrical members if an unexpected force is applied to this cylindrical member, it may be designed such that this cylindrical member does not contact a side wall face.

Also, in the steering force transmission device for a vehicle in the above aspect, the length of the outer surface of one cylindrical member, from among the first cylindrical member and the second cylindrical member of the body in the rotation axis direction, may be set to be shorter than 1/2 of the length of the outer surface of the other cylindrical member in the rotation axis direction.

If transmitting the rotation of one shaft from among the first shaft and the second shaft to the other shaft, it is preferable that the contact portion of the base body to one of the pair of side wall faces is larger. Therefore according to the device of this aspect, a certain extent of length can be ensured for the contacting portion of the base body to one of the pair of side wall faces.

In the steering force transmission device for a vehicle according to the above aspect, if a force exceeding a predetermined level is acted on one cylindrical member of the first cylindrical member and the second cylindrical member, the first cylindrical member and the second cylindrical member may separate.

The steering transmission device having a rotation transmission mechanism has a structure in which the steering force is transmitted while the protruding portion is moving between the pair of side wall faces. Therefore if the first smoothing member is caught between the outer surface of the first cylindrical member or the second cylindrical member constituting the base body and the side wall faces, smooth movement of the protruding portion between the pair of side wall faces may be disrupted, and the steering force may not be transmitted appropriately. In the case of the steering transmission device in the above aspect, on the other hand, if a large force acts on one of the first cylindrical member and the second cylindrical member, one of the cylindrical members separates from the other cylindrical members (a part of the base body). If the first smoothing member is caught between the outer surface of the base body and the side wall face, or after being caught, a large force acts on one of the first cylindrical member and the second cylindrical member by the first smoothing member or the first elastic body According to the device in the above aspect, the first smoothing member being caught can be prevented or cleared by the separation of this one cylindrical member from the other cylindrical member (a part of the base body), therefore smooth transmission of the steering force can be ensured.

Also, in the steering force transmission device for a vehicle in the above aspect, one of the first cylindrical member and the second cylindrical member may be disposed at a position closer to the first shaft collar portion than the other of the cylindrical members.

If one cylindrical member, from among the first cylindrical member and the second cylindrical member, separates from a part of the base body, as mentioned above, it is not desirable that the separated cylindrical member enters the guide passage. According to the device in the above aspect, this one cylindrical member can be separated to be positioned outside the guide passage, for example.

Also, in the steering force transmission device for a vehicle in the above aspect, the base body may further include a third cylindrical member that is coaxially secured to the first cylindrical member, and the base body may include a second circumferential groove sectioned by the first cylindrical member, the second cylindrical member and the third cylindrical member, and a second elastic body may be disposed in the second circumferential groove.

Also, in the steering force transmission device for a vehicle in the above aspect, respective spring constants of the first elastic body and the second elastic body may be different.

According to the steering force transmission device in the above aspect, a ring-shaped first elastic body, second elastic body, first smoothing member and second smoothing member are disposed on the outer surface of the base body In the case of a steering force transmission device equipping a rotation transmission mechanism having a structure to suppress the rattle of the protruding portion in the groove utilizing the elastic force of the elastic body, the control sensation of the drive changes depending on the spring constant of the elastic body. Therefore the control sensation of the driver can be finely adjusted by adjusting each spring constant of the plurality of elastic bodies. The spring constant, which becomes a reference of the elastic force generated by the elastic body, in concrete terms is a value resulting from dividing the elastic force, generated by the elastic body, by the deformation amount of the elastic body.

Also, in the steering force transmission device in the above aspect, at least one of an opening peripheral portion of the pair of side wall faces, positioned at an end of the pair of the side wall faces in a rotation axis direction of the second shaft, and an edge of the outer surface of the first smoothing member, positioned on the second shaft side may be tapered.

When the protruding portion is disposed in the guide passage, the first smoothing member is contacting both of the pair of side wall faces in a state of being urged by the elastic force. In other words, the outer diameter of the first smoothing member is greater than the width of the guide passage. And because of this, lit is difficult to assemble the protruding portion in the guide passage beyond the opening peripheral portion of the guide passage when the steering force transmission device is manufactured. According to the steering force transmission device in the above aspect, the protruding portion can be assembled in the guide passage utilizing each peripheral portion of the taper form. Therefore according to the device in the above aspect, the manufacturing operation of the device can be simplified.

Also, in the steering force transmission device for a vehicle in the above aspect, the guide passage may have an opening edge that opens toward outside in a radial direction of the second shift. In this case, the guide passage may further have (i) a first passage position, for which the distance between the pair of side wall faces is set to be smaller than an outer diameter of the protruding portion, and which controls displacement of the protruding portion in a circumferential direction of the second shaft, and (ii) a second passage portion that is disposed in an area from the first passage portion to the opening edge, and for which a width is set to be greater than the outer diameter of the protruding portion.

The steering force transmission device for a vehicle in the above aspect has a structure where the protruding portion simultaneously contacts both of the pair of side wall faces in the first passage portion, and the protruding portion does not simultaneously contact both of the pair of side wall faces in the second passage portion including the opening edge. Hence if the protruding portion is inserted from the opening edge of the guide passage when the first shaft and the second shaft are assembled, the protruding portion can be engaged between the pair of the side wall faces with relative ease. Therefore according to the steering force transmission device for a vehicle in the above aspect, the rattle of the protruding portion can be suppressed, and the assembly operation of the first shaft and the second shaft can be simplified.

Also, in the steering force transmission device for a vehicle in the above aspect, the distance between the pair of side wall faces in the second passage portion may gradually increase toward the opening edge.

According to the device in the above aspect, the protruding portion can be smoothly inserted from the opening edge of the guide passage to the first passage portion of the guide passage, and the assembly operation of the two shafts can be further simplified.

Also, in the steering force transmission device for a vehicle in the above aspect, the guide passage may be constructed so that the protruding portion moves within a range of the first passage portion, when, due to rotation of one of the first shaft and the second shaft, the other of the shafts rotates.

Also, in the steering force transmission device for a vehicle in the above aspect, the guide passage may be constructed so that the protruding portion moves within a range up to the boundary between the first passage portion and the second passage portion when, due to rotation is one of the first shaft and the second shaft, the other of the shafts rotates.

According to the steering force transmission device in the above aspect, the rattle between the protruding portion and the pair of side wall faces can be suppressed when, due to rotation of one shaft from among the first shaft and the second shaft, the other shaft rotates. Therefore according to the device in the above aspect, abnormal sound, vibration and uncomfortable sensation with control when driving, can be solved with certainly. Furthermore, according to the device in the above aspect, the protruding portion is allowed to move up to the boundary between the first passage portion and the second passage portion. Therefore according to the device in the above aspect, the protruding portion can easily be engaged in a moveable range of the protruding portion when the two shafts are assembled.

Also, in the steering force transmission device for a vehicle in the above aspect, the first passage portion may be set such that the distance between the pair of side wall faces gradually increases toward the second passage portion.

Also, in the steering force transmission device for a vehicle in the above aspect, at least a part of the first passage portion may be set such that the distance between the pair of side wall faces is fixed, and at least a part of the second passage portion may be set such that the distance between the pair of side wall faces increases toward the opening edge from the first passage portion.

According to the steering force transmission device in the above aspect, the first passage portion is also tapered, just like the second passage portion in one aspect, and in the other aspect, the distance between the pair of side wall faces is constant in a part of the first passage portion, so that the pair of side wall faces are paralleL The portions near the opening edge of the pair of side wall faces are tapered.

Also, in the steering force transmission device for a vehicle in the above aspect, the guide passage may be constructed so that the protruding portion moves within a range of the first passage portion of which width is constant when, due to rotation of one of the first shaft and the second shaft, the other of the shafts rotates.

Also, in the steering force transmission device for a vehicle in the above aspect, the guide passage may be constructed so that a continuous portion, of which width gradually increases toward the second passage portion from the first passage portion, is included between the first passage portion of which width is constant and the second passage portion, and the protruding portion moves up to the boundary between the first passage portion and the continuous portion when, due to rotation of one of the first shaft and the second shaft, the other of the shafts rotates.

According to the steering force transmission device in the above aspect, the protruding portion moves through the area where the distance between the pair of side wall faces is constant, in a state of contacting both of the pair of side wall faces when, due to rotation of one of the first shaft and the second shaft, the other of the shafts rotates. Therefore according to the device in the above aspect, a change of the resistance force with respect to the movement of the protruding portion can be suppressed, and uncomfortable sensation with control due to the change of resistance force can be suppressed.

Also, in the steering force transmission device for a vehicle in the above aspect, the guide passage may be constructed so that the distance between the pair of side wall faces at the opening edge is 1.3 times or more of the distance between the pair of side wall faces in the first passage portion of which width is constant.

Also, in the steering force transmission device in the above aspect, the guide passage may be constructed so that the length of the second passage portion in the radial direction of the second shaft is 1/5 or more of the distance between the pair of side wall faces at the boundary of the first passage portion and the second passage portion.

The corners of a member are often chamfered, and if the opening edge of the guide passage is chamfered, the distance between the pair of side wall faces at the opening edge becomes greater than the space between the pair of side wall faces at portions other than the opening edge in the guide passage, and in some cases, the protruding portion may not contact both of the pair of side wall faces at the chamfered portion. The above mentioned two aspects are to distinguish the second passage portion and the chamfered portions.

Also, in the steering force transmission device for a vehicle in the above aspect, the guide passage may be constructed so that the distance between the pair of side wall faces gradually increases toward the opening edge.

According to the steering force transmission device in the above aspect, the entire area of the pair of side wall faces is tapered, so the assembly work for the two shafts can be simplified.

Also, in the steering force transmission device for a vehicle in the above aspect, the guide passage may be constructed so that each one of the pair of side wall faces extends straight to the opening edge.

The steering force transmission device for a vehicle in the above aspect may have a first shaft housing that rotatably holds the first shaft therein, and a second shaft housing that rotatably holds the second shaft therein, wherein an edge of the first shaft housing is joined with an edge of the second shaft housing, and the protruding portion of the first shaft entirely protrudes from the edge of the first shaft housing joined with the second shaft housing, in the rotation axis direction.

According to the steering force transmission device in the above aspect, the first shaft is rotatably held by the first shaft housing in the state of the entire protruding portion of the first shaft protruding from the edge of the first shaft housing. Therefore even if the first shaft is being held by the housing when the first shaft and the second shaft are assembled, the protruding portion can be inserted in the guide passage, and the assembly operation can be further simplified

Also, in the steering force transmission device for a vehicle in the above aspect, the protruding portion may include a pair of contact faces that rotates relative to the first shaft collar portion and that face the pair of side wall faces, and when the rotation of one shaft, from among the two shafts, is transmitted to the other shaft, the protruding portion may slide in the guide passage in a state where at least one contact face, from among the pair of contact faces, is in contact with one side wall face from among the pair of side wall faces.

According to the steering force transmission device for a vehicle in the above aspect, when rotation of one shaft, from among the two shafts, is transmitted to the other shaft, the surface of the protruding portion contacts at least one side wall face of the pair of side wall faces. If the area of the protruding portion contacting the side wall face increases, the load on the contact portion is dispersed into a relatively wide area. In other words, load is no longer applied on an extremely narrow range, and surface pressure on the contact portion decreases. Therefore according to the steering force transmission device for a vehicle in the above aspect, load of the contact portion on the side wall face of the protruding portion can be dispersed, and durability of the rotation transmission mechanism, particularly of the protruding portion can be improved.

Also, in the steering force transmission device for a vehicle in the above aspect, at least one of the pair of contact faces and the pair of side wall faces includes the first smoothing member.

In the case of a steering force transmission device having a structure in which the surface of the protruding portion contacts the side wall face when rotation of one shaft, from among the two shafts, is transmitted to the other shaft, it is preferable that the sliding resistance of the protruding portion against the guide passage is low so that the protruding portion smoothly moves in the guide passage. According to the steering force transmission device in the above aspect, the sliding resistance of the protruding portion can be decreased and smooth movement of the protruding portion in the guide passage can be enabled.

The smoothing member in the above aspect can be formed at least on the surface. In other words, all of the members constituting the contact face or side wall face may be formed by the smoothing member, or only the surface of the contact face or the side wall face may be formed by the smoothing member. In the case of a steering force transmission device in which the protruding portion simultaneously contacts both of the pair of side wall faces so as to prevent rattle of the protruding portion in the guide passage, the size of the protruding portion may be set to be greater than the distance between the pair of side wall faces in order to completely prevent rattle. In the case of a device having this structure, if the smoothing member does not deform very much elastically, it may become difficult for the protruding portion to move in the guide passage smoothly even if at least one of the pair of contact faces and the pair of side wall faces is formed by the smoothing member. Therefore in the case of the steering force transmission device having a structure in which the protruding portion simultaneously contacts both of the pair of side wall faces, the smoothing member may be constituted by a material which can elastically deform to a certain degree. Self lubricating plastic, low friction nylon or such fluorine contained resin as PTFE, for example, may be used as the smoothing member.

Also, in the steering force transmission device for a vehicle in the above aspect, when, due to rotation of one of the first shaft and the second shaft, the other of the shafts rotates, the protruding portion may slide in the guide passage in a state where each of the contact faces is in contact with each of the side wall faces respectively.

According to the structure of the steering force transmission device in the above aspect, each contact face of the protruding portion simultaneously contacts both of the side wall faces. Therefore according to the steering force transmission device in the above aspect, various problems caused by the rattle of the protruding portion between the pair of side wall faces, such as abnormal sound, vibration and uncomfortable sensation with control when driving, can be solved.

The steering force transmission device for a vehicle in the above aspect may further include a second elastic body and a second smoothing member, wherein the first elastic body, the second elastic body, the first smoothing member and the second smoothing member are in a plate shape respectively, the base body of the protruding portion is disposed rotatably between the first smoothing member and the second smoothing member, the first elastic body is disposed between the base body and the first smoothing member, the second elastic body is disposed between the base body and the second smoothing member, the first smoothing member contacts one side wall face of the pair of side wall faces by being urged by each of the elastic members, and the second smoothing member contacts the other side wall face of the pair of side wall faces by being urged by each of the elastic members.

Also, the steering force transmission device for a vehicle in the above aspect may further include a second elastic body and a second smoothing member, wherein the first elastic body, the second elastic body, the first smoothing member and the second smoothing member are in a plate shape respectively, the base body of the protruding portion is disposed rotatably between the first smoothing member and the second smoothing member, and (i) a radial recess portion that is open toward the first shaft side and that extends in the radial direction of the second shaft is provided in an end face of the second shaft collar portion, (ii) the first smoothing member and the second smoothing member are disposed in the radial recess portion in an extending direction of the radial recess portion, and (iii) the first elastic member is disposed between the first smoothing member and one wall face of the radial recess portion, the second elastic member is disposed between the second smoothing member and the other wall face of the radial recess portion, and the first smoothing member and the second smoothing member are urged by each of the elastic members so as to contact the pair of contact faces of the base body respectively.

According to the steering force transmission devices in the above two aspects, rattle of the protruding portion in the guide passage is prevented by one of the pair of contact faces and the pair of side wall faces, including the smoothing member, and bering pressed against the other by elastic force. In concrete terms according to the steering force transmission device in the former aspect, the contact face of the protruding portion includes the smoothing member and the protruding portion simultaneously contacting both of the pair of side wall faces in a state of the contact face being pressed against the side wall faces by elastic force, while according to the steering force transmission device in the latter aspect, the side wall of the guide passage includes the smoothing member, and the protruding portion simultaneously contacts both of the pair of side wall faces in a state of the side wall faces being pressed against the contact face by elastic force. Therefore according to the steering force transmission devices in the above two aspects, the protruding portion can smoothly move in the guide passage, and can prevent rattle of the protruding portion in the guide, passage with certainty.

Also, in the steering force transmission device for a vehicle in the above aspect, the length of each of the contact faces of the protruding portion may be 1/2 or more of the distance between the pair of side wall faces.

As the area of the protruding portion contacting the side wall face becomes larger, the surface pressure of the contacting portion, when the rotation force of the shaft is transmitted, can be decreased, and the load on the protruding portion can be decreased. According to the steering force transmission device in the above aspect, the contact area can be increased and the load on the protruding portion, when the rotation force of the shaft is transmitted, can be effectively decreased.

Also, in the steering force transmission devices for a vehicle in the above aspect, the length of each of the pair of contact faces of the protruding portion may be twice or less of the distance between the pair of side wall faces.

In terms of decreasing the surface pressure of the area of the protruding portion contacting the side wall faces, it is preferable to increase the contact face in the sliding direction of the protruding portion in order to increases the area of the contact portion. But if the contact face of the protruding portion increases in this direction, the side wall face of the guide passage also increases in the radial direction of the second shaft, and the size of the steering force transmission device increases. Therefore according to the steering force transmission device in the above aspect, the surface pressure of the contact portion of the protruding portion can be decreased, and at the same time, an increase of the size of the device can be suppressed.

Also, in the steering force transmission device for a vehicle in the above aspect, the first shaft collar portion may be a first extending portion that extends out only from a part of an outer surface of the first shaft main body portion in a circumferential direction.

The first shaft extending portion in the above aspect does not extend in the radial direction from the entire area of the first shaft main body portion in the circumferential direction, but extends in a predetermined direction from a part of the area in the circumferential direction. Therefore, the weight of the first shaft can be decreased, and the moment of inertia of the first shaft can be decreased. In terms of decreasing the weight of the steering force transmission device, the first shaft extending portion may have a minimum size required for linking the protruding portion and the first shaft main body portion.

Also, in the steering force transmission device for a vehicle in the above aspect, the second shaft collar portion may be a second extending portion that extends out only from a part of an outer surface of the second shaft main body portion in a circumferential direction, and the second extending portion may include a pair of erected portions, and the pair of side wall faces may be surfaces facing each other of the pair of erected portions.

According to the steering force transmission device for a vehicle in the above aspect, the second extending portion as the second shaft collar portion of the second shaft, that is a portion to engage with the protruding portion of the first shaft, does not extend from the entire area of the second shaft main body portion in the circumferential direction, but extends in a predetermined direction only from a part of the area in the circumferential direction. In other words, the portion extending in the radial direction from the second shaft main body portion is relatively small. Therefore the second shaft can be lighter, that is the steering force transmission device can be lighter, and the force of inertia of the second shaft can be decreased. Decreasing the moment of inertia of the second shaft can improve the control sensation of the driver when driving.

The second shaft is sufficient only if it has a function to guide the movement of the protruding portion of the first shaft in the radial direction of the second shaft as the second shaft rotates. In other words, it is sufficient if only the range required to construct the guide passage extends from the second shaft main body portion in the radial direction of the second shaft main body portion.

The shape and configuration of the above mentioned second extending portion of the second shaft are not especially restricted, but in terms of decreasing the weight and decreasing the moment of inertia as described above, the minimum dimensions of the shaft in the radial direction and the circumferential direction may be used considering the moving range of the protruding portion and level of the force applied to the pair of side wall faces when the steering force is transmitted.

The shape of the second extending portion in the above aspect is not especially restricted, but may be a pair of erected portions being disposed in one plate-shaped second extending portion, or a pair of erected portions being disposed respectively in a pair of arms extending from the second extending portion of the shaft main body portion. The surfaces of the pair of erected portions which face each other may extend in parallel.

Also, in the steering force transmission device for a vehicle in the above aspect, the second extending portion may have a U-shape. For example, the second extending portion may be constituted by a linking portion connected to a pair of arms and a pair of erected portions disposed on these arms respectively, or may be constituted by a roughly U-shaped plate being secured in the shaft main body portion.

Also, in the steering force transmission device for a vehicle in the above aspect, when the protruding portion moves to a position most distant from the rotation axis of the second shaft, the position of the tip of the erected portion may be set so that at least a part of the protruding portion positions inside the rotation locus, centering around the rotation axis of the second shaft at the tip of the erected portion in the radial direction, of the second shaft.

According to the above aspect, the size of the second shaft in the radial direction can be decreased, therefore the steering force transmission device can be compact in the radial direction. Hence mounting of the device in a vehicle can be easier.

Also, in the steering force transmission device in the above aspect, the second shaft main body portion may be rotatably held by a bearing, and the bearing may not be disposed outside the second extending portion in the radial direction.

According to the device in the above aspect, the steering force transmission device can be compact in the radial direction.

BRIEF DESCRIPTION OF THE DRAWINGS

The features, advantages and technical and industrial significance of this invention will be described in the following detailed description of the example embodiments of the invention, with reference to the accompanying drawings in which like numerals denote like elements, and wherein:

FIG. 1 is a schematic diagram depicting a steering system for a vehicle equipping a steering force transmission device for a vehicle, that is the first embodiment of the invention;
FIG. 2 is a cross-sectional view depicting the steering force transmission device for a vehicle included in the steering system for a vehicle in FIG 1;
FIG. 3 is a cross-sectional view depicting an Electric Power Steering (EPS) section included in the steering force transmission device for a vehicle;
FIG. 4 is a cross-sectional view sectioned at the IV - IV line in FIG 3;

FIG. 5 is a cross-sectional view sectioned at the V - V line in FIG 3;

FIG. 6 is a perspective view depicting a rear bracket that holds a column section included in the steering force transmission device for a vehicle;

FIG. 7A is a cross-sectional view sectioned at the V - V line in FIG. 3 when the steering wheel is in the neutral control position;

FIG. 7B is a cross-sectional view sectioned at the V - V line in FIG. 3 when the steering wheel is rotated 90° in the left turn direction from the neutral control position;

FIG. 7C is a cross-sectional view sectioned at the V - V line in FIG. 3 when the steering wheel is rotated 90° in the right turn direction from the neutral control position;

FIG. 7D is a cross-sectional view sectioned at the V - V line in FIG 3 when the steering wheel is rotated 180° in the left or right turn direction from the neutral control position;

FIG. 8 is a graph depicting a relationship between a rotation angle of a control member side shaft and a rotation angle of a steering device side shaft;

FIG. 9 is a graph depicting a gear ratio between the control member side shaft and the steering device side shaft, that changes according to the rotation angle of the control member side shaft;

FIG. 10A is graph depicting a relationship between a control angle and a steering torque of the steering wheel in a state of rattle existing between a protruding portion and side wall faces;

FIG. 10B is graph depicting a relationship between a control angle and a steering torques of the steering wheel in the steering force transmission device for a vehicle shown in FIG. 2;

FIG. 11 is a cross-sectional view depicting a rotation transmission mechanism included in a steering force transmission device for a vehicle according to the second embodiment;

FIG. 12 is a graph depicting a relationship between a control angle and a steering torque of the steering wheel in the steering force transmission device for a vehicle in the second embodiment;

FIG. 13 is a cross-sectional view depicting a steering force transmission device for a vehicle included in a steering system for a vehicle according to the third embodiment;

FIG. 14 is a cross-sectional view depicting an EPS section included in the steering force transmission device for a vehicle;

FIG. 15 is a cross-sectional view sectioned at the 15 - 15' line in FIG. 14;

FIG. 16 is a cross-sectional view sectioned at the 16 - 16' line in FIG. 14;

FIG. 17A is a cross-sectional view sectioned at the 16 - 16' line in FIG. 14 when the steering wheel is at the neutral control position;

FIG. 17B is a cross-sectional view sectioned at the 16 - 16' line in FIG. 14 when the steering wheel is rotated 90° in the left turn direction from the neutral control position;

FIG. 17C is a cross-sectional view sectioned at the 16 - 16' line in FIG. 14 when the steering wheel is rotated 90° in the right turn direction from the neutral control position;

FIG. 17D is a cross-sectional view sectioned at the 16 - 16' line in FIG. 14 when the steering wheel is rotated 180° in the left or right turn direction from the neutral control position;

FIG. 18 is a cross-sectional view depicting the steering force transmission device for a vehicle when the EPS section is assembled with the column section;

FIG. 19 is a cross-sectional view depicting a rotation transmission mechanism included in a steering force transmission device for a vehicle according to the fourth embodiment;

FIG. 20 is a cross-sectional view depicting an EPS section included in a steering force transmission device for a vehicle According to the fifth embodiment;

FIG. 21 is a cross-sectional view sectioned at the 21 - 21' line in FIG. 20;

FIG. 22A is a cross-sectional view sectioned at the 21 - 21' line in FIG. 20 when the steering wheel is at the neutral control position;

FIG. 22B is a cross-sectional view sectioned at the 21 - 21' line in FIG. 20 when the steering wheel is rotated 90° in the left turn direction from the neutral control position;

FIG. 22C is a cross-sectional view sectioned at the 21 - 21' line in FIG. 20 when the steering wheel is rotated 90° in the right turn direction from the neutral control position;

FIG. 22D is a cross-sectional view sectioned at the 21 - 21' line in FIG. 20 when the steering wheel is rotated 180° in the left or right turn direction from the neutral controls position;

FIG. 23 is a cross-sectional view depicting a rotation transmission mechanism included in a steering force transmission device for a vehicle according to the sixth embodiment;

FIG. 24 is a cross-sectional view depicting a rotation transmission mechanism included in a steering force transmission device for a vehicle according to the seventh embodiment;

FIG. 25 is a cross-sectional view depicting a steering force transmission device for a vehicle included in a steering system for a vehicle according to the eighth embodiment;

FIG. 26 is a cross-sectional view depicting an EPS section included in the steering force transmission device for a vehicle according to the eighth embodiment;

FIG. 27 is a cross-sectional view sectioned at the 27 - 27' line in FIG. 26;

FIG. 28 is a cross-sectional view sectioned at the 28 - 28' line in FIG. 26;

FIG. 29A is a cross-sectional view sectioned at the 27 - 27' line in FIG. 26 when the steering wheel is at the neutral control position;

FIG 29B is a cross-sectional view sectioned at the 27 - 27' line in FIG. 26 when the steering wheel is rotated 90° in the left turn direction from the neutral control position;

FIG. 29C is a cross-sectional view sectioned at the 27 - 27' line in FIG. 26 when the steering wheel is rotated 90° in the right turn direction from the neutral control position;

FIG 29D is a cross-sectional view sectioned at the 27 - 27' line in FIG. 26 when the steering wheel is rotated 180° in the left or right turn direction from the neutral control position;

FIG 30A is a diagram depicting a diameter DA of the steering force transmission device for a vehicle shown in FIG. 25;

FIG. 30B is a diagram depicting a diameter DB of a steering force transmission device for a vehicle of a comparative example;

FIG. 31A is a diagram depicting dimensions of an extending portion of the second shaft corresponding to FIG. 29A; and

FIG. 31B is a diagram depicting dimensions of an extending portion of the second shaft corresponding to FIG. 29D.

## DETAILED DESCRIPTION OF EMBODIMENTS

Embodiments of the invention will now be described in detail with reference to the drawings. The aspects described in the following embodiments of the invention can be changed and improved in various ways based on the knowledge of individuals skilled in the art. The terms front, back, top and bottom used in the following embodiments are defined corresponding to the front, back, top and bottom direction of a vehicle when the vehicle is viewed from the side face.

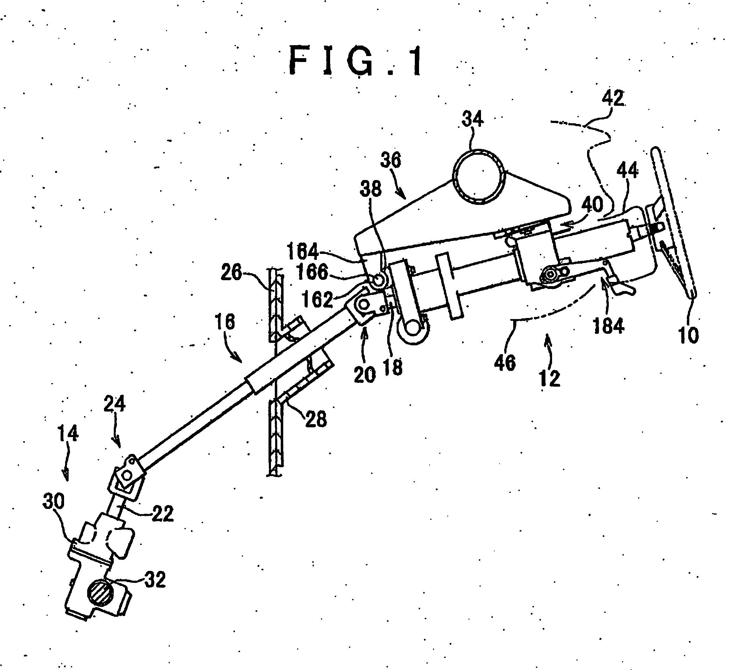

FIG. 1 shows a general configuration of a steering system having a steering force transmission device for a vehicle according to the first embodiment. This steering system is constituted by a steering wheel 10 as a steering control member that is controlled by a driver, a steering force transmission device 12 that holds a steering wheel 10 in a rear edge, a steering device 14 that steers wheels, and an intermediate shaft 16 (may be referred to as "I/M shaft" herein below) positioned between the steering force transmission device 12 and the steering device 14. The rear edge of the I/M shaft 16 and an output shaft 18 included in the steering force transmission device 12 are linked by a universal joint 20, and the front edge of the 1/M shaft 16 and the rear edge of an input shaft 22 included in the steering device 14 are linked by another universal joint 24.

This system is disposed so that the right side in FIG 1, that is the steering wheel 10 side, comes to the rear side of the vehicle, and the left side, that is the steering device 14 side, comes to the front side of the vehicle. The I/M shaft 16 is disposed so as to penetrate a hole formed in a dash panel 26 which separates the interior and the engine compartment, and the portion of the I/M shaft 16 penetrating the hole is covered with a boot 28.

The steering device 14 has an input shaft 22, a housing 30 as an exterior member, and a steering rod 32 for steering wheels. The steering rod 32 is held by the housing 30 such that moving in the axis direction of the steering rod 32 is possible, and is disposed so as to extend in the vehicle width direction. Both edges of the steering rod 32 are linked with steering knuckles (not illustrated) which hold the left and right front wheels respectively. The input shaft 22 is rotatably held in the housing 30, and is engaged with the steering rod 32 in the housing 30. A pinion (not illustrated) is formed in the front edge of the input shaft 22, and the steering rod 32 and the input shaft 22 are engaged by a rack (not illustrated), that is formed in an intermediate portion of the steering rod 32 in the axis direction, engaging with the pinion.

The steering force transmission device 12 is constructed as a steering column, and is secured and supported by a part of a body of the vehicle in a steering support 36 disposed in an instrument panel reinforcement 34. As illustrated, in a state of being supported, the steering force transmission device 12 is disposed in an inclined position with the front side thereof downward. In the steering force transmission device 12, a front bracket 38 is disposed in a front portion, and a rear bracket 40, that is detachable, is disposed in an area behind the front bracket 38, and the front bracket 38 and the rear bracket 40 are attached to the steering support 36 respectively, whereby the steering force transmission device 12 is supported at two locations. In the supported steering force transmission device 12, a portion positioned in the back protrudes from the instrument panel 42 toward the back, and the steering wheel 10 is installed at the protruding rear edge. The portion protruding from the instrument panel 42 of the steering force transmission device 12 is covered by a column cover 44, and the lower portion of the steering force transmission device 12 is covered by an instrument panel lower cover 46.

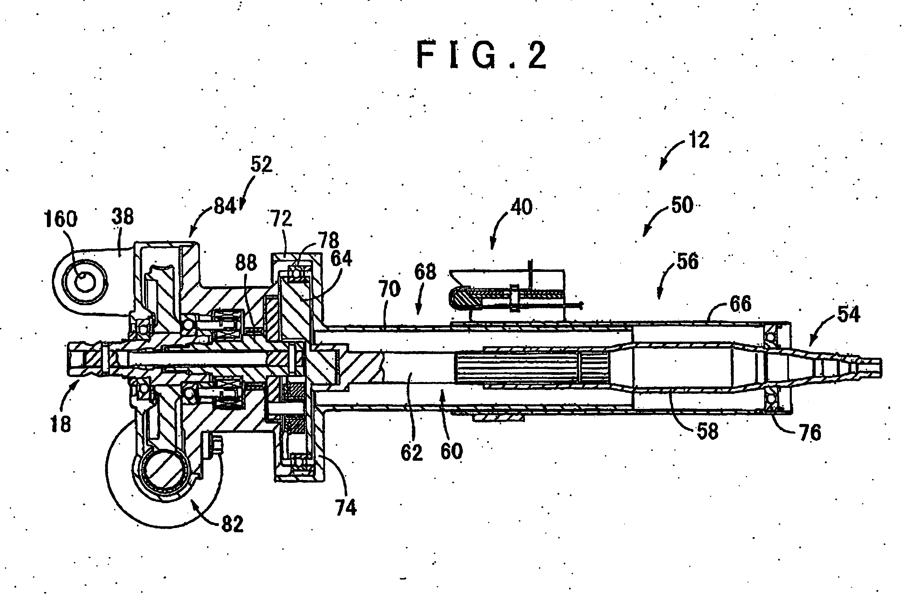

FIG 2 shows a cross-sectional side view of the steering force transmission device 12. The steering force transmission device 12 is largely sectioned into a column section 50 that holds the steering wheel 10' and is expandable in the axis direction, and an EPS section 52 that is a main body to implement the EPS function, and these two sections 50 and 52 are integrated in the steering force transmission device 12. Each section will now be described in sequence.

The column section 50 includes a main shaft 54 that holds the steering wheel 10 at the rear edge thereof, and a column tube 56 that holds the main shaft 54 which is rotatable in a penetrating state. The main shaft 54 includes an upper shaft 58 positioned at a rear side of the vehicle, that is an upper side of the main shaft 54, and a lower shaft 60 positioned at a front side of the vehicle, that is a lower side of the main shaft 54. The upper shaft 58 is formed to be a pipe shape, and the lower shaft 60 is formed to be a rod shape, and the rear portion of the lower shaft 60 is inserted into the front portion of the upper shaft 58. The upper shaft 58 and the lower shaft 60 are spline-interfitted, and the upper shaft 58 and the lower shaft 60 are connected in a state where relative movement is possible and relative rotation is impossible in the rotation axis direction. In other words, the main shaft 54 has a structure which can expand in the rotation axis direction. The lower shaft 60 is constituted by a shaft main body portion 62, which is a rear side, and a circular flange portion 64 that is located in the front of the shaft main body portion 62, and is a collar portion of which the outer diameter is greater than the outer diameter of the shaft main body portion 62. The circular flange portion 64 is linked to the later mentioned EPS section 52. In this steering force transmission device 12, the shaft main body portion of the main shaft 54 is constituted by the shaft main body portion 62 of the lower shaft 60 and the upper shaft 58.

The column tube 56 includes an upper tube 66 positioned at the rear side of the vehicle (upper side of the column tube 56), and a lower tube 68 positioned at the front side of the vehicle (lower side of the column tube 56). The upper tube 66 and the lower tube 68 both have a tube shape, and the rear portion of the lower tube 68 is inserted into the front portion of the upper tube 66. The lower tube 68 has a step, and is constituted by a small diameter portion 70 which has an outer diameter that is smaller than the inner diameter of the upper tube 66, and is located at the rear portion of the lower tube 68, a large diameter portion 72 which has an outer diameter that is greater than the inner diameter of the upper tube 66 and is located in the front portion of the lower tube 68, and a step portion 74 that connects the small diameter portion 70 and a large diameter portion 72. A liner, which is not illustrated, is disposed between the small diameter portion 70 of the lower tube 68 and the upper tube 66, and by this liner, the lower tube 68 can be inserted into the upper tube 66 without rattling, and relative movement of the upper tube 66 and the lower tube 68 in the rotation axis direction can be easier. In other words, the column tube 56 has a structure which is expandable in the rotation axis direction.

Radial bearings 76 and 78 are disposed in the rear edge of the upper tube 66 and in the front edge of the lower tube 68 respectively, and the column tube 56 holds the main shaft 54 which is rotatable via the bearings 76 and 78. Because of this structure, the column section 50 can be expandable while ensuring the rotation of the main shaft 54. In concrete terms, the bearing 78 is disposed between the circular flange portion 64 that is disposed in the front side of the shaft main body portion 62, and the large diameter portion 72 that is disposed in the front side of the lower tube 68.

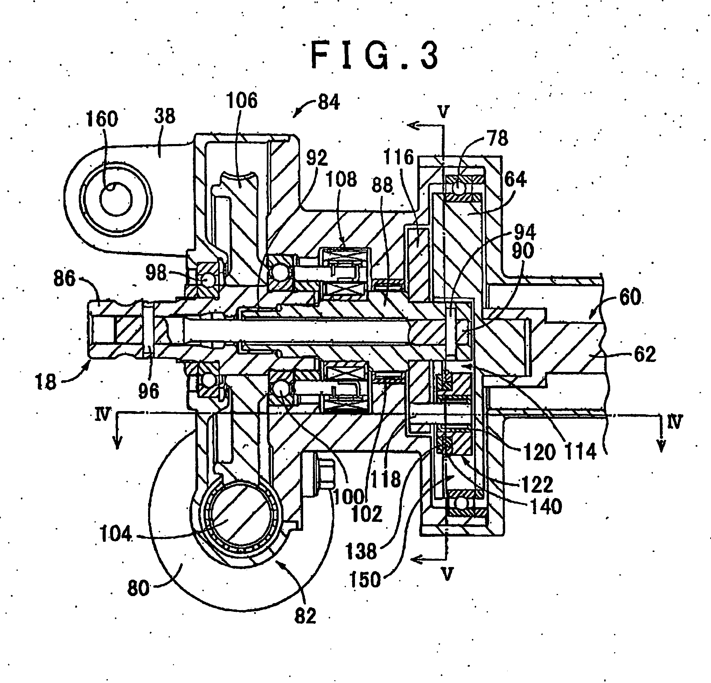

FIG 3 shows a cross-sectional side view of the EPS section 52. The EPS section 52 includes: an output shaft 18 that outputs a control force, applied to the steering wheel 10, to the steering device 14; an assisting device 82 that has an electromagnetic motor 80 as the power source and assists the rotation output of the output shaft 18 by this motor 80; and an EPS housing 84 that holds the output shaft 18 to be rotatable and houses the assisting device 82. The output shaft 18 is constituted by an output side shaft 86, input side shaft 88 and torsion bar 90, which are integrated. The output side shaft 86 extends from the front side of the EPS housing 84, and the extended portion is connected to the I/M shaft 16 via the universal joint 20, so as to output the rotation to the steering device 14.

The output side shaft 86 has a hollow structure, and the input side shaft 88 is inserted into the rear portion of the output side shaft 86. A bearing 92 is included between the inner surface of the output side shaft 86 and the outer surface of the input side shaft 88, and the output side shaft 86 and the input side shaft 88 can coaxially and relatively rotate. The input side shaft 88 has a hole, extending in the rotation axis direction, that opens in the front end face and closes in the rear end face, and the torsion bar 90 is disposed inside the hole of the input side shaft 88 and the output side shaft 86. The rear edge of the torsion bar 90 is secured to the base of the hole of the input side shaft 88 by a pin 94, and the front edge of the torsion bar 90 is secured by a pin 96 to the front edge of the through hole, which penetrates the output side shaft 86 in the rotation axis direction. By this configuration, the output shaft 18 allows torsion of the torsion bar 90 under its own torsion. The output side shaft 86 is held by the EPS housing 84 to be rotatable via two radial bearings 98 and 100 at the outer surface, and the input side shaft 88 is held by the EPS housing 84 to be rotatable via a needle bearing 102 at the outer surface.

The assisting device 82 includes the electromagnetic motor 80, a worm 104 that is linked with the motor axis of the electromagnetic motor 80, and a worm wheel 106 that is engaged with the worm 104. The worm wheel 106 is secured to the output side shaft 86 of the output shaft 18, so that relative rotation with the output side shaft 86 is disabled. Because of this structure, rotation force is applied to the worm 104 by the electromagnetic motor 80 whereby the rotation force is applied to the worm wheel 106. In other words, the assisting device 82 has a structure in which the rotation output of the output shaft 18 is assisted by the electromagnetic motor 80 and the steering assisting force (or operational steering assisting force) that assists steering of the wheels is generated.

The EPS section 52 also has a rotation angle sensor 108. The rotation angle sensor 108 is a device for detecting a relative rotation displacement, which is a difference between the rotation angle position of the output side shaft 86 in which the front portion of the torsion bar 90 is secured, and the rotation angle position of the input side shaft 88 in which the rear portion of the torsion bar 90 is secured. The steering torque can be estimated based on the relative rotation displacement between the two shafts 86 and 88, and the operation of the electromagnetic motor 80 is controlled so as to generate the steering assisting force according to the level of the steering torque.

The axis of the output shaft 18 and the rotation axis of the main shaft 54 are parallel and are shifted from each other by a predetermined amount, and the output shaft 18 is linked to the front edge of the main shaft 54. In concrete terms, the lower shaft 60 constituting the main shaft 54 has a recess portion 114 which opens in the front end face of the circular flange portion 64, and the rear edge of the input side shaft 88 constituting the output shaft 18 is housed in the recess portion 114. In the portion of the input side shaft 88 which is a front portion of the rear edge of the input side shaft 88 housed in the recess portion 114, a ring-shaped ring plate 116 is interfittingly secured, and functions as the collar portion of the input side shaft 88.

The rear end face of the ring plate 116 and the front end face of the circular flange portion 64 of the lower shaft 60 face each other with a small interval. In the ring plate 116, a through hole, which extends in the rotation axis direction, is formed, and a pin 118 is secured and interfitted in the through hole. This pin 118 protrudes to the back from the ring plate 116, and a roller 122 is disposed at a portion where the pin 118 protrudes, via a needle bearing 120. In other words, the roller 122, as a base body, can be rotated about the rotation axis relative to the ring plate 116.

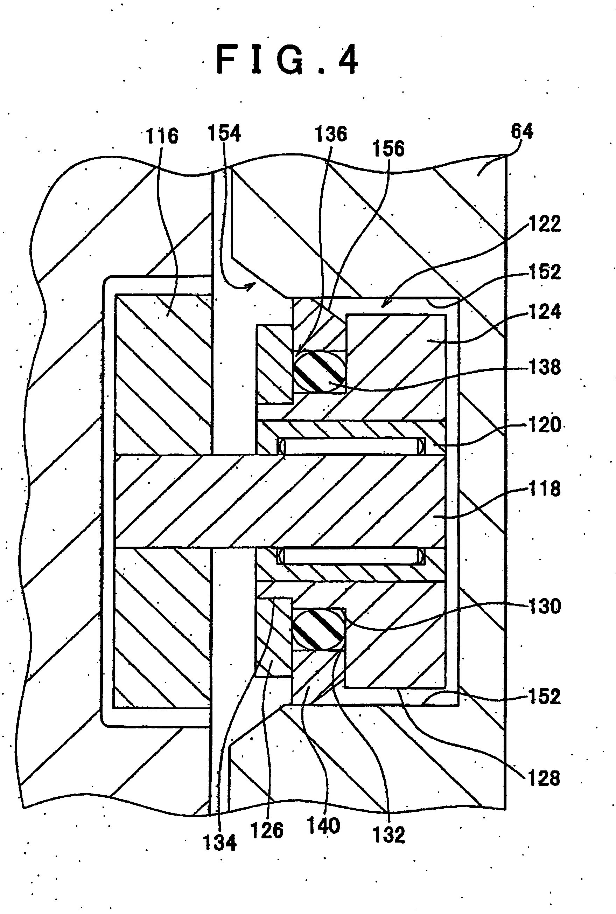

As FIG. 4 shows, which is a IV - IV cross-sectional view in FIG. 3, the roller 122 is constituted by a stepped cylindrical member with 124 as a first cylindrical member, and a ring member 126 as a second cylindrical member, and the ring member 126 is press-fitted into the smallest diameter portion of the stepped cylindrical member 124. The stepped cylindrical member 124 has: a first cylindrical face 128 that has a largest diameter and functions as an outer surface of the roller 122; a second cylindrical face 130 that has a diameter smaller than the first cylindrical face 128; a step face 132 that connects the first cylindrical face 128 and the second cylindrical face 130; and a third cylindrical face 134 that is positioned where the ring member 126 is press-fitted and has a diameter smaller than the second cylindrical face 130. On the outer surface of the roller 122, a circumferential groove 136, that extends in the circumferential direction of the roller 122, is formed by the second cylindrical face 130, step face 132 and rear end face of the ring member 126, and an O-ring 138 is disposed in the circumferential groove 136, that is a small diameter portion, as a ring-shaped elastic body. In the O-ring 138, a Teflon ring 140 is externally inserted as a ring-formed smoothing member. According to this steering force transmission device 12, a protruding portion, that extends from the ring plate 116 in a direction of the rotation axis of the input side shaft 88, is formed by the roller 122, O-ring 138 and Teflon ring 140, and this protruding portion, output shaft 18 and ring plate 116 constitute the first shaft. The shaft main body portion of the first shaft is constituted by the input side shaft 88 and the output side shaft 86. While the output shaft 18 functions as the first shaft, the main shaft 54 functions as the second shaft. In addition, the outer diameter of the ring member 126 is smaller than the outer diameter of the first cylindrical face 128 of the stepped cylindrical member 124. Also, in the rotation direction of the ring member 126 (or the stepped cylindrical member 124), the length of the outer surface of the ring member 126 is set to be shorter than 1/2 of the length of the outer surface of the first cylindrical face 128 of the stepped cylindrical member 124.

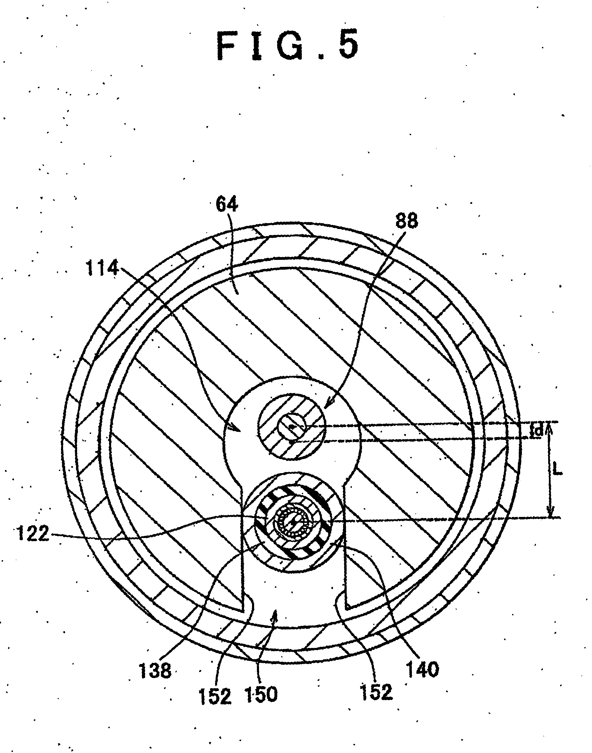

A radial groove 150 (guide passage) is formed on the front end face of the circular flange portion 64 at a position facing the roller 122 that protrudes backward from the ring plate 116, as shown in FIG. 5, which is a cross-sectional view the V - V line in FIG. 3. The radial groove 150 is formed extending from the recess portion 114 in a radial direction of the circular flange portion 64, and the roller 122 along with the Teflon ring 140 engage in the radial groove 150. The width of the radial groove 150, that is a distance between a pair of side wall faces 152 of the radial groove 150, is slightly greater than the diameter of the outer surface of the roller 122, so that a clearance exists between the roller 122 and the pair of side wall faces 152. The outer diameter of the Teflon ring 140, on the other hand, is slightly greater than the width of the radial groove 150, and the Teflon ring 140 engages with the radial groove 150 in a state of being deformed in the radial direction. The inner diameter of the Teflon ring 140 and the outer diameter of the O-ring 138 are roughly the same, and the O-ring 138 deforms in the radial direction as well as the Teflon ring 140 deforms in the radial direction. Hence the Teflon ring 140 contacts both of the pair of side wall faces 152 in a state of being urged by the elastic force of the O-ring 138. In other words, according to the steering force transmission device 12, the protruding portion constituted by the roller 122, O-ring 138 and Teflon ring 140 is engaged with the radial groove 150 without rattle. As FIG. 4 shows, an inclined face is formed on an opening peripheral portion 154 that is an edge of the pair of side wall faces positioned at an end of the pair of side wall faces 152 in the rotation axis direction of the second shaft, and a tapered inclined face 156 is also formed on a rear peripheral portion of the outer surface of the Teflon ring 140.

When a driver turns the steering wheel 10, the main shaft 54 rotates around the rotation axis thereof. At this time, the roller 122, engaged in the radial groove 150 formed in the circular flange portion 64 of the lower shaft 60, is controlled to not deform in the circumferential direction of the lower shaft 60, by the pair of side wall faces 152 of the radial groove 150, and movement in the radial direction of the lower shaft 60 is allowed by the radial groove 150. In other words, the pair of side wall faces 152 function as a pair of guide faces, and the radial groove 150 functions as a guide passage. When the roller 122 moves in the radial groove 150 by the rotatin of the lower shaft 60, the rotation force of the lower shaft 60 is transmitted to the input side shaft 88 via the roller 122, pin 118 and ring plate 116, and rotates the input side shaft 88 around the rotation axis thereof. This means that the steering force transmission device 12 has a rotation transmission mechanism that transmits the rotation of the lower shaft 60 around the rotation axis to the input side shaft 88 of which rotation axis is set shifted from the rotation axis of the lower shaft 60. By this structure, the steering force transmission device 12 transmits the steering force, that is input to the steering wheel 10, to the steering device 14 via the I/M shaft 16. According to this steering force transmission device 12, the rotation transmission mechanism includes the radial groove 150, roller 122, O-ring 138 and Teflon ring 140.

The steering force transmission device 12 is installed in a part of the body of a vehicle at the front edge of the EPS section 52 and the upper tube 66 of the column section 50. The above mentioned front bracket 38 is secured to the EPS housing 84 of the EPS section 52, and a shaft insertion hole 160 is formed in the front bracket 38. In the steering support 36, a bearing member 164, in which a shaft hole 162 is formed, is secured, and a support shaft 166 is inserted through the shaft insertion hole 160 of the front bracket 38 and the shaft hole 162 of the bearing member 164, whereby the steering force transmission device 12 is oscillatably supported with the support shaft 166 as the center.

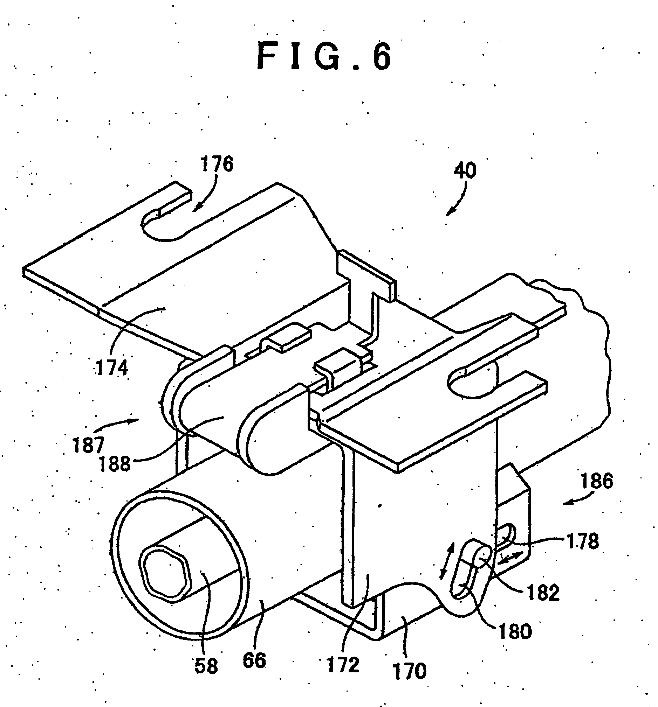

The column section 50, on the other hand, is supported by the rear bracket 40, and the rear bracket 40 is installed in the steering support 36. In concrete terms, as FIG. 6 shows, the rear bracket 40, which has a holding member 172 that holds a held member 170 that is secured to the upper tube 66, and a mounting plate 174, that is secured to the holding member 172 and is mounted to the steering support 36, is joined with the steering support 36 using a slot 176 formed in the mounting plate 174. Long holes 178 and 180 are opened in the held member 170 and holding member 172 respectively, and a rod 182 penetrates these holes, so that the holding member 172 holds the held member 170 utilizing this rod 182 (not shown). By this holding force, the deformation of the upper tube 66 is disabled. The holding force can be decreased by controlling the control lever 184, and in a state of weakening holding force, movement of the rod 182 along the long hole 178 is allowed, so the movement of the upper tube 66 to the lower tube 68 in the axis direction is allowed as the upper shaft 58 moves to the lower shaft 60 in the axis direction, and the expansion of the column section 50 is allowed. Also since the movement of the rod 182 along the long hole 180 is allowed, oscillation of the steering force transmission device 12, centered around the support shaft 166 penetrating the front bracket 38, is allowed. In other words, the steering force transmission device 12 has a tilted telescopic mechanism 186 having the above mentioned structure.

If collision of the vehicle causes secondary collision of the driver with the steering wheel 10, the rear bracket 40 separates from the steering support 36, and the column section 50 is retracted. The steering force transmission device 12 has a shock absorption mechanism 187 to absorb the secondary collision, and the shock of the secondary collision is effectively absorbed by a shock absorption plate 188 deforming as the steering column 56 is retracted.

According to the steering force transmission device 12, two shafts 60 and 88, of which axes are disposed in a shifted state in parallel, are linked by the rotation transmission mechanism, hence the rotation phase of the lower shaft 60 and the rotation phase of the input side shaft 88 shift, and the rotation phase difference, that is a difference of the rotation phases of these two shafts 60 and 88, changes. This will be described in concrete terms with reference to the drawings.

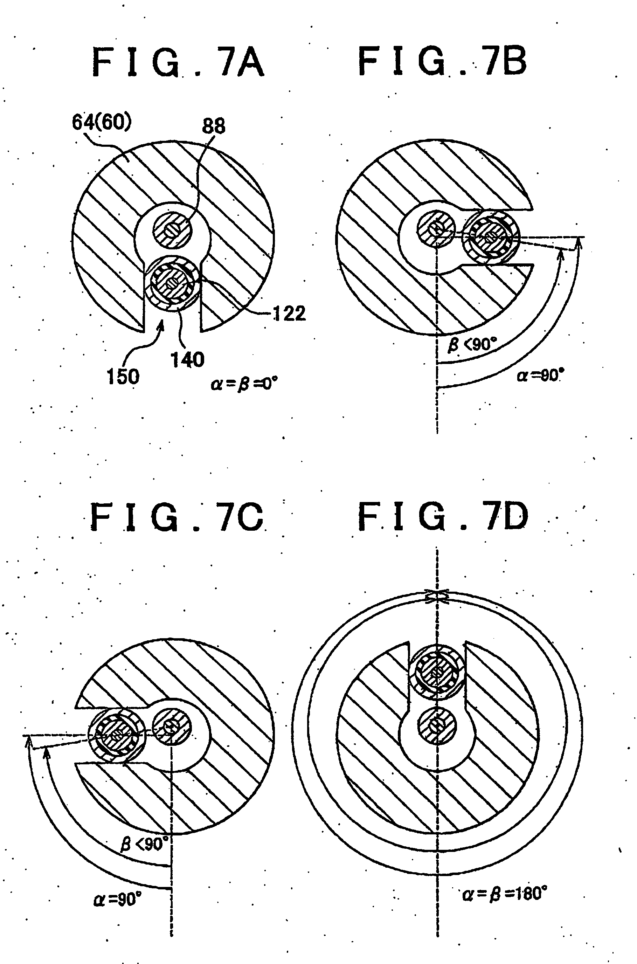

FIGS. 7A to 7D show cross-sectional views (sectioned at the V-V line in FIG. 3) of the circular flange portion 64 of the lower shaft 10, the input side shaft 88 that is linked to the circular flange portion 64, the roller 122 that is a protruding portion to be engaged in the radial groove 150 formed in the circular flange portion 64, and the Teflon ring 140. FIG. 7A shows a state when the steering wheel 10 is at a position corresponding to a neutral steering position of the wheels, that is at a neutral control position, FIG 7B shows a state when the steering wheel 10 is at a position 90° turned to the left from the neutral control position, FIG. 7C shows a state when the steering wheel 10 is at a position 90° turned to the right from the neutral control position, and FIG. 7D shows a state when the steering wheel 10 is at position 180° turned to the left or right from the neutral control position.

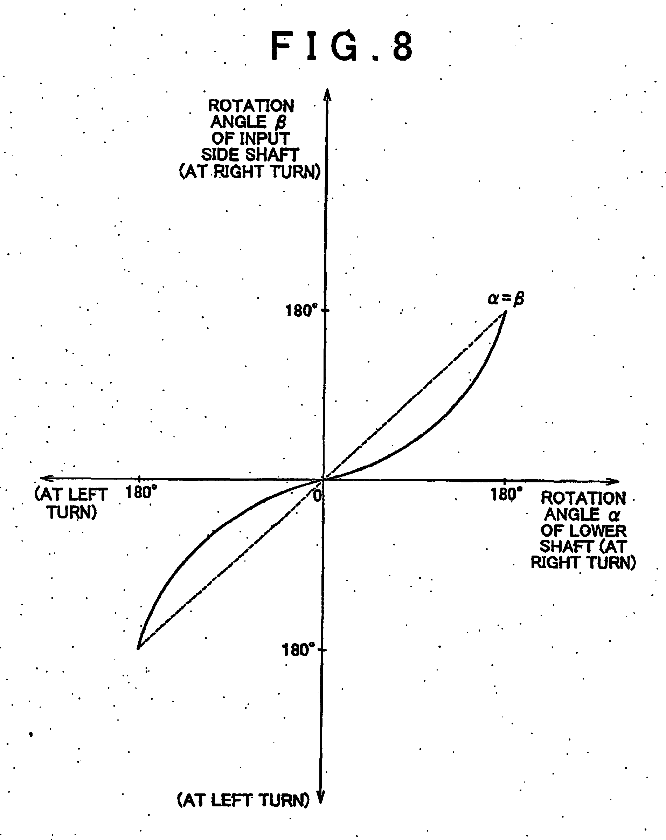

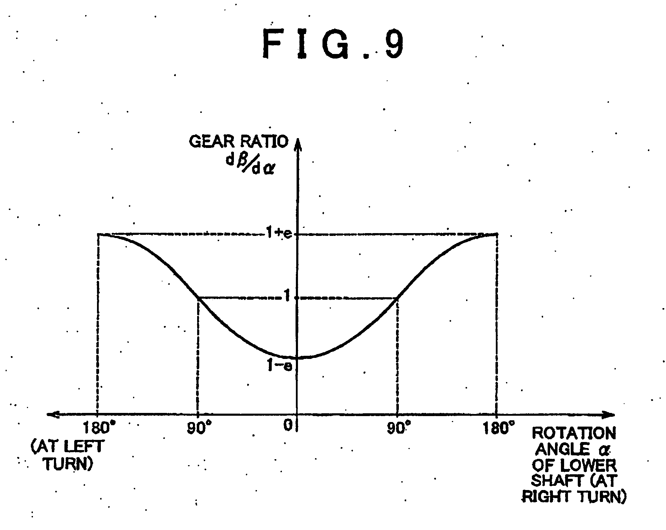

As FIGS. 7A to 7D show, if the steering wheel 10 is turned 90° to the left or right from the neutral control position, the lower shaft 60 turns 90° around the rotation axis thereof, but the input side shaft 88 does not completely turn 90° around the rotation axis thereof, so the rotation angle of the input side shaft 88 becomes less than 90°. If the steering wheel 10 is turned more and is turned 180° to the left or right from the neutral control position, both the lower shaft 60 and the input side shaft 88 turn 180°. The relationship of the rotation angle $\alpha$ of the lower shaft 60 and the rotation angle $\beta$ of the input side shaft 88 is shown in FIG 8, when the steering wheel 10 is turned less than 180° from the neutral control position, the rotation angle $\beta$ of the input side shaft 88 is smaller than the rotation angle $\alpha$ of the lower shaft 60, and when the steering wheel 10 is turned 180° from the neutral control position, the rotation angle $\beta$ of the input side shaft 88 becomes the same as the rotation angle $\alpha$ of the lower shaft 60. In other words, when the rotation phase of the lower shaft 60 becomes a predetermined rotation phase which matches with the rotation phase of the input side shaft 88, that is when the rotation angle $\alpha$ of the lower shaft 60 becomes 0° or 180° to be specific, the rotation angles $\alpha$ and $\beta$ become the same, and the rotation phase difference becomes 0°. When the rotation angle $\alpha$ of the lower shaft 60 changes from 0° to 180°, the rotation phase difference gradually increases, then gradually decreases after a certain rotation angle, and becomes 0°. In this case, the gear ratio ($d\beta/d\alpha$) of the two shafts 60 and 88, that is a ratio ($d\beta/d\alpha$) of the rotation speed of the input side shaft 88 ($d\beta/dt$) to the rotation speed of the lower shaft 60 ($d\alpha/dt$) changes according to the rotation angle $\alpha$ of the lower shaft 60, as shown in FIG. 9.

As FIG. 8 shows, when the rotation angle α of the lower shaft 60 is 0°, the gear ratio (dβ/dα) is smallest, and the gear ratio (dβ/dα) increases as the rotation angle α of the lower shaft 60 increases. In other words, according to the steering force transmission device 12, gentle and stable handling is implemented when the control angle of the steering wheel 10 is small, and handling with good response is implemented as the control angle of the steering wheel 10 increases. In this system, the control range of the steering wheel 10 is limited to about 180° to the left and right from the neutral control position by a control range limiting mechanism, which is not illustrated.

Incidentally, e indicated in the ordinate in FIG. 9 is a ratio of a shift amount d between the rotation axis of the input side shaft 88 and the rotation axis of the lower shaft 60 (see FIG. 5) to the offset amount L from the rotation axis of the input side shaft 88 at a position where the roller 122 engages in the radial groove 150 (see FIG. 5), and this ratio influences the control sensation of the steering wheel 10 when driving.

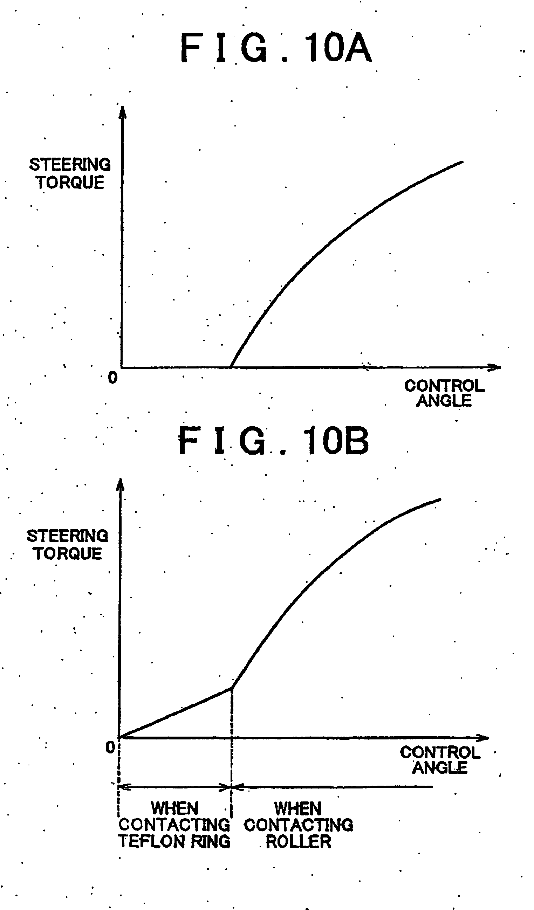

In the above mentioned steering force transmission device 12, the protruding portion, constituted by the roller 122, O-ring 138 and Teflon ring 140, is engaged in the radial groove 150 without rattle by the O-ring 138 and Teflon ring 140. Here a steering force transmission device, with a structure in which a cylindrical-shaped roller, without the O-ring and Teflon ring, is engaged in the radial groove, is considered. In the case of the steering force transmission device having this structure, a clearance exists between the roller as the protruding portion and the pair of side wall faces of the radial groove, and this clearance may generate abnormal sound and vibration when driving. Also Because of this clearance, when the steering wheel begins to be used or is maneuvered, the steering torque of the steering wheel 10 is not generated until the roller and one of the pair of side wall faces contact. In concrete terms, if the steering wheel 10 is turned to the left or right from the neutral control position when the vehicle is moving straight ahead, for example, as shown in FIG. 10A, the steering torque is 0 while the control angle of the steering wheel 10 is small, since the roller does not contact the side wall faces, and the steering torque increases after the roller contacts the inside wall faces. Therefore the driver may experience uncomfortable control sensation of the steering wheel 10.

According to this steering force transmission device 12, the Teflon ring 140 contacts the pair of side wall faces 152 by the elastic force of the O-ring 138 when the steering wheel 10 is not turned. When the steering wheel 10 is turned and the rotation torque of the main shaft 54 increases, the deformation amount of the O-ring 138 increases, and the Teflon ring 140 enters the circumferential groove 136. Therefore if the steering wheel 10 is turned to the left or right from the neutral control position when the vehicle is moving straight ahead, for example, as shown in FIG. 10B the Teflon ring 140 is contacting the pair of side wall faces 152 in a state of being urged by the elastic force, but the roller 122 is not contacting the side wall faces 152 while the control angle of the steering wheel 10 is small, so the steering torque increases according to the spring constant of the O-ring 138. If the steering wheel 10 is then turned and the rotation torque of the main shaft 54 increases to a certain degree, the Teflon ring 140 enters the circumferential groove 136 and the outer surface of the roller 122 contacts the side wall faces 152, whereby the rotation torque of the main shaft 54 is transmitted.

As mentioned above, according to the steering force transmission device 12, rattling between the roller 122 and the pair of side wall faces 152 is prevented, so that the abnormal sound and vibration or the like when driving caused by rattling is suppressed, and control sensation of the steering wheel 10 is improved. The effect of rattle prevention increases as the force to urge the Teflon ring 140, that is an elastic force, becomes stronger. Since the spring constant of the O-ring increases as the deformation amount increases, the O-ring 138 in the steering force transmission device 12 is held in the circumferential groove 136 in a somewhat deformed state, even if the steering wheel 10 is not being turned.

The roller 122 is engaged in the radial groove 150 in a state where the Teflon ring 140 is urged by the elastic force of the O-ring 138. Therefore when the roller 122 is assembled in the engaging direction groove 150 over the opening of the radial groove 150 during manufacture of the device, the inclined face 156 formed on the outer surface of the Teflon ring 140 and the opening peripheral portions 154 of the pair of side wall faces 152 contact. According to the steering force transmission device 12, the inclined face 156 and the opening peripheral portion 154 are tapered so as to match each other, as shown in FIG. 4, so that the roller 122 can be engaged in the radial groove 150 smoothly during the manufacture of the device. The roller 122 has a structure where the ring member 126 is press-fitted into the stepped cylindrical member 124. Because of this, during manufacture of the roller 122, the O-ring 138 is disposed in the second cylindrical face 130 of the stepped cylindrical member 124, and the Teflon ring 140 is externally inserted into the O-ring 138, and then the ring member 126 can be press-fitted into the stepped cylindrical member 124, hence the O-ring 138 and the Teflon ring 140 can be easily assembled in the roller 122.

The Teflon ring 140 slidably contacts the pair of side wall faces 152 in a state of being urged by the elastic force of the O-ring 138. Because of this, the Teflon ring 140 may be caught between the outer surface of the roller 122 and the side wall faces 152, and the rotation of the main shaft 54 may not be transmitted to the output shaft 18 appropriately. According to this steering force transmission device 12, the ring member 126 constituting the roller is press-fitted into the third cylindrical face 134 of the stepped cylindrical member 124, but is not welded to the stepped cylindrical member 124, and if a force exceeding a predetermined level, such as a force exceeding 5000 N, is applied to the ring member 126, the ring member 126 is separated from the stepped cylindrical member 124 and is released to outside the radial groove 150. In concrete terms, the separated ring member 126 moves to the ring plate 116 (in a direction moving away from the radial groove 150) located under the radial groove 150 formed in the circular flange 64, and is held by the pin 118 secured in the through hole of the ring plate 116. This means that according to the steering force transmission device 12, the Teflon ring 140 is prevented from being caught between the outer surface of the roller 122 and the side wall faces 152 when the steering wheel 10 is turned. Since the outer diameter of the ring member 126 is smaller than the outer diameter of the first cylindrical face 128 of the stepped cylindrical member 124, the ring member 126 does not contact the side wall faces 152 even if the roller 122 contacts the side wall faces 152. This prevents the ring member 126 from being applied with a large force, except for, for example, a case where the Teflon ring 140 is caught.

If the ring member 126 is released from the stepped cylindrical member 124, the ring member 126, which is disposed at the ring palate 116 side of the roller 122, is positioned between the roller 122 and the ring plate 116. Therefore even if the ring member 126 is released from the stepped cylindrical member 124, it is unlikely that the ring member 126 will interrupt the movement of the roller 122 in the radial groove 150, and the function of the rotation transmission mechanism is ensured. Since the ring member 126 is disposed at the ring plate 116 side of the roller 122, the insertion amount of the roller 122 into the radial groove 150 is low. In concrete terms, the outer diameter of the ring member 126 is smaller than the outer diameter of the first cylindrical face 128 of the stepped cylindrical member 124, as mentioned above, hence the ring member 126 does not contact the side wall faces 152. Because of this, it is unnecessary to dispose the ring member 126 at a rear side of the vehicle behind the opening peripheral portion 154 in the rotation axis direction, hence the insertion amount of the roller 122 into the radial groove 150 can be decreased. Therefore according to the steering force transmission device 12, the overall length of the device can be decreased for the decreased amount of the insertion of the roller 122 into the radial groove 150.

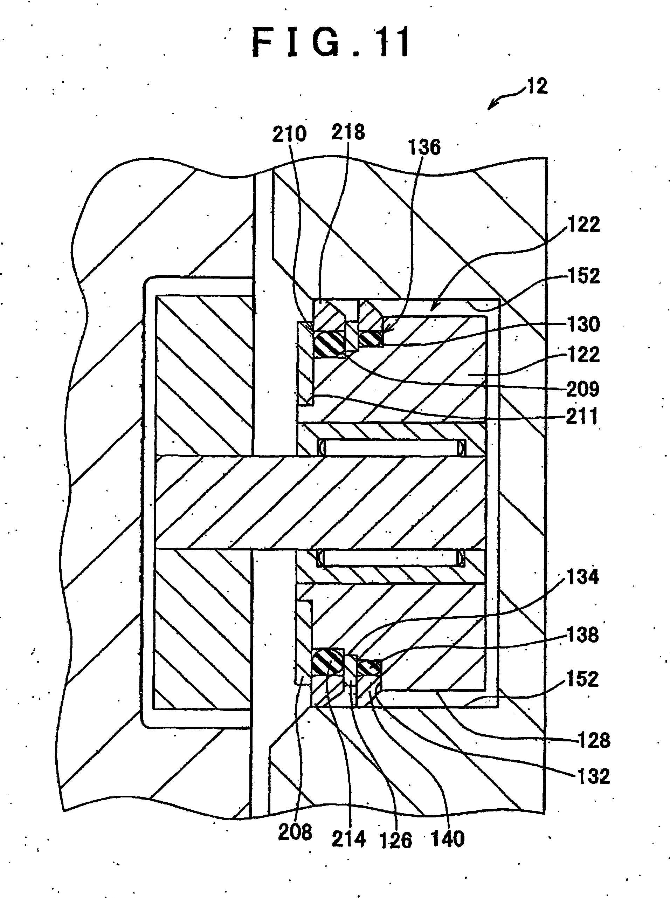

In the steering force transmission device 12, a roller 122 having one O-ring 138 and one Teflon ring is used as the protruding portion, but a roller having a plurality of O-rings and a plurality of Teflon rings can also be used. FIG. 11 shows an enlarged cross-sectional view of a rotation transmission mechanism of a steering force transmission device 12 according to the second embodiment, which has a protruding portion with such a structure. Excluding the protruding portion, the steering force transmission device 12 of the second embodiment has a configuration similar to the above mentioned steering force transmission device 12, so only the portion related to the rotation transmission mechanism is illustrated for the steering force transmission device 12 of the second embodiment, and a drawing of the entire device thereof is omitted.

The roller 122 of the steering force transmission device 12 of the second embodiment has a stepped cylindrical member 122 and two ring members, that is a first ring member 126 and a second ring member 208 (third cylindrical member), and the first ring member 126 is press-fitted into the third cylindrical face 134 that is positioned in an intermediate portion of the stepped cylindrical member 122, and the second ring member 208 is press-fitted into the fifth cylindrical face 211 disposed at the front edge side of the stepped cylindrical member 124. On the outer surface of the roller 122, a second circumferential groove 210 that is sectioned by the stepped cylindrical member 124, first ring member 126, second ring member 208 and fourth cylindrical surface 209, and a first circumferential groove 136 that is sectioned by the step face 132 of the stepped cylindrical member 124, first inner surface 130 and first ring member 126 are formed. A second O-ring 214 is disposed in the second circumferential groove 210. A first O-ring 138, having a diameter smaller than that of the second O-ring 214, is disposed in the first circumferential groove 136. A second Teflon ring 218 is externally inserted on the second O-ring 214. A first Teflon ring 140 is externally inserted on the first O-ring 138. Each of the second O-ring 214 and the first O-ring 138 is elastically deformed, and each of the second Teflon ring 218 and the first Teflon ring 140 contacts a pair of side wall faces 152 in a state of being urged by the elastic force.

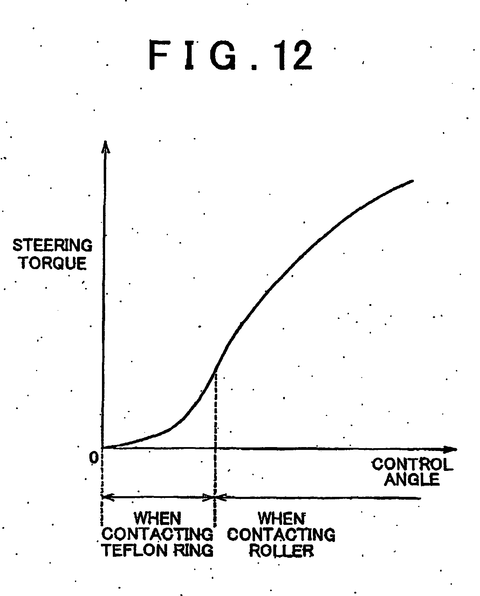

Just like the steering force transmission device 12 of the first embodiment, according to the steering force transmission device 12 of the second embodiment as well, rattling between the roller 122 and the pair of side wall faces 152 is prevented, so that the abnormal sound and vibration when driving caused by the rattling is suppressed, and control sensation of the steering wheel 10 is improved. In the steering force transmission device 12 of the second embodiment, the spring constant of the first O-ring 138 is set to be smaller than the spring constant of the second O-ring 214, and the deformation amount of the first O-ring 138, held in the first circumferential groove 136, is set to be greater than the deformation amount of the second O-ring 214 held in the second circumferential groove 210. Therefore if the steering wheel 10 is turned to the left or right from the neutral control position when the vehicle is moving straight ahead, the relationship of the control angle and steering torque of the steering wheel 10 changes, as shown in FIG 12. As FIG. 12 shows, according to the steering force transmission device 12 of the second embodiment, the change of the steering torque when the roller 122 contacts the side wall faces 152 decreases, and the control sensation of the steering wheel 10 during driving further improves.

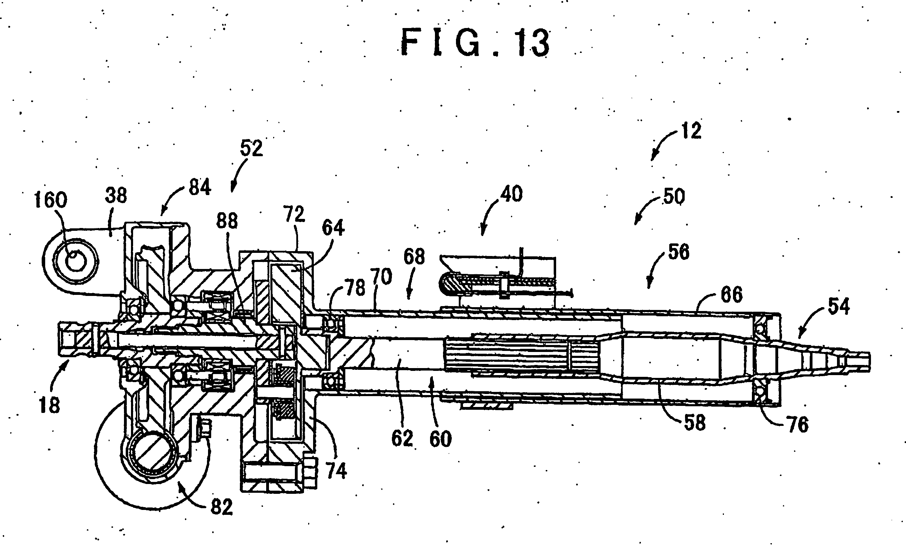

Now a steering force transmission device 12 according to the third embodiment will be described with reference to FIGS. 13 to 18. Description on configurations similar to the first embodiment and the second embodiment is omitted for the steering force transmission device 12 of the third embodiment.

FIG 13 shows a schematic diagram of a steering system for a vehicle having the steering force transmission device for a vehicle of the third embodiment. In the first embodiment and the second embodiment, the bearing 78 is disposed between the circular flange portion 64, that is disposed in the front side of the shaft main body portion . 62, and the large diameter portion 72, that is disposed in the front side of the lower tube 68. In the third embodiment, on the other hand, a bearing 78 is disposed between the small diameter portion 70 of the lower tube 68 and the front edge of the shaft main body portion 62, as shown in FIG 13. The rear end of the EPS housing 84, which is an exterior member of the EPS section 52, is positioned in the front side of the front end of the roller 122 in the rotation axis direction, and the protruding portion entirely extends from the rear end of the EPS housing 84.

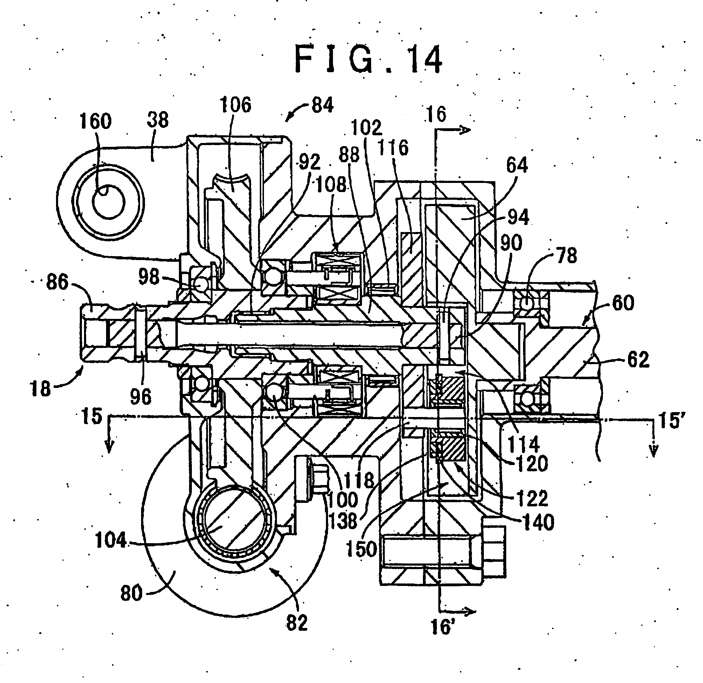

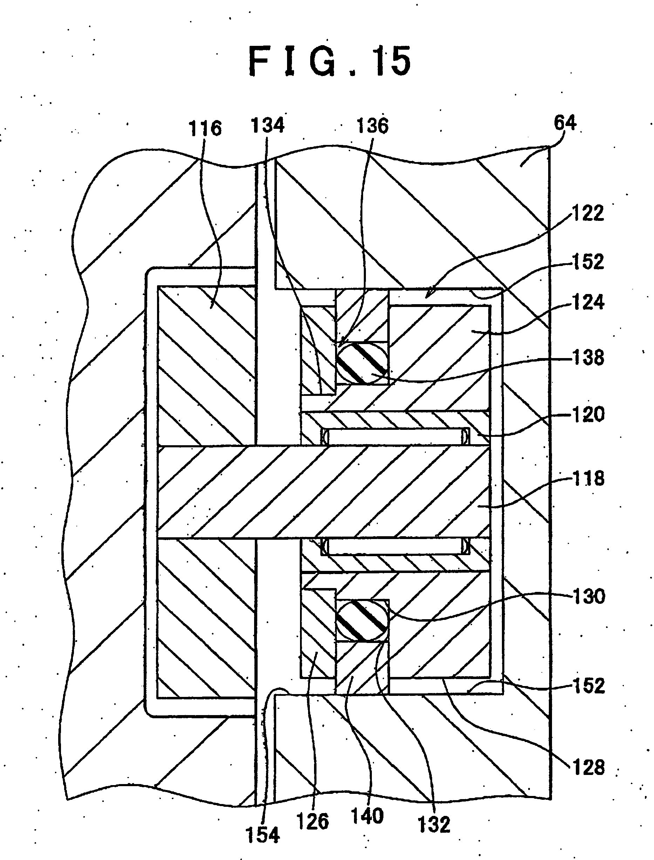

Unlike the first embodiment and the second embodiment, in the roller 122 of the third embodiment, an inclined face is not formed in the opening peripheral portion 154, that is the end of the pair of side wall faces 152 in the rotation axis direction, and the tapered inclined surface 156 is not formed either in the rear peripheral portion of the outer surface of the Teflon ring 140, as shown in FIG 15, that is a cross-sectioned view sectioned the 15 - 15' line in FIG 14. In other words, the cross-section of the Teflon ring 140 is rectanglular, and the angle formed by the front end face of the circular flange portion 64 as the opening peripheral portion 154, that is the edge of the side wall face 152, and the side wall face 152, is 90°.

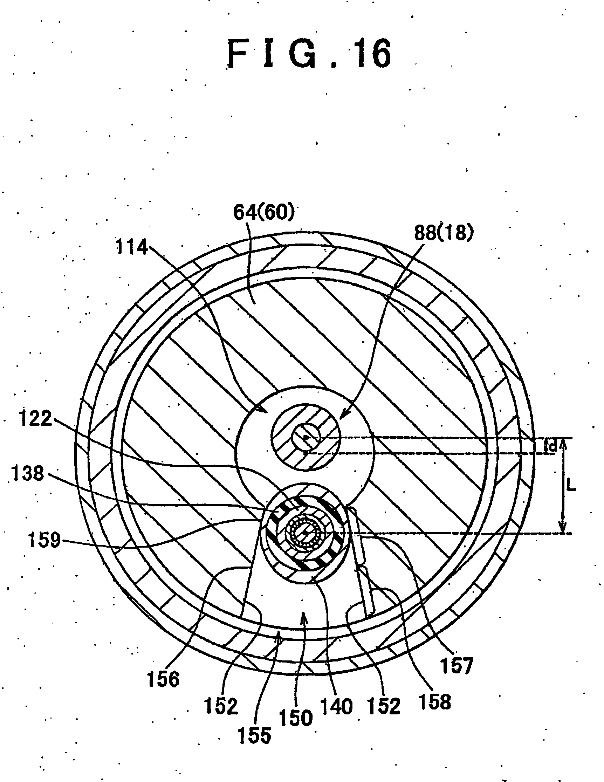

The radial groove 150 disposed on the front end face of the circular flange portion 64 is formed so that the width of the radial groove 150, that is the distance between the pair of side wall faces 152 of the radial groove 150, increases toward the outer surface portion from the recess portion 114 of the circular flange portion 64, as shown in FIG. 16, that is a cross-sectional view sectioned at the 16 -16' line in FIG. 14.

The diameter of the roller 122 at the outer surface is slightly smaller than the width of the opening of the radial groove 150 at a location closest to the recess portion 114 (that is the smallest width of the radial groove 150). At the position of the radial groove 150 where the width is smallest, a clearance exists between the roller 122 and the pair of side wall faces 152. The outer diameter of the Teflon ring 140, on the other hand, is slightly smaller than the width of the opening measured at the outermost surface of the circular flange portion 64 of the radial groove 150 (maximum width of the radial groove 150). In the opening edge 155, which is an opening of the radial groove . 150 to the outside in the radial direction, a clearance exists between the Teflon ring 140 and the pair of side wall faces 152. The distance between the pair of side wall faces 152 gradually decreases toward the recess portion 114 where the input side shaft 88 is housed from the opening edge 155, so the distance between the pair of side wall faces 152 becomes roughly the same as the outer diameter of the Teflon ring 140 in a same diameter portion 156, that is an intermediate portion of the radial groove 150 between the opening edge 155 and the recess portion 114, and the width of the radial groove 150 is smaller than the outer diameter of the Teflon ring 140 in a range from the same diameter portion 156 to a location closest to the recess portion 114 of the radial groove 150. Hence between the same diameter portion 156 and the location closest to the recess portion 114 of the radial groove 150, the Teflon ring 140 engages in the radial groove 150 in a state of being deformed in the radial direction of the Teflon ring 140. The inner diameter of the Teflon ring 140 and the outer diameter of the O-ring 138 are roughly the same, and as the Teflon ring 140 deforms in the radial direction thereof, the O-ring 138 also deforms in the radial direction thereof. As a result, the Teflon ring 140 simultaneously contacts both of the pair of side wall faces 152 in a state of being urged by the elastic force of the O-ring 138, in a range between the same diameter portion 156 and the location closest to the recess portion 114 of the radial groove 150. In other words, according to this steering force transmission device 12, the protruding portion constituted by the roller 122, O-ring 138 and Teflon ring 140 engages in the radial groove 150 without rattling, in a range between the same diameter portion 156 and a location closest to the recess portion 114 of the circumferential groove 150. In a range between the same diameter portion 156 and the location closest to the recess portion 114, the protruding portion simultaneously contacts both of the pair of side wall faces 152, deformation of the circular flange portion 64 in the circumferential direction is controlled, and the portion between the same diameter portion 156 and the location closest to the recess portion 114 functions as the first passage portion 157. Meanwhile, the portion between the same diameter portion 156 and the opening edge 155 functions as a second passage portion 158. In other words, in the second passage portion 158, where the width of the circumferential groove 150 is greater than the outer diameter of the Teflon ring 140, the outer surface of the Teflon ring 140 does not simultaneously contact both of the pair of side wall portions 152. The same diameter portion 156 becomes a boundary between the first passage portion 157 and the second passage portion 158. FIGS. 13 to 16 show the state when the steering wheel 10 is at a position corresponding to a neutral steering position of the wheels, that is a neutral control position, and the Teflon ring 140 contacts the neutral position corresponding potion 159 of the radial groove 150.

In the steering force transmission device 12 of the third embodiment as well, just like the first embodiment and the second embodiment, the two shafts 60 and 88, which are disposed in a state of being shifted from each other in parallel, are linked by the above mentioned rotation transmission mechanism, hence the rotation phase of the lower shaft 60 and the rotation phase of the input side shaft 88 shift, and the rotation phase difference, that is the difference of the rotation phases of these two shafts 60 and 88, changes. This will be described in concrete terms with reference to the drawings.

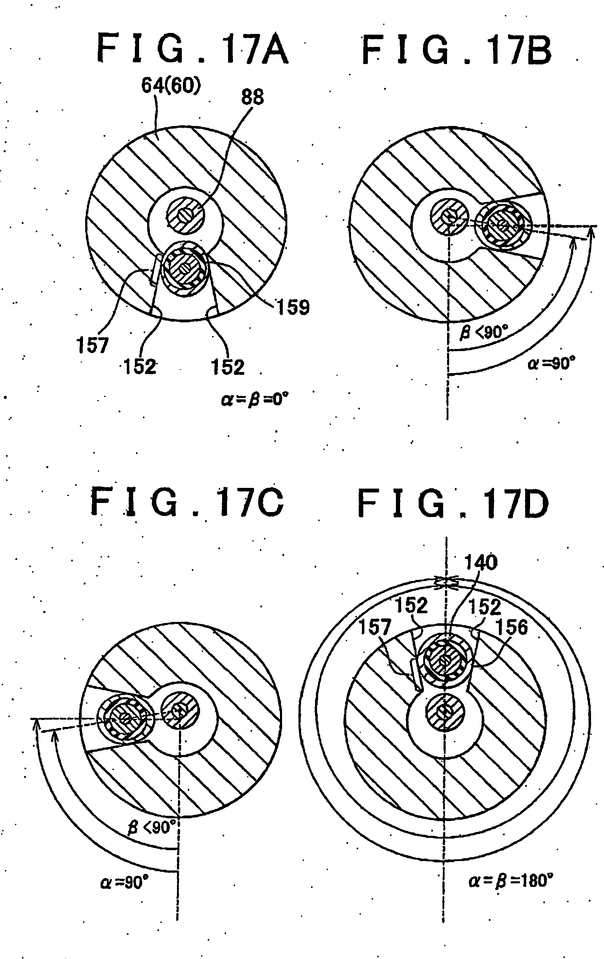

FIGS. 17A to 17D show cross-sectional views (corresponding to the cross-sectional view of the 16 -16' line in FIG. 14) of the circular flange portion 64 of the lower shaft 60, the input side shaft 88 that is linked to the circular flange portion 64, the roller 122 that is a protruding portion to be engaged in the radial groove 150 formed in the circular flange portion 64, and the Teflon ring 140. FIG. 17A shows a state when the steering wheel 10 is at the neutral control position, FIG. 17B shows a state when the steering wheel 10 is at a position 90° turned to the left from the neutral control position, FIG. 17C shows a state when the steering wheel 10 is at a position 90° turned to the right from the neutral control position, and FIG. 17D shows a state when the steering wheel 10 is at a positions 180° turned to the left or right from the neutral control position.

As FIG. 17 shows, if the steering wheel 10 is turned 90° to the left or right from the neutral control position, the lower shaft 60 turns 90° around the rotation axis thereof, but the input shaft 88 does not completely turn 90° around the rotation axis thereof, hence the rotation angle of the input side shaft 88 is less than 90°. If the steering wheel 10 is turned more and is turned 180° to the left or right from the neutral control position, both the lower shaft 60 and the input side shaft 88 turn 180°. The relationship of the rotation angle $\alpha$ of the lower shaft 60 and the rotation angle $\beta$ of the input side shaft 88 exhibits the behavior similar to the case of the first embodiment shown in FIG. 8. The ratio ($d\beta/d\alpha$) of the rotation speed of the input side shaft 88 ($d\beta/dt$) to the rotation speed of the lower shaft 60 ($d\alpha/dt$) also changes according to the rotation angle $\alpha$ of the lower shaft 60, just like the case of the first embodiment shown in FIG. 9.

Therefore according to the steering force transmission device 12 of the third embodiment as well, gentle and stable handling is implemented when the control angle of the steering wheel 10 is small, and handling with good response is implemented as the control angle of the steering wheel 10 increases.

In a state when the steering wheel 10 is at a neutral control position, the Teflon ring 140 is contacting both of the pair of side wall faces 152 at a neutral position corresponding portion 159, as shown in FIG 17A. In a state when the steering wheel 10 is 180° rotated to the left or right from the neutral control position, the Teflon ring 140 is contacting both of the pair of side wall faces 152 at the same diameter position 156, as FIG. 17D shows. In other words, the protruding portion constituted by the roller 122, Teflon ring 140 and others is allowed to move in the first passage portion 157, and the protruding portion is engaged in the radial groove 150 without rattling in a range of the turning control of the steering wheel 10. In other words, according to the steering force transmission device 12 in the third embodiment, rattling of the protruding portion in the radial groove 150 is prevented in the control range of the steering wheel 10, therefore the abnormal sound and vibration when driving caused by the rattling is suppressed, and the control sensation of the steering wheel 10 is improved.

Just like the first embodiment and the second embodiment, the steering force transmission device for a vehicle 12 of the third embodiment has a structure in which the column section 50 and the EPS section 52 are integrated. A possible method to assembly these two sections 50 and 52 is moving the EPS section 50 closer to the column section 50 in the rotation axis direction, and assembling these sections. In other words, the rear edge of the input side shaft 88 is inserted into the recess portion 114 formed in the front end face of the circular flange portion 64, and the rear edge of the roller 122 is inserted between the same diameter portion 156 and neutral position corresponding portion 159 of the radial groove 150 from the front side of the circular flange portion 64. Since the outer diameter of the input side shaft 88 is smaller than the inner diameter of the recess portion 114, and the outer diameter of the roller 122 is smaller than the width of the radial groove 150, insertion of the input side shaft 88 and the roller 122 is relatively easy. However the outer diameter of the Teflon ring 140, disposed on the outer surface of the roller 122, is greater than the width of the radial groove 150 in a range between the same diameter portion 156 and the neutral position corresponding portion 159, and the Teflon ring 140 is in a state of being urged by the O-ring 138. Hence it is difficult to insert the Teflon ring 140, along with the roller 122, into the radial groove 150 from the front side of the circular flange portion 64. Forcibly inserting the Teflon ring 140 into the radial groove 150 from the front of the circular flange portion 64 may result in twisting and damaging of the Teflon ring 140.

According to this steering force transmission device 12, the outer diameter of the Teflon ring 140 is smaller than the width of the radial groove 150 in the second passage portion 158 between a same diameter portion 156 and the opening edge 155, as mentioned above, so the Teflon ring 140 does not contact both of the pair of side wall faces 152 simultaneously. The rear edge of the EPS housing 84, that is an exterior member of the EPS section 52, is located in front of the front edge of the roller 122 in the rotation axis direction, and the protruding portion entirely extends out from the rear side of the EPS housing 84. Hence if the column section 50 and the EPS section 52 are assembled by moving the EPS section 50 closer to the column section 50 in a direction perpendicular to the rotation axis direction, and allowing both to be assembled with each other, then these two sections 50 and 52 can be easily assembled.

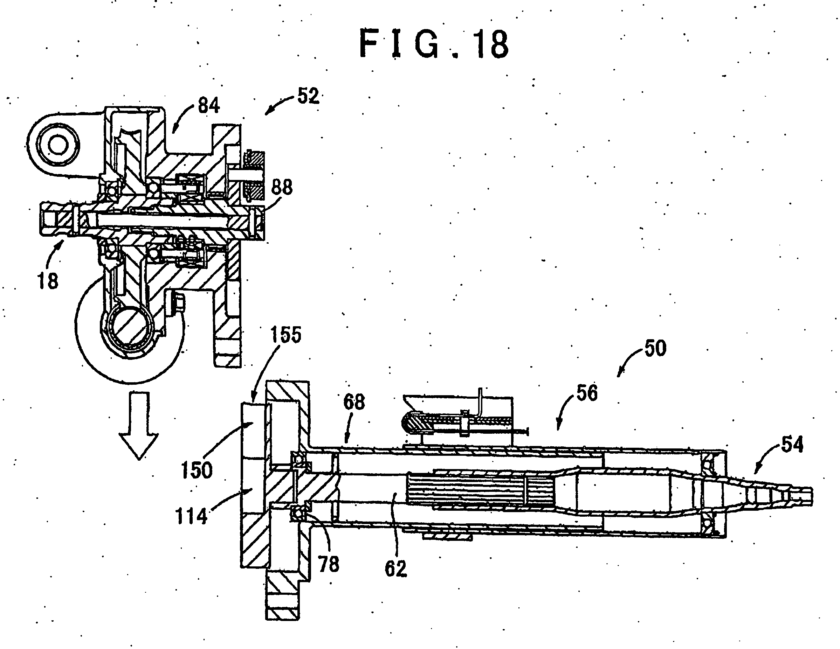

This assembly is described in concrete terms with reference to FIG. 18. As FIG. 18 shows, the rotation positions of the main shaft 54 and the output shaft 18 are set to be the rotation positions of the main shaft 54 and the output shaft 18 when the steering wheel 10 is turned 180° to the left or right from the neutral position. In other words, the main shaft 54 and the output shaft 18 in FIG. 13 are rotated 180° respectively. This is because the width of the second passage portion 158 of the radial groove 150 is greater than the width of the neutral position corresponding portion 159 of the radial groove 150, and therefore assembly is easier to engage the protruding portion with the same diameter portion 156 by way of the second passage portion 158. In order to expose the opening edge 155 of the radial groove 150 to the outside, the lower tube 68 of the column tube 56 is slid backward in advance. The rear edge of the input side shaft 88 is inserted vertically with respect to the rotation axis thereof from the exposed opening edge 155 of the radial groove 150 to inside the radial groove 150, and the rear edge of the input side shaft 88 is disposed inside the recess portion 114, and the protruding portion is engaged in the same diameter portion 156 of the radial groove 150. After the rear edge of the input side shaft 88 and the protruding portion are disposed at predetermined positions, the lower tube 68 is slid to the front side of the vehicle, and the EPS housing 84 and the lower tube 68 are bolted. The inner diameter of the lower tube 68 is slightly smaller than the outer diameter of the radical bearing 78 disposed in the shaft main body portion 62, so that the radial bearing 78 is press-fitted into the lower tube 68 when the lower tube 68 is slid forward during assembly.

If the two sections 50 and 52 are assembled like this, the protruding portion and the output shaft 18 can be inserted into the radial groove 150 in a state of visually recognizing the insertion locations of the protruding portion and the output shaft 18, that is the opening edge 155 of the radial groove 150, and the Teflon ring 140, along with the roller 122, can be inserted along the second passage portion 158. Since the width of the second passage portion 158 gradually increases, that is tapered, toward the opening edge 155 from the first passage portion 157, along the radial direction toward the outside, the side wall portions 152 constituting the second passage portion 158 become guides to insert the protruding portion. Therefore according to this steering force transmission device 12, the assembly operation of the device is simplified, and damage to the Teflon ring 140 during assembly of the device is decreased. In FIG. 16, inclination of the radial groove 150 is exaggerated in order to clearly show the technological characteristics of this steering force transmission device 12.

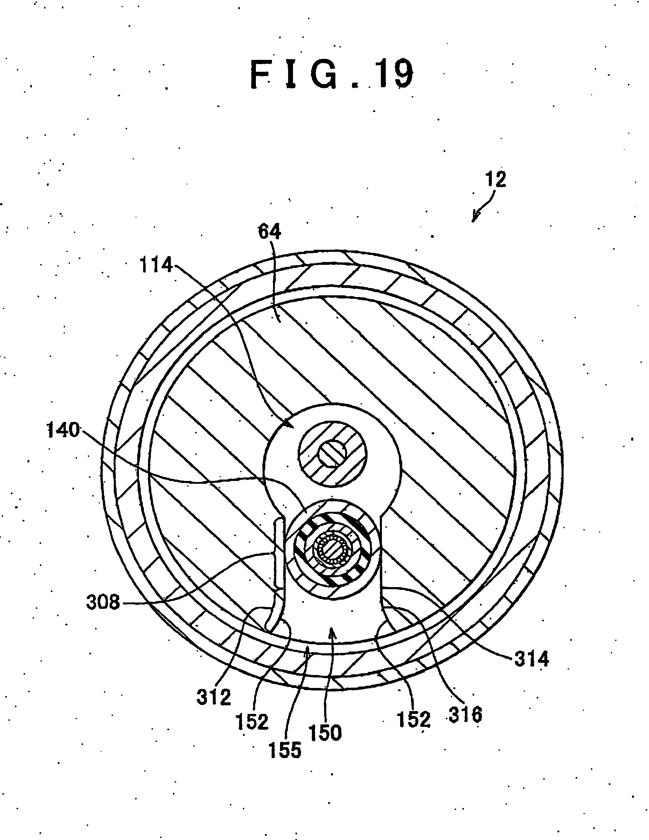

According to the above mentioned steering force transmission device 12 of the third embodiment, the distance between the pair of side wall faces 152 increases toward the opening edge 155, not only in the second passage portion 158 of the radial groove 150, but also in the first passage portion 157 as well, but the distance between the pair of side wall faces may be increased toward the opening edge only in the second passage portion of the radial groove. FIG. 19 shows an enlarged cross-sectional view of a rotation transmission mechanism of a steering force transmission device 12 having such a structure as the fourth embodiment. Excluding the radial groove, the Steering force transmission device 12 of the fourth embodiment has a configuration similar to the above mentioned steering force transmission device 12 of the third embodiment, so only the portion related to the rotation transmission mechanism is illustrated for the steering forme transmission device 12 of the fourth embodiment, and a drawing of the entire device thereof is omitted.

FIG. 19 is an enlarged cross-sectional view of the rotation transmission mechanism in a state when the steering wheel 10 is at a neutral control position. In a circular flange portion 64 of the steering force transmission device 12, a radial groove 150 is formed extending in a radial direction of the circular flange portion 64, and the radial groove 150 is constituted by a constant width portion 308 in which the distance between a pair of side wall faces 152 of the radial groove 150 is constant throughout the range, and an expanding width portion 312, in which the distance between the pair of side wall faces 152 expands toward an opening edge 155, which is located at the outside of the radial groove 150. In addition, the radial groove 150 is constructed so that the distance between the pair of side wall faces 152 at the opening edge is 1.3 times or more of the distance between the pair of the side wall faces in the constant width portion 308. Also, the radial groove 150 is constructed so that the length of the expanding width portion 312 in the radial direction of the second shaft is 1/5 or more of the distance between the pair of side wall faces 152 at the boundary of the constant width portion 308 and the expanding width portion 312.

The distance between the pair of side wall faces 152 in the constant width portion 308 is slightly smaller than the outer diameter of the Teflon ring 140, and the Teflon ring 140 simultaneously contacts both of the pair of side wall faces 152 in a deformed state in the constant width portion 308. The distance between the pair of side wall faces 152 at the opening edge 155, on the other hand, is greater than the outer diameter of the Teflon ring 140, and therefore the Teflon ring 140 does not simultaneously contact both of the pair of side wall faces 152 at the opening edge 155. The distance between the pair of side wall faces 152 in the expanding width portion 312, however, decreases toward the boundary portion 314, between the constant width portion 308 and the expanding width portion 312, from the opening edge 155, so in the intermediate portion 316 between the opening portion 155 and the boundary portion 314, the Teflon ring 140 simultaneously contacts both of the pair of the side wall faces 152 in a state of not being deformed. In other words, in the area between the opening edge 155 and the intermediate portion 316, the protruding portion including the Teflon ring 140 does not simultaneously contact both of the pair of side wall faces 152, and the portion between the opening edge 155 and the intermediate portion 316 functions as the second passage portion. In the area between an intermediate portion 316 and a portion closest to a recess portion 114 of a circumferential groove 316, on the other hand, the protruding portion simultaneously contacts both of the pair of side wall faces 152, and the portion between the intermediate portion 316 and the portion closest to the recess portion 114 functions as the first passage portion. In other words, the first passage portion is constituted by a portion between the intermediate portion 316 and the boundary portion 314, and the constant width portion 308.

Because of the above mentioned configuration, according to the steering force transmission device 12 of this variant form as well, the protruding portion can be easily inserted into the radial groove 150 beyond the opening edge 155 when the main shaft and the output shaft are assembled, and the assembly operation of the device can be simplified. If the steering wheel 10 turns 180° to the left or right from the neutral control position, the Teflon ring 140 contacts the boundary portion 314, hence in this steering force transmission device 12 as well, rattling of the protruding portion in the radial groove 150 is prevented within the control range of the steering wheel 10.

In the third embodiment and the fourth embodiment, the assembly operation between the first shaft and the second shaft can be simplified if at least the following configuration is implemented. This means that the following configuration, where the elastic body and smoothing member are eliminated, can be used if the object is only for simplifying the assembly operation.

The steering force transmission device for a vehicle includes: (i) a steering control member that is controlled by a driver; a steering device that steers wheels; (ii) a first shaft of which one edge is linked to one of the steering control member and the steering device, and which is installed to be rotatable; and (iii) a second shaft of which one edge is linked to the other of the steering control member and the steering device, and is installed to be rotatable in a state where a rotation axis of the first shaft and a rotation axis of the second shaft are in parallel, and these rotation axes are shifted by a predetermined distance, wherein a protruding portion is disposed at the other edge of the first shaft and at a position that is distant from the rotation axis of the first shaft by more than the predetermined distance in a radial direction of the first shaft, and a guide passage is disposed at the other edge of the second shaft so as to extend in the radial direction of the second shaft, so that the protruding portion of the first shaft is engaged and the second shaft of the protruding portion is allowed to move in the radial direction, wherein the guide passage has a pair of side wall faces that face each other, that sandwich the protruding portion, and that section the guide passage, and an opening edge that is open to the outside in the radial direction of the second shaft, and the guide passage includes a first passage portion in which the distance between the pair of side wall faces is set to be smaller than the outer diameter of the protruding portion, and which controls displacement of the protruding portion in the circumferential direction of the second shaft, and a second passage portion which is disposed in an area from the first passage portion to the opening end, and in which the distance between the pair of side wall faces is set to be greater than the outer diameter of the protruding portion.

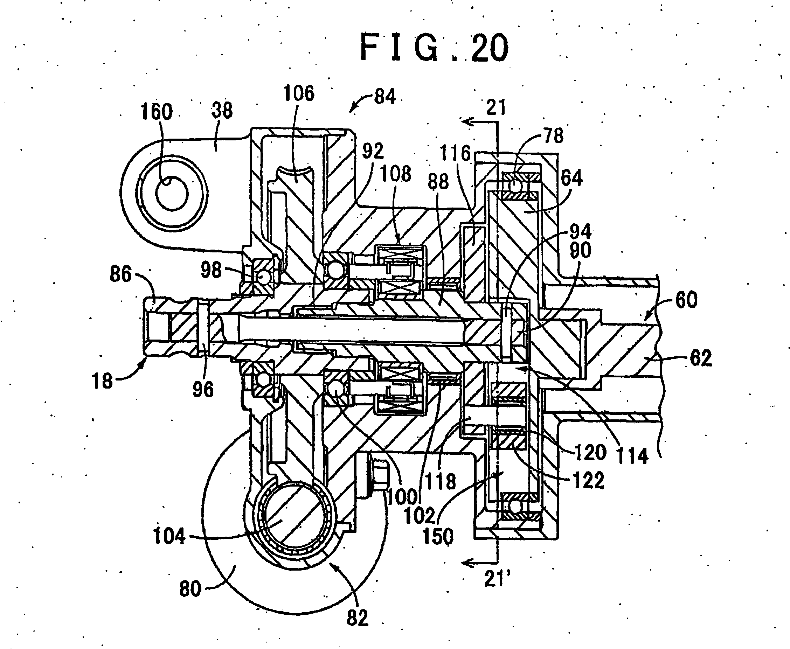

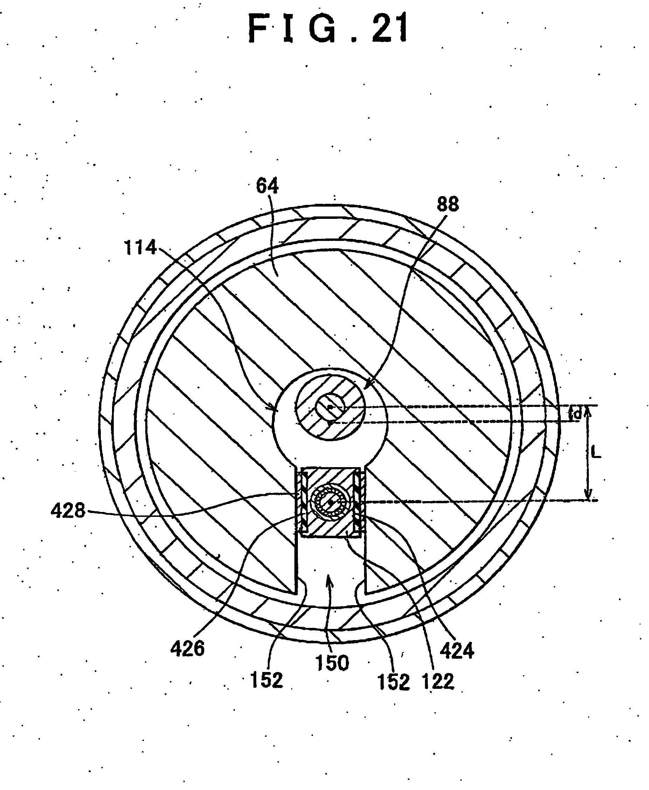

Now the fifth embodiment will be described. FIG. 20 shows a cross-sectional view of an EPS section of a steering force transmission device for a vehicle according to the fifth embodiment. In the first embodiment to the fourth embodiment, the base body is the roller 122. The fifth embodiment is different in that a rectangular parallelopiped base body 122, constituting a protruding portion, is disposed, as shown in FIG 21.

FIG 21 shows a cross-sectional view sectioned at the 21- 21' line in FIG. 20, where one surface of a rubber plate 426 (first elastic body, second elastic body) is pasted on each of a pair of side faces 424 of the base body 122, and a Teflon plate 428, which is a low friction member (first smoothing member, second smoothing member), is pasted on the outer surface of the rubber plate 426. In other words, the Teflon plate 428 is disposed on the side face 424 of the base body 122 via the rubber plate 426. According to this steering force transmission device 12, the protruding portion, that protrudes from the ring plate 116 in an extending direction of the rotation axis of the input side shaft 88, is constituted by the base body 122, rubber plate 426, Teflon plate 428, and others.

The protruding portion engages in the radial groove 150 in a state of deforming the rubber plate 426. In concrete terms, the width of the radial groove 150, that is the distance between the pair of side wall faces 152 of the radial groove 150, is slightly greater than the width of the base body 122, that is the distance between the pair of side faces 424 of the base body 122, and the rubber plate 426 and the Teflon plate 428 are disposed between the base body 122 and the pair of side wall faces 152 respectively. The width of the protruding portion where the pair of rubber plates 426 and the pair of Teflon plates 428 are disposed on the base body 122, that is the distance between the pair of Teflon plates 428, is slightly greater than the width of the radial groove 150, and the protruding portion engages in the radial groove 150 in a state of the pair of rubber plates 426 being deformed. Because of this, each of the pair of Teflon plates 428 is pressed against each of the pair of side wall faces 152 respectively by the elastic face of each rubber plate 426, so that the outer surface of each Teflon plate 428 contacts each side wall face 152. In other words, according to this steering force transmission device 12, the outer surface of each Teflon plate 428 functions as a contact face, and the protruding portion constituted by the base body 122, rubber plate 426 and Teflon plate 428 engages in the radial groove 150 without rattling. In addition, the length of each of Teflon plates 428 as the contact faces is set to be 1/2 or more (and twice or less) of the distance between the pair of side wall faces 152.

When a driver turns the steering wheel 10, the main shaft 54 rotates around the rotation axis thereof. At this time, displacement of the protruding portion, which is engaged in the radial groove 150 formed on the circular flange portion 64 of the lower shaft 60, is controlled in the circumferential direction of this lower shaft 60 by the pair of side wall faces 152 of the radial groove 150, and movement of the protruding portion in the radial direction of the shaft 60, on the other hand, is allowed by the radial groove 150. In other words, the pair of side wall faces 152 function as a pair of guide faces, and the radial groove 150 functions as a guide passage. When the protruding portion moves in the radial groove 150 as the lower shaft 60 rotates, the pair of Teflon plates 428 slidably contacts the pair of side wall faces 152, and the protruding portion slides in the radial direction of the lower shaft 60. Along with the sliding of the protruding portion, the rotation force of the lower shaft 60 is transmitted to the input side shaft 88 via the base body 122, pin 118, ring plate 116 and others, and the input side shaft 88 rotates around the rotation axis thereof. In other words, the steering force transmission device 12 has a rotation transmission mechanism to transmit the rotation around the rotation axis of the lower shaft 60 to the input side shaft 88 of which rotation axis is set to be shifted from the rotation axis of the lower shaft 60. Because of the above mentioned structure, the steering force transmission device 12 transmits the steering force, that is input to the steering wheel 10, to the steering device 14 via the I/M shaft 16. According to this steering force transmission device 12, the rotation transmission mechanism includes the radial groove 150, base body 122, rubber plate 426 and Teflon plate 428.

In the steering force transmission device 12 of the fifth embodiment as well, the two shafts 60 and 88, which are disposed in a state of being shifted from each other in parallel, are linked by the above mentioned rotation transmission mechanism, hence the rotation phase of the lower shaft 60 and the rotation phase of the input side shaft 88 shift, and the rotation phase difference, that is the difference of the rotation phases of these two shafts 60 and 88, changes. This will be described in concrete terms with reference to the drawings.

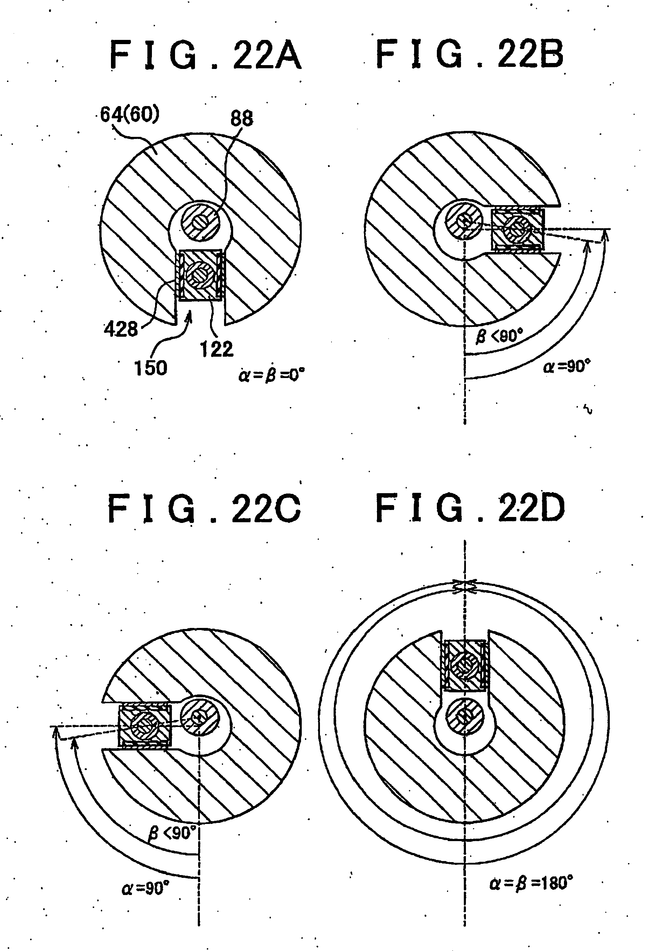

FIGS. 22A to 22D show cross-sectional views (corresponding to the cross-sectional view sectioned in the 21 - 21' line in FIG. 20) of the circular flange portion 64 of the lower shaft 60, and the input side shaft 88 that is linked to the circular flange portion 64, and the base body 122, that is a protruding portion to be engaged in the ' radial groove 150 formed in the circular flange portion 64, and the Teflon plate 428. FIG 22A shows a state when the steering wheel 10 is at a position corresponding to the steering neutral position of the wheels, that is at the neutral control position, FIG 22B shows a state when the steering wheel 10 is at a position 90° turned to the left from the neutral control position, FIG 22C shows a state when the steering wheel 10 is at a position 90° turned to the right from the neutral control position, and FIG 22D shows a state when the steering wheel 10 is at a position 180° turned to the left or right from the neutral control position.

As FIG 22 shows, if the steering wheel 10 is turned 90° to the left or right from the neutral control position, the lower shaft 60 turns 90° around the rotation axis thereof, but the input side shaft 88 does not completely turn 90° around the rotation axis thereof, hence the rotation angle of the input side shaft 88 is less than 90°. If the steering wheel 10 is turned more and is turned 180° to the left or right from the neutral control position, both the lower shaft 60 and the input side shaft 88 turn 180°. The relationship of the rotation angle $\alpha$ of the lower shaft 60 and the rotation angle $\beta$ of the input side shaft 88 exhibit behaviour similar to the case of the first embodiment shown in FIG. 8. The gear ratio (d$\beta$/d$\alpha$) of the two shafts 60 and 88, that is a ratio (d$\beta$/d$\alpha$) of the rotation speed of the input side shaft 88 (d$\beta$/dt) to the rotation speed of the lower shaft 60 (d$\alpha$/dt), also changes according to the rotation angle $\alpha$ of the lower shaft 60, just like the case of the first embodiment shown in FIG. 8.

Therefore according to this steering force transmission device 12, gentle and stable handling is implemented when the control angle of the steering wheel 10 is small, and handling with good response is implemented as the control angle of the steering wheel 10 increases.

According to this steering force transmission device 12, the protruding portion constituted by the base body 122, rubber plate 426 and Teflon plate 428 is engaged in the radial groove 150 without rattling by the rubber plate 426 and Teflon plate 428. Furthermore according to this steering force transmission device 12, the pair of Teflon plates 428 contact the pair of side wall faces 152 by the elastic force of the pair of rubber plates 426, even in a state of the steering wheel 10 not being turned. In other words, according to this steering force transmission device 12, the rattling in the radial groove 150 of the protruding portion is prevented, so that the abnormal sound and vibration when driving caused by the rattling are suppressed, and the control sensation of the steering wheel 10 is improved. The Teflon plates 428, as the plate-shaped low friction members (first smoothing member, second smoothing member) and the side wall faces 152, slidably contact, so the protruding portion smoothly move in the radial groove 150.

The rotation force transmitted to the output shaft 18 is relatively high, and the load on the contact portion of the protruding portion to the side wall face 152 is relatively high. If the area of this contact portion is small, the surface pressure of the contact portion increases, and load on the protruding portion increases. According to the steering force transmission device for a vehicle having a structure in which the roller, as the protruding portion, rolls in the radial groove, the roller line-contacts the side wall face, so the area of the protruding portion contacting the side wall face is relatively small. In this steering force transmission device 12, on the other hand, the contact portion of the protruding portion to the side wall face 152 is large, since the Teflon plate 428 constituting the protruding portion surface-contacts the side wall face 152. Therefore according to this steering force transmission device 12, the surface pressure on the contact portion of the protruding portion to the side wall face 152 is decreased, and load on the protruding portion is decreased, whereby durability of the protruding portion is improved.

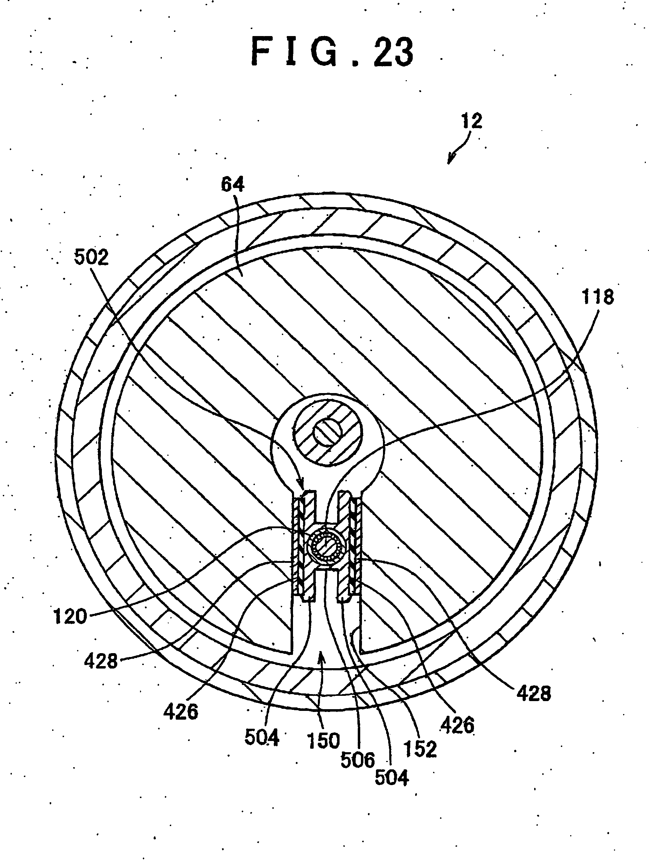

As the area of the contact portion of the protruding portion to the side wall face 152 is larger, the surface pressure on this portion can be decreased, and load on the protruding portion can be decreased. A steering force transmission device 12 having a structure in which the length of the protruding portion is increased in the direction of allowing the movement of the protruding portion, in order to increase the contact area of the protruding portion to the side wall face 152, is shown in FIG. 23 as the sixth embodiment. Excluding the protruding portion, the steering force transmission device 12 of the sixth embodiment has a configuration similar to the steering force transmission device 12 of the fifth embodiment, so only the portion related to the rotation transmission mechanism is illustrated for the sixth embodiment, and a drawing of the entire device thereof is omitted. In the description of the steering force transmission device 12 of the sixth embodiment, a composing element having a same function as that of the steering force transmission device 12 of the fifth embodiment is denoted with a same symbol, and description thereof is omitted or simplified.

According to the steering force transmission device 12 of the sixth embodiment, a base body 502 having an H-shape cross-section is disposed in a protruding portion of a pin 118, that protrudes backward from a ring plate 116, via a needle bearing 120, and the base body 502 can rotate around the rotation axis extending in the rotation axis direction with respect to the ring plate 116. The base body 502 is constituted by a pair of side wall portions 504 that face each other, and a beam portion 506 connecting the intermediate portions of the pair of side wall portions 504, and the needle bearing 120 disposed at the center of the beam portion 506. On the outer surface of each side wall portion 504, a rubber plate 426 (first elastic body, second elastic body) is pasted, and a Teflon plate 428 (first smoothing member, second smoothing member) is pasted on the outer surface of the rubber plate 426. In other words, a pair of rubber plates 426 and a pair of Teflon plates 428 are disposed on the pair of side wall portions 504 of the base body 502, and the protruding portion is constituted by the base body 502, the pair of rubber plates 426 and the pair of Teflon plates 428.

According to the steering force transmission device 12 of the sixth embodiment as well, just like the steering force transmission device 12 of the fifth embodiment, the protruding portion is engaged in the radial groove 150 formed in the circular flange portion 64 in a state of deforming the rubber plate 426, therefore the rattling of the protruding portion between the pair of side wall faces 152 can be prevented. Furthermore according to the steering force transmission device 12 of the sixth embodiment, compared with the steering force transmission device 12 of the fifth embodiment, the contact area between the rubber plate 426 and the Teflon plate 428 increases as the contact area of the protruding portion to the side wall face 152 increases. Therefore the elastic force generated by the rubber plate 426 in this steering force transmission device 12 is greater than the elastic force generated by the plate rubber 126 in the steering force transmission device 12 of the fifth embodiment even if the steering torque of the steering wheel is the same. The force of pressing the Teflon plate 428 against the side wall face 152, that is the elastic force, influences the control sensation when the steering wheel 10 starts to be turned or maneuvered, .and handling with better response is implemented as the elastic force is higher. Therefore according to the steering force transmission device 12 of the sixth embodiment, handling with better response at the start of turning and maneuvering the steering wheel 10 is implemented, compared with the steering force transmission device 12 of the fifth embodiment.

The base body 502 of the steering force transmission device 12 is not a rectangular parallelopiped but an H-shaped cross-section, that is a form when a part of a pair of facing surfaces is removed from a rectangular parallelepiped. Because of this, the increase of weight of the device, due to increasing the protruding portion in the moving direction of the protruding portion, can be suppressed somewhat. Both ends of the side wall portions 504 of the base body 502 in the moving direction of the protruding portion are tapered, so that both ends do not contact the side wall faces 152 when the protruding portion moves in the radial groove.

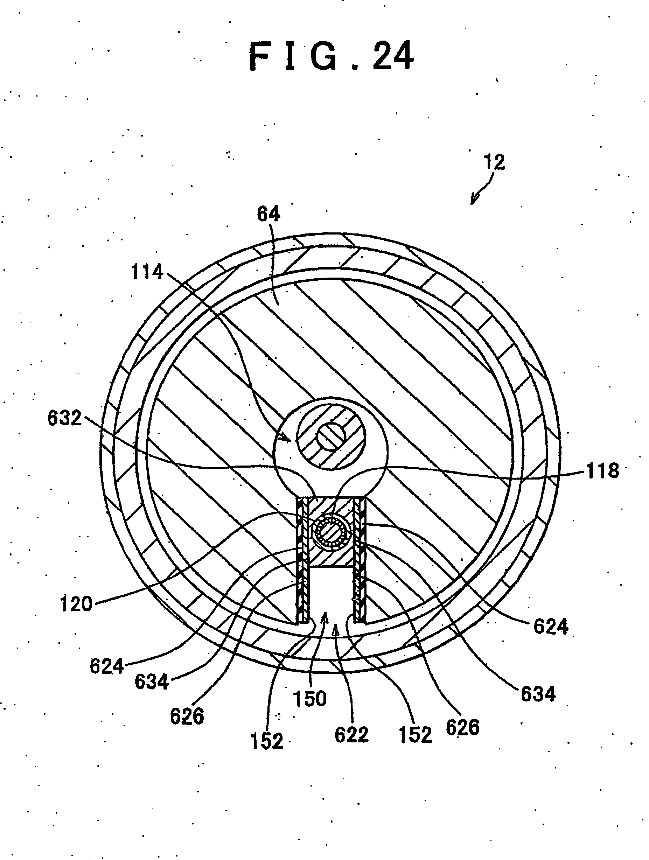

In the steering force transmission device 12 of the fifth embodiment or the sixth embodiment, a rubber plate and Teflon plate are disposed in the protruding portion, but the rubber plate and Teflon plate may be disposed on the pair of side wall faces 152 of the circular flange portion. FIG. 24 shows an enlarged cross-sectional view of a rotation transmission mechanism of a steering force transmission device 12 of the seventh embodiment, which has such a structure. Excluding the portion where the rubber plate and Teflon plate are disposed, the steering force transmission device 12 of the seventh embodiment has a configuration similar to the steering force transmission device 12 of the fifth embodiment or the sixth embodiment, so only the portion related to the rotation transmission mechanism is illustrated for the seventh embodiment, and a drawing of the entire device thereof is omitted. In the description of the steering force transmission device 12 of the seventh embodiment, a composing element having a same function as that of the steering force transmission device 12 of the fifth embodiment or the sixth embodiment is denoted with a same symbol, and description thereof is omitted or simplified.

According to the steering force transmission device 12 of the seventh embodiment, a radial recess portion 622 is formed in circular flange portion 64 so as to extend from the recess portion 114 in the radial direction of the circular flange portion 64, and a pair of rubber plates 624 (first elastic body, second elastic body) are pasted on the pair of inner faces of the radial recess portion 622. On the inner faces of the pair of rubber plates 624, Teflon plates 626 are pasted as a pair of plate-shaped low friction members (first smoothing member, second smoothing member), and a radial groove 150 is sectioned by the inner faces of the pair of Teflon plates 626. In other words, the inner faces of the pair of Teflon plates 626 function as the pair of side wall faces 152 of the radial groove 150.

In the protruding portion of the pin 118, that protrudes backward from the ring plate 116, a roughly rectangular parallelopiped base body 632 is disposed via a needle bearing 120, and this body 232 is engaged between the pair of Teflon plates 626. The pair of side faces 634 of the base body 632, that face each other, contact the inner faces of the pair of Teflon plates 626, and the pair of side faces 634 function as contact faces respectively. The space between the pair of side faces 634, that is the width of the base body 632, is slightly greater than the space of the pair of Teflon plates 626, so the rubber plates 624 are deformed, and the Teflon plates 626 are pressed against the base body 632 by the elastic force of the deformed rubber plates 624. Hence according to the steering force transmission device 12 of the seventh embodiment as well, just like the steering force transmission device 12 of the fifth embodiment or the sixth embodiment, rattling of the protruding portion constituted by the base body 632 in the radial groove 150 is prevented, and the contact area of the protruding portion to the side wall faces 152 is increased to decrease load on the protruding portion. Since a certain degree of elastic deformation is allowed for the Teflon plates, the steering force transmission device, with a structure in which the rubber plates are removed from the steering force transmission device 12 of the fifth embodiment to the seventh embodiment, may be used as a variant form.

According to the fifth embodiment to the seventh embodiment, durability of the protruding portion can be improved only if the following configuration is implemented. Therefore if the object is to improve durability of the protruding portion, the following configuration, without the elastic body and smoothing member, can be used.

The steering force transmission device for a vehicle includes: (i) a steering control member that is controlled by a driver; a steering device that steers wheels; (ii) a first shaft of which one edge is linked to one of the steering control member and the steering device, and which is installed to be rotatable; and (iii) a second shaft of which one edge is linked to the other of the steering control member and the steering device, and is installed to be rotatable in a state where a rotation axis of the first shaft and a rotation axis of the second shaft are in parallel, and these rotation axes are shifted by a predetermined distance, wherein a protruding portion is disposed at the other edge of the first shaft and at a position that is distant from the rotation axis of the first shaft by more than the predetermined distance in the radial direction of the first shaft, and a guide passage is disposed at the other edge of the second shaft so as to extend in the radial direction of the second shaft, so that the protruding portion of the first shaft is engaged and the second shaft of the protruding portion is allowed to move in the radial direction, wherein the guide passage has a pair of side wall faces that face each other, that sandwich the protruding portion, and that section the guide passage, and the protruding portion is rotatable relative to the first shaft collar portion, and includes a pair of contact faces that face the pair of side wall faces, and when, due to rotation of one shaft from among the first shaft and the second shaft, the other shaft rotates, the protruding portion slides in the guide passage in a state where at least one contact face from among the pair of contact ' faces contacts one side wall face from among the pair of side wall faces.

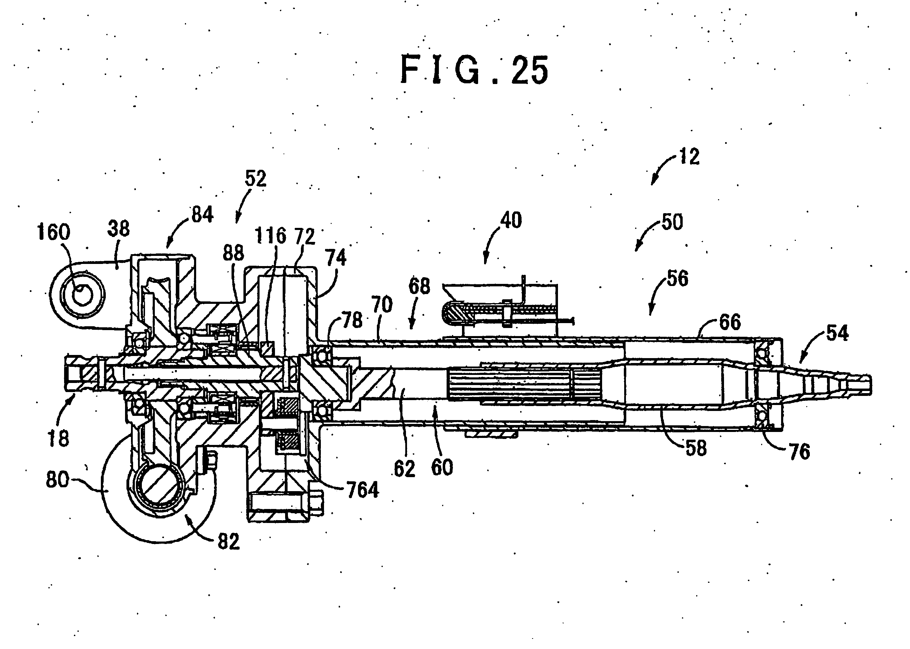

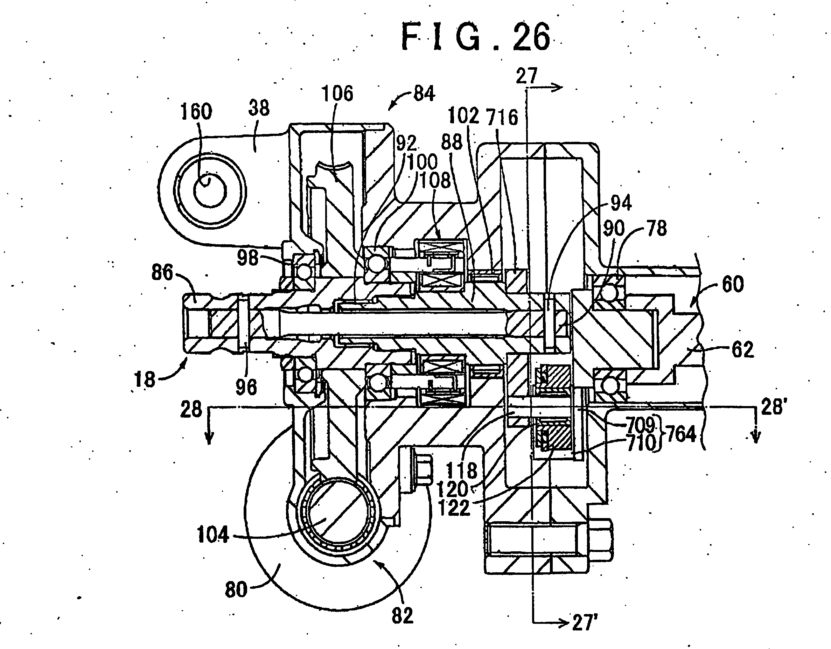

Now the eighth embodiment will be described. FIG. 25 shows a cross-sectional view depicting a steering force transmission device for a vehicle of a steering system for a vehicle according to the eighth embodiment. FIG. 26 shows a cross-sectional view of an EPS section of the steering force transmission device for a vehicle in FIG. 25. In the first embodiment to the seventh embodiment, the ring plate 116 as the first shaft collar portion, and the circular flange portion 64 as the second shaft collar portion, protrude in the radial direction of each shaft throughout the entire circumference of the outer surface of the main body portion of each shaft. In the eighth embodiment, on the other hand, each collar portion protrudes from a part of the outer surface of the main body portion of each shaft in the radial direction of each shaft, as shown in FIG. 25 and 26.

In the eighth embodiment, an extending portion 764 (second shaft collar portion) that extends from the front edge of the shaft main body portion 62 in the radial direction of the shaft main body portion 62, in order to link with an EPS section 52 to be described later, is disposed in a lower shaft 60. In the eighth embodiment, a bearing 78 is disposed between a small diameter portion 70 of a lower tube 68 and the front edge of the shaft main body portion 62, just like the third embodiment.

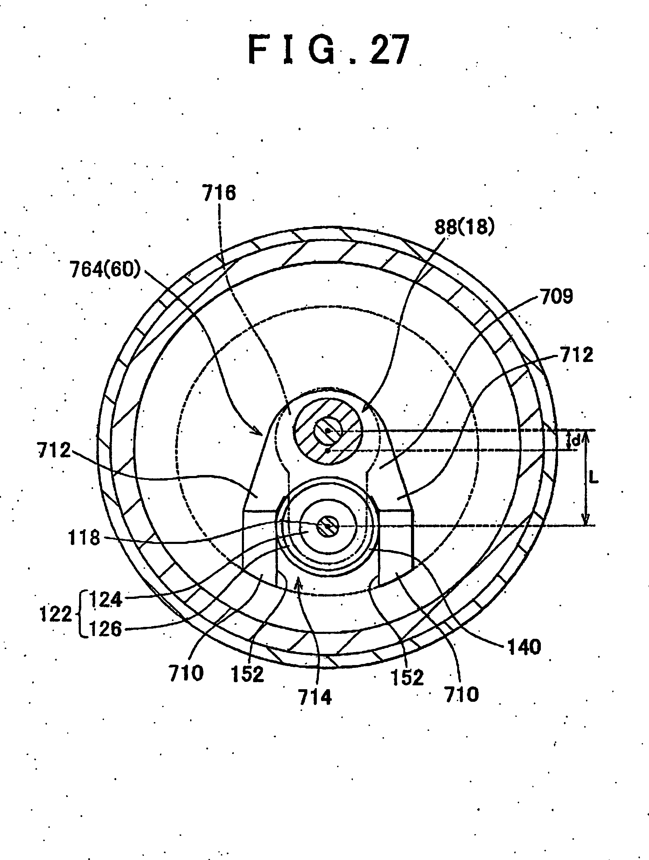

An output shaft 18 is disposed in a state where the rotation axis of a main shaft 54 and the axis of the output shaft 18 are in parallel, and these rotation axes are shifted by a predetermined amount, and is linked to the front edge of the main shaft 54, that is the extending portion 764 of the lower shaft 60. This linking structure will be described in detail with reference to FIGS. 26 and 27, that is a cross-sectional view sectioned at the 27 - 27' line in FIG. 26.

The extending portion 764 (second shaft collar portion, second extending portion) of the lower shaft 60 constituting the main shaft 54 is disposed from the front edge of the shaft main body portion 62 so as to be perpendicular to the shaft main body portion 62, as shown in FIG. 26. The extending portion 764 is constituted by a plate-shaped linking portion 709, that links a pair of erected portions 710 and the shaft main body portion 62, and erected portions 710 that are erected from arm portion 712, connected to the linking portion 709, toward the front. In concrete terms, the extending portion 764 does not extend radially from the outer surface of the front edge of the shaft main body portion 62 into all areas in the circumferential direction, but extends vertically to the rotation axis of the shaft main body portion 62 from a part of the outer surface of the shaft main body portion 62 in the circumferential direction. The lower shaft 60 has an edge having a U-shape, as shown in FIG 27, when viewed from the rotation axis direction of the shaft. In other words, the linking portion 709 is connected to the pair of arm portions 712, and the above mentioned erected portion 710 is disposed at the tip of each of the pair of arm portions 712 respectively. The pair of erected portions 710 is disposed so as to extend in parallel with the radial direction of the shaft main body portion 62, and the guide passage 714, extending in the radial direction of the shaft main body portion 62, is formed by the pair of erected portions 710.

In an input side shaft 88 of the output shaft 18, on the other hand, an extending plate 716 (first extending portion as the first shaft collar portion) is secured to the rear edge of the input side shaft 88. The extending plate 716 is disposed so as to extend from the rear edge of the input side shaft 88 in the radial direction, and a pin 118 is secured to the extended, edge in a state of protruding backward. The extending plate 716 is at a position and has a shape indicated by the two-dot chain line in FIG. 27. In concrete terms, the extending plate 716 does not extend radially from the outer surface of the input side shaft 88 into all areas in the circumferential direction, but on the tip of a pin 118 which extends from the outer surface of the input side shaft 88 in one direction perpendicular to the rotation axis of the input side shaft 88, a cylindrical roller 122 is disposed rotatably around the pin 118 via a needle bearing 120. The input side shaft 88, that is the output shaft 18 and the lower shaft 60 constituting the main shaft 54, are linked by the roller 122 (base body) inserted between the pair of erected portions 710 of the lower shaft 60.

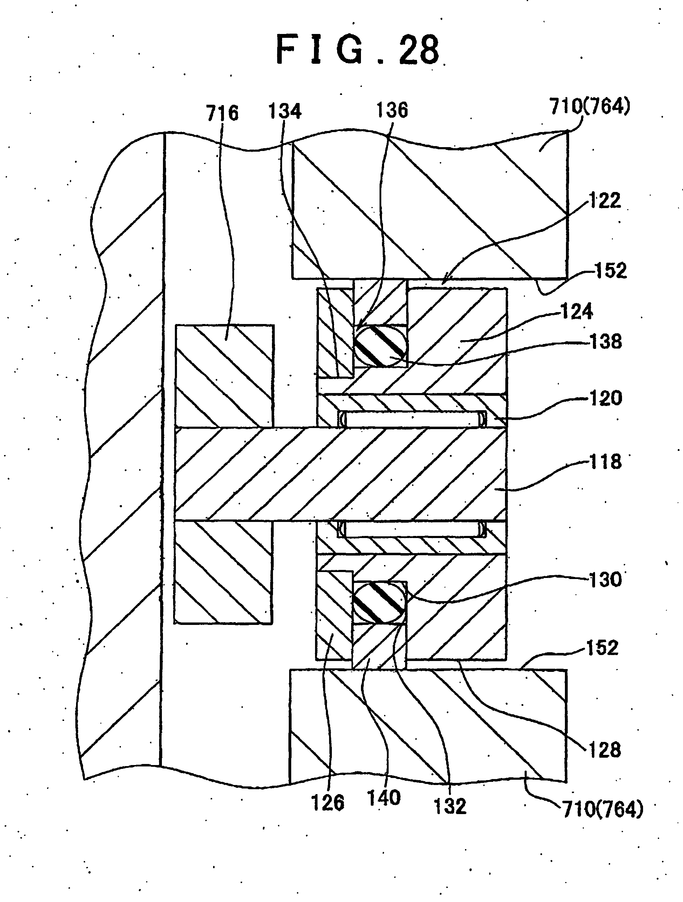

FIG. 28 shows a cross-sectional view sectioned at the 28 - 28' line in FIG. 26, where the structure of the roller 122 has a similar structure as the roller 122 shown in FIG. 15 in the third embodiment. In the third embodiment, the rear side of the roller 122 is closed, since the radial groove 150 in which the roller 122 is engaged, has a base. In the structure of the eighth embodiment, however, the roller 122 is inserted between the pair of erected portions 710 of the lower shaft 60, so the rear side of the roller 122 is open.

The roller 122, along with the O-ring 138 (first elastic body) and the Teflon ring 140 (first smoothing member), engages between the pair of erected portions 710 of the lower shaft 60, that is the guide passage 714. The width of the guide passage 714 is slightly greater than the outer diameter of the roller 122, and clearance exists between the roller 122 and the pair of erected portions 710. The outer diameter of the Teflon ring 140, on the other hand, is slightly greater than the width of the guide passage 714, so the Teflon ring 140 engages in the guide passage 714 in a state of being deformed in the radial direction. The inner diameter of the Teflon ring 140 and the outer diameter of the O-ring 138 are roughly the same, therefore as the Teflon ring 140 deforms in the radial direction, the O-ring 138 also deforms in the radial direction. Because of this, the Teflon ring 140 contacts both of the pair of erected portions 710 in a state of being urged by the elastic force of the O-ring 138. In other words, according to this steering force transmission device 12, a protruding portion which protrudes from an extending plate 716 as the extending portion in an extending direction of the rotation axis of the input side shaft 88 is constituted by a pin 118, needle bearing 120, roller 122, O-ring 138, Teflon ring 140 and others, so that the protruding portion engages in the guide passage 714 without rattling.

When a driver turns the steering wheel 10, the main shaft 54 rotates around the rotation axis thereof. At this time, the displacement of the protruding portion, which is engaging in the guide passage 714 formed in the extending portion 764 of the lower shaft 60, into the circumferential direction of the lower shaft 60, is controlled by the pair of erected portions 710, constituting the guide passage 714, that is a pair of side wall faces 152 facing each other in the circumferential direction of the lower shaft 60 of the pair of erected portions 710, and at the same time, movement of the protruding portion in the radial direction of the lower shaft 60 is allowed. This means that the pair of side wall faces 152 of the erected portions 710 sections the guide passage. In other words, the pair of side wall faces 152 of the extending portion 764 is constructed so as to sandwich the protruding portion of the first shaft.

When the protruding portion 124 moves in the guide passage 714 as the lower shaft 60 rotates, this rotation force of the lower shaft 60 is transmitted to the input side shaft 88 via the roller 122, pin 118, extending plate 716, and others, and the input side shaft 88 rotates around the rotation axis thereof. In this steering force transmission device 12, the rotation transmission mechanism includes the extending portion 764 having the guide passage 714 and the protruding portion 150. Because of this structure, the steering force transmission device 12 transmits the steering force, that is input to the steering wheel 10, to the steering device 18 via the I/M shaft 16.

According to this steering force transmission device 12, the output shaft 18 as the first shaft and the main shaft 54 as the second shaft, that is, the input side shaft 88 of the output shaft 18 and the lower shaft 60 of the main shaft 54, to be more exact, which are disposed in a state of the axial lines of these shafts being shifted in parallel, are linked by the above mentioned rotation transmission mechanism. As a result, the rotation phase of the lower shaft 60 and the rotation phase of the input side shaft 88 shift, and the rotation phase difference, that is the difference of the rotation phases of these two shafts 60 and 88, changes. This will be described in concrete terms with reference to the drawings.

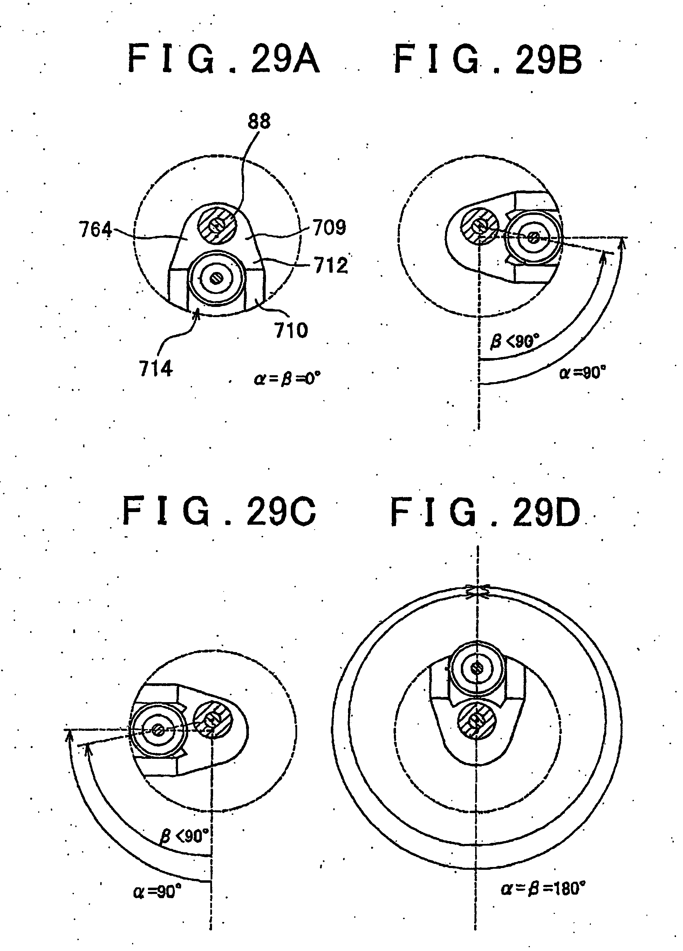

FIGS. 29A to 29D show cross-sectional views (corresponding to the cross-sectional view sectioned at the 27 - 27' line in FIG. 26) of a portion where the extending portion 764 of the lower shaft 60 and the protruding portion of the input side shaft 88 engage. FIG 29A shows a state when the steering wheel 10 is at a position corresponding to the steering neutral position of the wheels, that is at the neutral control position, FIG. 29B shows a state when the steering wheel 10 is at a position 90° turned to the left from the neutral control position, FIG. 29C shows a state when the steering wheel 10 is at a position 90° turned to the right from the neutral control position, and FIG 29D shows a state when the steering wheel 10 is at a position 180° turned to the left or right from the neutral control position.

As FIG 29 shows, if the steering wheel 10 is turned 90° to the left or right from the neutral control position, the lower shaft 60 turns 90° around the rotation axis thereof, but the input side shaft 88 does not completely turn 90° around the rotation axis thereof, hence the rotation angle of the input side shaft 88 is less than 90°. If the steering wheel 10 is turned more and to turned 180° to the left or right from the neutral control position, both of the lower shaft 60 and the input side shaft 88 turn 180°. The relationship of the rotation angle $\alpha$ of the lower shaft 60 and the rotation angle $\beta$ of the input side shaft 88 exhibits a behaviour similar to the case of the first embodiment shown in FIG. 8. The gear ratio ($d\beta/d\alpha$) of the two shafts 60 and 88, that is a ratio ($d\beta/d\alpha$) of the rotation speed of the input side shaft 88 ($d\beta/dt$) to the rotation speed of the lower shaft 60 ($d\alpha/dt$), also changes according to the rotation angle $\alpha$ of the lower shaft 60, just like the case of the first embodiment shown in FIG. 9.

Therefore according to this steering force transmission device 12 of the eighth embodiment as well, gentle and stable handling is implemented when the control angle of the steering wheel 10 is small, and handling with good response is implemented as the control angle of the steering wheel 10 increases.

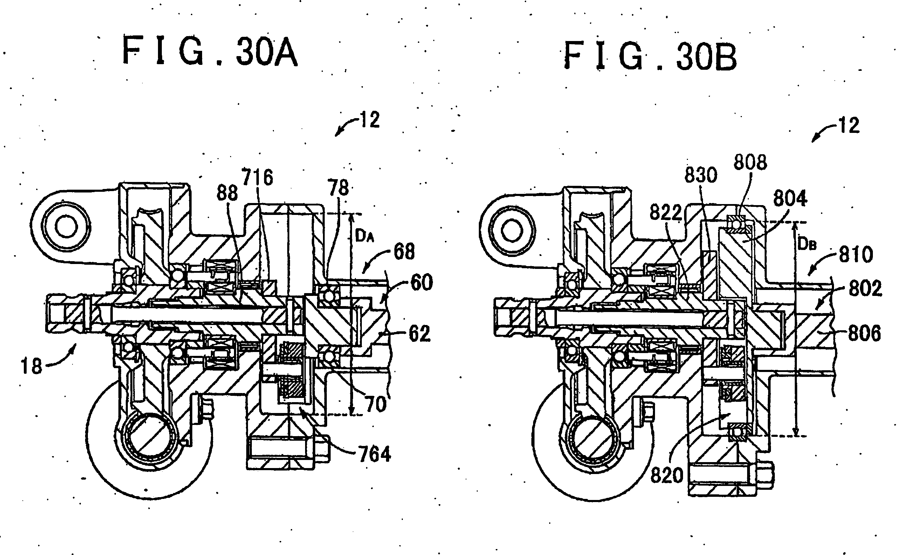

As mentioned above, according to this steering force transmission device 12 for a vehicle, the main shaft 54 as the second shaft has the shaft main body unit, and the extending portion 764 as a holding portion that extends from the front edge of the shaft main body portion in a direction where the protruding portion can move from a part of the area of the shaft main body portion in the circumferential direction. A device as a comparative example, in which the extending portion 804 of the lower shaft 802 constituting the second shaft, is formed in a disk shape, that is formed to be extended in the radial direction from the entire area in the circumferential direction of the shaft main body portion 806 of the lower shaft 802, just like the case of the steering force transmission device 12 according to the comparative example similar to the first embodiment, shown in FIG. 30B and the steering force transmission device 12 according to the eighth embodiment shown in FIG. 30A, will now be compared.

According to the steering force transmission device 12 of the comparative example, the lower shaft 802 is constructed such that the extending portion 804 thereof is held by the column tube 810 via the radial bearing 808. If the extending portion 804 is explained in more detail, this extending portion 804 is a disk-shaped flange portion, where the radial groove 820, extending in the radial direction, is formed on the front end face. The protruding portion of the input side shaft 822 constituting the first shaft engages with the radial groove 820 thereof, thereby linking the input side shaft 822 to the lower shaft 802. Here it is assumed that the shift amount between the rotation axes of these two shafts 802 and 822 is the same as the shift amount d between the rotation axes of the two shafts 60 and 88 of the steering force transmission device 12 of the eighth embodiment, and the offset between a position where the protruding portion engages in the radial groove 820 and the rotation axis of the input side shaft 822, is the same as offset L between a position where the protruding portion engages in the guide passage 714 and the rotation axis of the input side shaft 88 in the steering force transmission device 12 of the eighth embodiment. In other words, it is assumed that the steering force transmission device 12 of the comparative example has a control sensation the same as the steering force transmission devices 12 of the first embodiment to the eighth embodiment.

According to the steering force transmission device 12 of the eighth embodiment, the main shaft 54, which is the second shaft, is held by the small diameter portion 70 of the lower tube 68 via the bearing 78, in the shaft main body portion 62 of the lower shaft 60. Because of this, the extending portion 764 of the lower shaft 60 is disposed so as to extend only in a direction to allow movement of the protruding portion, from a part of the area of the shaft main body portion 62 in the circumferential direction. In other words, the steering force transmission device 12 of the eighth embodiment is the steering force transmission device 12 of the comparative example from which an unnecessary portion, from among the disk-shaped extending portion 804, is removed.

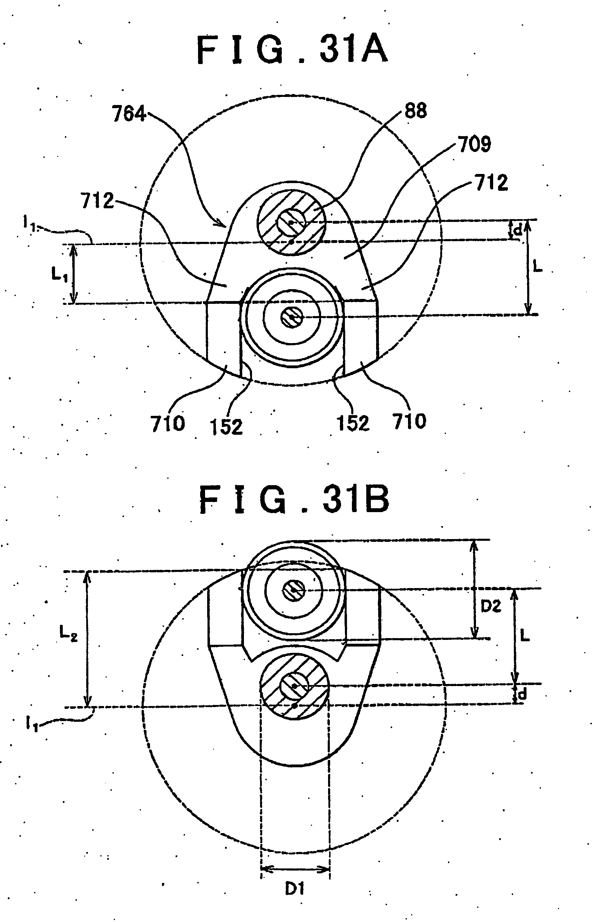

Now a method for determining the shape of the extending portion 764 according to the steering force transmission device 12 of the eighth embodiment will be described in detail. In the extending portion 764, the position and length of the pair of side wall faces 152 in the radial direction are determined considering the moving range of the protruding portion of the first shaft in the lower shaft 60 in the radial direction. In concrete terms, as FIG. 31A, corresponding to FIG. 29A, shows, the inner ends of the pair of side wall faces 152 in the radial direction are determined such that the distance L1 from the line I1, which passes through the rotation axis of the lower shaft 60 and is perpendicular to the moving direction of the protruding portion, is slightly shorter than the length resulting when the shift amount d, between the rotation axis of the input side shaft 88 and the rotation axis of the lower shaft 60, is subtracted from the offset L from the rotation axis of the input side shaft 88 of the protruding portion. In other words, the distance, L1 is set so as to satisfy the following expression (1).

$$L1 < L - d \qquad\qquad (1)$$

The outer ends of the pair of side wall faces 152 in the radial direction are determined such that the distance L2 from the line I1 becomes slightly longer than the length resulting when the shift amount d, between the rotation axes of the two shafts 60 and 88 is added to the offset L of the protruding portion, as shown in FIG. 31B corresponding to FIG. 29D. In other words, the distance L2 is set so as to satisfy the following expression (2).

$$L2 > L + d \qquad\qquad (2)$$

If it is considered that $L > (D1 + D2)/2$, where D1 denotes an outer diameter of the input side shaft 88 and D2 denotes an outer diameter of the protruding portion, then expression (2) can be expressed as follows.

$$L2 > (1 + e) \cdot (D1 + D2) / 2 \qquad\qquad (3)$$

In other words, the extending portion 764 of the lower shaft 60 is constructed so that when the protruding portion moves to a position most distant from the rotation axis of the lower shaft 60, the rotation center of the protruding portion at the position most distant from the rotation axis of the lower shaft 60 does not extend beyond the circle of a locus which is formed by the tip of the erected portion 710 in the radial direction, rotating with the rotation axis of the lower shaft 60 as the center (that is so that a part of the protruding portion positions inside the locus). The distance in the circumferential direction of each of the pair of erected portions 710, having the pair of side wall faces 152, is determined considering the force that acts between the pair of erected portions 710 and the protruding portion by the steering force applied to the steering wheel 10.

The two arm portions 712 are connected to the linking portions 709 of the extending portion 764 so as to link the pair of erected portions 710 and the shaft main body portion 62 of the lower shaft 60 determined as mentioned above.

As described above, according to the steering force transmission device 12 of the eighth embodiment, the size of the extending portion 764 of the lower shaft 60 is a minimum size required for transmitting rotation between the lower shaft 60 and the input side shaft 88, while changing the rotation phase difference of these two shafts 60 and 88. This means that the weight of the main shaft 54, that is the second shaft of this steering force transmission device 12, is lower than the steering force transmission device 12 of the comparative example. Therefore the weight of this steering force transmission device 12 itself is lighter. The decrease of weight of the main shaft 54 decreases the moment of inertia of the main shaft 54, and improves the control sensation of the driver.

Furthermore according to this steering force transmission device 12, the extending plate 116, that extends from the rear edge of the output shaft 18, which is the first shaft, in the radial direction, does not extend from the entire area of the shaft main body portion of the output shaft 18 in the circumferential direction, but extends from a part of an area in the circumferential direction only to a predetermined direction, as the two-dot chain line in FIG. 27 shows. Therefore according to the steering force transmission device 12 of this embodiment, the extending plate 116 is smaller than the ring formed extending portion 830 of the steering force transmission device 12 of the comparative example, so not only the weight of the main shaft 54, that is the second shaft, is decreased, as mentioned above, but the weight of the output shaft 18, that is the first shaft, is also decreased.

Furthermore the bearing 78 is disposed between the shaft main body portion 62 and the small diameter portion 70 of the lower tube 68, in other words, outside of the extending portion 764 in the radial direction is not held by the bearing 78, but is held by the bearing 78 of the shaft main body portion 62 so as to be rotatable, so the diameter DA in the portion linking the two shafts 60 and 88 in the steering force transmission device 12 of this embodiment is smaller than the diameter DB in the portion linking the two shafts 802 and 822 of the steering force transmission device 12 of the comparative example. As described above, the steering force transmission device 12 of this embodiment is downsized in the direction perpendicular to the rotation axis (radial direction) and therefore can be more easily mounted in a vehicle, compared with a steering force transmission device 12 having a similar control sensation. For reducing the weight of at least one of the main shaft 54 and the output shaft 18, the features of the eighth embodiment may be combined to the structures of the first to seventh embodiments respectively.

For the eighth embodiment, weight of the main shaft 54, which is the second shaft, or weight of the output shaft 18, which is the first shaft, of the steering force transmission device for a vehicle, that changes the rotation phase difference between the first shaft and the second shaft, can be decreased if at least the following configuration is implemented. Therefore if the object is to decrease the weight, the following configuration, without the elastic body and smoothing element, can be used.

The steering force transmission device includes: (i) a steering control member that is controlled by a driver; a steering device that steers wheels; (ii) a first shaft of which one edge is linked to one of the steering control member and the steering device, and which is installed to be rotatable; and (iii) a second shaft of which one edge is linked to the other of the steering control member and the steering device, and is installed to be rotatable in a state where a rotation axis of the first shaft and a rotation axis of the second shaft are in parallel, and these rotation axes are shifted by a predetermined distance, wherein the first shaft includes (i) a first shaft main body portion, (ii) a first shaft collar portion that is integrated with the edge at the second shaft side of the first shaft main body portion, and protrudes in a radial direction of the first shaft from the first shaft main body portion, and (iii) a protruding portion that is disposed in a position that is distant from the rotation axis of the first shaft in a radial direction of the first shaft by more than the predetermined distance, and protrudes toward the second shaft side in the rotation axis direction, that is an extending direction of the rotation axes of the first shaft and the second shaft, and the second shaft further includes (i) a second shaft main body portion, (ii) a second shaft collar portion that is integrated with an edge at the first shaft side of the second shaft main body portion, and protrudes in a radial direction of the second shaft from the second shaft main body portion, and (iii) a guide passage that opens in an end face at the first shaft side of the second shaft collar portion, and is disposed extending in the radial direction of the second shaft, and includes a pair of side wall faces that sandwich the protruding portion, so that the protruding portion of the first shaft is engaged and the protruding portion can move in the radial direction of the second shaft, wherein the first shaft collar portion is a first extending portion that extends out only from a part of an outer surface of the first shaft main body portion in the circumferential direction, or the second shaft collar portion is a second extending portion that extends out only from a part of an outer surface of the second shaft main body portion in the circumferential direction, and the second extending portion includes a pair of erected portions, and the pair of side wall faces arc surfaces facing each other of the pair of erected portions.

A steering force transmission device (12) has: a first shaft; a second shaft that is disposed in a state of shifting, by a predetermined distance, from the first shaft; a protruding portion that protrudes in a rotation axis direction of the first shaft; and a guide passage (150, 714) that is formed in the edge of the second shaft, the protruding portion being engaged in the guide passage (150, 714). The protruding portion includes a base body The base body or the guide passage (150, 714) includes an elastic body and a smoothing member that is urged by the elastic force of the elastic body.

**Claims**

1. A steering force transmission device for a vehicle, comprising:

   a steering control member (10) that is controlled by a driver;
   a steering device (14) that steers a wheel;
   a first shaft (18) that is linked to one of the steering control member (10) and the steering device (14), and is installed to be rotatable; and
   a second shaft (54) that is linked to the other of the steering control member (10) and the steering device (14), and is installed to be rotatable in a state where a rotation axis of the first shaft and a rotation axis of the second shaft are in parallel and the rotation axes are shifted by a predetermined distance, wherein
   the first shaft comprises:
   (i) a first shaft main body portion, (ii) a first shaft collar portion (116, 716) that is integrally formed with an edge on the second shaft side of the first shaft main body portion, and protrudes in a radial direction of the first shaft from the first shaft main body portion, and (iii) a protruding portion (122, 138, 140) that is disposed in a position at a distance, by more than the predetermined distance, from the rotation axis of the first shaft in the radial direction of the first shaft, and protrudes from the first shaft collar portion (116, 716) toward the second shaft in a rotation axis direction that is an extending direction of the rotation axis of the first shaft, and
   the second shaft comprises (i) a second shaft main body portion (62), (ii) a second shaft collar portion (64, 764) that is integrally formed with an edge on the first shaft side of the second shaft main body portion (62), and protrudes in a radial direction of the second shaft from the second shaft main body portion (62), and (iii) a guide passage (150, 714) that opens in an end face on the first shaft side of the second shaft collar portion (64, 764), and is provided extending in the radial direction of the second shaft, and includes a pair of side wall faces (152) sandwiching the protruding portion, so that the protruding portion of the first shaft is engaged and the protruding portion moves in the radial direction of the second shaft, wherein
   the protruding portion (122, 138, 140) disposed in the first shaft includes (i) a base body (122) that rotates relative to the first shaft collar portion (116, 716), **characterized in that**
   the protruding portion or the guide passage (150, 714) includes (ii) a first elastic body (138, 426, 624) and (iii) a first smoothing member (140, 428, 626) that is supported by the first elastic body (138, 426, 624), and is urged by an elastic force of the first elastic body (138, 426, 624), and wherein
   the first smoothing member (140, 428, 626) is configured so as to contact the protruding portion or at least one of the side wall faces (152) by being urged by the first elastic body (138, 426, 624).

2. The steering force transmission device for a vehicle according to claim 1, wherein
   the protruding portion disposed in the first shaft includes all of (i) the base body, (ii) the first elastic body (138, 426) and (iii) the first smoothing member (140, 428),
   the first elastic body (138, 426) is held by the base body, and
   the first smoothing member (140, 428) contacts both of the pair of the side wall faces (152) of the guide passage (150, 714) in a state of being urged by the elastic force of the first elastic body (138, 426).

3. The steering force transmission device for a vehicle according to claim 1 or 2, further comprising
   a rotation transmission mechanism that is configured such that a change in an engaging state of the protruding portion and the guide passage (150, 714) due to a rotation of one of the first shaft and the second shaft causes the other of the shafts to rotate while changing a difference in rotation phases between the first shaft and the second shaft.

4. The steering force transmission device for a vehicle according to any one of claims 1 to 3, wherein
an outer surface of the base body has a cylindrical shape,
the first elastic body (138) is held on the outer surface of the base body and has a ring shape, and
the first smoothing member (140) is externally inserted into the first elastic body (138), and has a ring shape.

5. The steering force transmission device for a vehicle according to claim 4, wherein
a first cylindrical face (128) and a second cylindrical face (130) having a smaller diameter than the first cylindrical face (128) are formed on the outer surface of the base body, and
the first elastic body (138) is held by the second cylindrical face (130).

6. The steering force transmission device for a vehicle according to claim 5, wherein
if a rotation torque transmitted from one of the first shaft and the second shaft to the other of the shafts is larger than a predetermined rotation torque, a part of the first smoothing member (140) moves toward the second cylindrical face (130) of the base body, and the protruding portion rotates in a state of the first cylindrical face (128) of the base body contacting one of the pair of side wall faces (152).

7. The steering force transmission device for a vehicle according to claim 6, wherein
the base body includes a first cylindrical member (124) including a step face (132) connecting the first cylindrical face (128) and the second cylindrical face (130), and a second cylindrical member (126) that is coaxially secured to the first cylindrical member (124),
the base body includes a first circumferential groove (136) that is sectioned by the second cylindrical face (130) and the step face (132) of the first cylindrical member (124), and the second cylindrical member (126), and
the first elastic body (138) is disposed in the first circumferential groove (136).

8. The steering force transmission device for a vehicle according to claim 7, wherein
an outer diameter of an outer surface of one of the first cylindrical member (124) and the second cylindrical member (126) is smaller than an outer diameter of an outer surface of the other of the cylindrical members.

9. The steering force transmission device for a vehicle according to claim 8, wherein
if a force exceeding a predetermined level acts on one of the first cylindrical member (124) and the second cylindrical member (126), the first cylindrical member (124) and the second cylindrical member (126) separate.

10. The steering force transmission device for a vehicle according to claim 9, wherein
one of the first cylindrical member (124) and the second cylindrical member (126) is disposed at a position closer to the first shaft collar portion (116) than the other of the cylindrical members.

11. The steering force transmission device for a vehicle according to claim 10, wherein
the first shaft collar portion (116), on which the base body including the first cylindrical member (124) and the second cylindrical member (126) is disposed, is located under the second shaft collar portion (64) on which the guide passage (150) is disposed, and
a separated cylindrical member, from among the first cylindrical member (124) and the second cylindrical member (126), moves toward the first shaft collar portion (116).

12. The steering force transmission device for a vehicle according to claim 7, wherein
the base body further includes a third cylindrical member (208) that is coaxially secured to the first cylindrical member (124),
the base body includes a second circumferential groove (210) sectioned by the first cylindrical member (124), the second cylindrical member (126) and the third cylindrical member (208), and
a second elastic body (214) is disposed in the second circumferential groove (210).

13. The steering force transmission device for a vehicle according to any one of claims 2 to 12, wherein
at least one of an opening peripheral portion (154) of the pair of side wall faces (152), positioned at an end of the pair of the side wall faces (152) in a rotation axis direction of the second shaft, and an edge (156) of an outer surface of the first smoothing member (140), positioned on the second shaft side, is tapered.

14. The steering force transmission device for a vehicle according to claim 2, wherein
the guide passage (150) has an opening edge (155) that opens toward outside in the radial direction of the second shaft,

the guide passage (150) includes:

a first passage portion, for which a distance between the pair of side wall faces (152) is set to be smaller than an outer diameter of the protruding portion, the first passage portion controlling displacement of the protruding portion in a circumferential direction of the second shaft; and
a second passage portion that is disposed in an area from the first passage portion to the opening edge (155), and for which a distance between the pair of side wall faces (152) is set to be greater than the outer diameter of the protruding portion.

15. The steering force transmission device for a vehicle according to claim 14, wherein
the protruding portion moves within a range of the first passage portion when, due to rotation of one of the first shaft and the second shaft, the other of the shafts rotates.

16. The steering force transmission device for a vehicle according to claim 15, wherein
the first passage portion (157) is set such that the distance between the pair of side wall faces (152) gradually increases toward the second passage portion (158), and
the protruding portion moves within a range up to a boundary between the first passage portion (157) and the second passage portion (158) when, due to rotation of one of the first shaft and the second shaft, the other of the shafts rotates, or, wherein
at least a part (308) of the first passage portion is set such that the distance between the pair of side wall faces (152) is fixed, and
at least a part (308) of the second passage portion is set such that the distance between the pair of side wall faces (152) increases toward the opening edge (155) from the first passage portion.

17. The steering force transmission device for a vehicle according to any one of claims 14 to 16, further comprising:

a first shaft housing (84) that rotatably holds the first shaft therein; and
a second shaft housing (56) that rotatably holds the second shaft therein, wherein
an edge of the first shaft housing (84) is joined with an edge of the second shaft housing (56), and
the protruding portion of the first shaft entirely protrudes from the edge of the first shaft housing (84) joined with the second shaft housing (56), in the rotation axis direction.

18. The steering force transmission device for a vehicle according to claim 17, wherein
the protruding portion is inserted from outside the second shaft collar portion (64) in the radial direction to the second passage portion via the opening edge (155) of the guide passage (150).

19. The steering force transmission device for a vehicle according to claim 1, wherein
the protruding portion includes a pair of contact faces that rotate relative to the first shaft collar portion (116), and that face the pair of side wall faces (152), and
when, due to rotation of one of the first shaft and the second shaft, the other of the shafts rotates, the protruding portion slides in the guide passage (150) in a state where at least one contact face from among the pair of contact faces is in contact with one side wall face (152) from among the pair of side wall faces.

20. The steering force transmission device for a vehicle according to claim 19, wherein
at least one of the pair of contact faces and the pair of side wall faces (152) includes the first smoothing member (428, 626).

21. The steering force transmission device for a vehicle according to claim 19 or 20, wherein
when, due to rotation of one of the first shaft and the second shaft, the other of the shafts rotates, the protruding portion slides in the guide passage (150) in a state where each of the contact faces is in contact with each of the side wall faces (152) respectively.

22. The steering force transmission device for a vehicle according to any one of claims 19 to 21, further comprising:

a second elastic body (426); and
a second smoothing member (428), wherein
the first elastic body (426), the second elastic body (426), the first smoothing member (428) and the second smoothing member (428) are in a plate shape respectively,

the base body of the protruding portion is disposed rotatably between the first smoothing member (428) and the second smoothing member (428),
the first elastic body (426) is disposed between the base body and the first smoothing member (428),
the second elastic body (426) is disposed between the base body and the second smoothing member (428),
the first smoothing member (428) contacts one side wall face (152) of the pair of side wall faces (152) by being urged by each of the elastic members, and
the second smoothing member (428) contacts the other side wall face (152) of the pair of side wall faces (152) by being urged by each of the elastic members;
or, further comprising:
a second elastic body (624); and
a second smoothing member (626), wherein
the first elastic body (624), the second elastic body (624), the first smoothing member (626) and the second smoothing member (626) are in a plate shape respectively,
the base body of the protruding portion is disposed rotatably between the first smoothing member (626) and the second smoothing member (626),
a radial recess portion (622) that is open toward the first shaft side and that extends in the radial direction of the second shaft, is provided in an end face of the second shaft collar portion (64),
the first smoothing member (626) and the second smoothing member (626) are disposed in the radial recess portion (622) in an extending direction of the radial recess portion (622),
the first elastic body (624) is disposed between the first smoothing member (626) and one wall face of the radial recess portion (622),
the second elastic body (624) is disposed between the second smoothing member (626) and the other wall face of the radial recess portion (622), and
the first smoothing member (626) and the second smoothing member (626) are urged by each of the elastic members so as to contact the pair of contact faces of the base body respectively.

23. The steering force transmission device for a vehicle according to any one of claims 1 to 22, wherein
the first shaft collar portion (716) is a first extending portion (716) that extends out only from a part of an outer surface of the first shaft main body portion in a circumferential direction.

24. The steering force transmission device for a vehicle according to any one of claims 1 to 23, wherein
the second shaft collar portion (764) is a second extending portion (764) that extends out only from a part of an outer surface of the second shaft main body portion (62) in a circumferential direction,
the second extending portion (764) includes a pair of erected portions (710), and
the pair of side wall faces (152) are surfaces facing each other of the pair of erected portions (710).

25. The steering force transmission device for a vehicle according to claim 24, wherein
the second extending portion (764) includes a pair of arm portions (712),
the erected portions (710) are erected from the pair of arm portions (712) toward the first shaft, and
the surfaces facing each other of the pair of erected portions (710) extend in parallel.

26. The steering force transmission device for a vehicle according to claim 24 or 25, wherein
when the protruding portion moves to a position most distant from the rotation axis of the second shaft, a position of a tip of the erected portion (710) is set so that at least a part of the protruding portion positions inside a rotation locus, centering around the rotation axis of the second shaft at the tip of the erected portion (710) in the radial direction of the second shaft.

27. The steering force transmission device for a vehicle according to any one of claims 24 to 26, wherein
the second shaft main body portion (62) is rotatably held by a bearing (78), and the bearing (78) is not disposed outside the second extending portion (764) in the radial direction.

**Patentansprüche**

1. Lenkkraftübertragungsvorrichtung für ein Kraftfahrzeug mit:

einem Lenksteuerelement (10), das durch einen Fahrer gesteuert wird;
einer Lenkvorrichtung (14), die ein Rad lenkt;

einer ersten Welle (18), die mit entweder dem Lenksteuerelement (10) oder der Lenkvorrichtung (14) verbunden ist und so eingebaut ist, dass sie drehbar ist; und

einer zweiten Welle (54), die mit dem anderen Element, d.h. der Lenkvorrichtung (14) oder dem Lenksteuerelement (10), verbunden ist und so eingebaut ist, dass sie in einem Zustand drehbar ist, in welchem eine Drehachse der ersten Welle und eine Drehachse der zweiten Welle parallel sind und die Drehachsen um einen vorbestimmten Abstand versetzt sind; wobei

die erste Welle folgendes aufweist:

(i) einen ersten Wellenhauptkörperabschnitt,

(ii) einen ersten Wellenkragenabschnitt (116, 716), der mit einem Rand an der zu der zweiten Welle hin weisenden Seite des ersten Wellenhauptkörperabschnittes einstückig ausgebildet ist und in einer radialen Richtung der ersten Welle von dem ersten Wellenhauptkörperabschnitt vorragt, und

(iii) einen vorragenden Abschnitt (122, 138, 140), der an einer Position bei einem Abstand, der größer als der vorbestimmte Abstand ist, von der Drehachse der ersten Welle in der radialen Richtung der ersten Welle angeordnet ist und von dem ersten Wellenkragenabschnitt (116, 716) zu der zweiten Welle hin in einer Drehachsenrichtung vorragt, die eine Erstreckungsrichtung der Drehachse der ersten Welle ist, und

die zweite Welle folgendes aufweist:

(i) einen zweiten Wellenhauptkörperabschnitt (62), t

(ii) einen zweiten Wellenkragenabschnitt (64, 764), der mit einem Rand an der zu der ersten Welle hin weisenden Seite des zweiten Wellenhauptkörperabschnittes (62) einstückig ausgebildet ist und in einer radialen Richtung der zweiten Welle von dem zweiten Wellenhauptkörperabschnitt (62) vorragt, und

(iii) einen Führungskanal (150, 714), der an einer Endseite an der zu der ersten Welle hin weisenden Seite des zweiten Wellenkragenabschnittes (64, 764) offen ist und so vorgesehen ist, dass er sich in der radialen Richtung der zweiten Welle erstreckt, und ein Paar an Seitenwandflächen (152) aufweist, die den vorragenden Abschnitt sandwichartig anordnen, so dass der vorragende Abschnitt der ersten Welle in Eingriff steht und der vorragende Abschnitt sich in der radialen Richtung der zweiten Welle bewegt, wobei

der vorragende Abschnitt (122, 138, 140), der in der ersten Welle angeordnet ist, (i) einen Basiskörper (122) aufweist, der sich relativ zu dem ersten Wellenkragenabschnitt (116, 716) dreht,

**dadurch gekennzeichnet, dass**

der vorragende Abschnitt oder der Führungskanal (150, 714) aufweist: (ii) einen ersten elastischen Körper (138, 426, 624) und (iii) ein erstes Glattheitselement (140, 428, 626), das durch den ersten elastischen Körper (138, 426, 624) gestützt ist und durch eine elastische Kraft des ersten elastischen Körpers (138, 426, 624) gedrängt wird, und wobei

das erste Glattheitselement (140, 428, 626) so aufgebaut ist, dass es mit dem vorragenden Abschnitt oder zumindest einer der Seitenwandflächen (152) in Kontakt steht, indem es durch den ersten elastischen Körper (138, 426, 624) gedrängt wird.

2. Lenkkraftübertragungsvorrichtung für ein Kraftfahrzeug gemäß Anspruch 1, wobei

der vorragende Abschnitt, der in der ersten Welle angeordnet ist, sämtliche folgende Elemente aufweist: (i) den Basiskörper, (ii) den ersten elastischen Körper (138, 426) und (iii) das erste Glattheitselement (140, 428),

der erste elastische Körper (138, 426) durch den Basiskörper gehalten wird, und

das erste Glattheitselement (140, 428) mit beiden Elementen des Paares der Seitenwandflächen (152) des Führungskanals (150, 714) in einem Zustand in Kontakt steht, in dem es durch die elastische Kraft des ersten elastischen Körpers (138, 426) gedrängt wird.

3. Lenkkraftübertragungsvorrichtung für ein Kraftfahrzeug gemäß Anspruch 1 oder 2, die des Weiteren folgendes aufweist:

einen Drehübertragungsmechanismus, der derart aufgebaut ist, dass eine Änderung im Eingriffszustand des vorragenden Abschnittes und des Führungskanals (150, 714) aufgrund einer Drehung entweder der ersten Welle oder der zweiten Welle bewirkt, dass die andere Welle der Wellen sich dreht, während sich eine Differenz in den Drehphasen zwischen der ersten Welle und der zweiten Welle ändert.

4. Lenkkraftübertragungsvorrichtung für ein Kraftfahrzeug gemäß einem der Ansprüche 1 bis 3, wobei

eine Außenfläche des Basiskörpers eine zylindrische Form hat,

der erste elastische Körper (138) an der Außenfläche des Basiskörpers gehalten wird und eine Ringform hat, und

das erste Glattheitselement (140) extern in den ersten elastischen Körper (138) eingeführt ist und eine Ringform hat.

5. Lenkkraftübertragungsvorrichtung für ein Kraftfahrzeug gemäß Anspruch 4, wobei

EP 2 177 420 B1

eine erste zylindrische Fläche (128) und eine zweite zylindrische Fläche (130), die einen kleineren Durchmesser als die erste zylindrische Fläche (128) hat, an der Außenfläche des Basiskörper ausgebildet sind, und der erste elastische Körper (138) durch die zweite zylindrische Fläche (130) gehalten wird.

6. Lenkkraftübertragungsvorrichtung für ein Kraftfahrzeug gemäß Anspruch 5, wobei wenn ein Drehmoment, das von entweder der ersten Welle oder der zweiten Welle zu der anderen Welle der Wellen übertragen wird, größer als ein vorbestimmtes Drehmoment ist, ein Teil des ersten Glattheitselementes (140) sich zu der zweiten zylindrischen Fläche (130) des Basiskörpers bewegt, und der vorragende Abschnitt sich in einem Zustand dreht, bei dem die erste zylindrische Fläche (128) des Basiskörpers mit einem Element des Paares der Seitenwandflächen (152) in Kontakt steht.

7. Lenkkraftübertragungsvorrichtung für ein Kraftfahrzeug gemäß Anspruch 6, wobei der Basiskörper ein erstes zylindrisches Element (124), das eine Absatzfläche (132) aufweist, die die erste zylindrische Fläche (128) und die zweite zylindrische Fläche (130) verbindet, und ein zweites zylindrisches Element (126) aufweist, das koaxial an dem ersten zylindrischen Element (124) gesichert ist, der Basiskörper eine erste Umfangsnut (136) aufweist, die durch die zweite zylindrische Fläche (130) und die Absatzfläche (132) des ersten zylindrischen Elementes (124) und das zweite zylindrische Element (126) in Abschnitte geteilt ist, und der erste elastische Körper (138) in der ersten Umfangsnut (136) angeordnet ist.

8. Lenkkraftübertragungsvorrichtung für ein Kraftfahrzeug gemäß Anspruch 7, wobei ein Außendurchmesser einer Außenfläche entweder des ersten zylindrischen Elementes (124) oder des zweiten zylindrischen Elementes (126) kleiner als ein Außendurchmesser einer Außenfläche des anderen Elementes der zylindrischen Elemente ist.

9. Lenkkraftübertragungsvorrichtung für ein Kraftfahrzeug gemäß Anspruch 8, wobei wenn eine Kraft, die eine vorbestimmte Höhe überschreitet, auf entweder das erste zylindrische Element (124) oder das zweite zylindrische Element (126) einwirkt, das erste zylindrische Element (124) und das zweite zylindrische Element (126) separiert werden.

10. Lenkkraftübertragungsvorrichtung für ein Kraftfahrzeug gemäß Anspruch 9, wobei entweder das erste zylindrische Element (124) oder das zweite zylindrische Element (126) an einer Position angeordnet ist, die näher zu dem ersten Wellenkragenabschnitt (116) als das andere Element der zylindrischen Elemente ist.

11. Lenkkraftübertragungsvorrichtung für ein Kraftfahrzeug gemäß Anspruch 10, wobei der erste Wellenkragenabschnitt (116), an dem der Basiskörper, der das erste zylindrische Element (124) und das zweite zylindrische Element (126) hat, angeordnet ist, unter dem zweiten Wellenkragenabschnitt (64) angeordnet ist, an dem der Führungskanal (150) angeordnet ist, und ein separates zylindrisches Element von dem ersten zylindrischen Element (124) und dem zweiten zylindrischen Element (126) sich zu dem ersten Wellenkragenabschnitt (116) bewegt.

12. Lenkkraftübertragungsvorrichtung für ein Kraftfahrzeug gemäß Anspruch 7, wobei der Basiskörper des Weiteren ein drittes zylindrisches Element (208) aufweist, das koaxial an dem ersten zylindrischen Element (124) gesichert ist, wobei der Basiskörper eine zweite Umfangsnut (210) aufweist, die durch das erste zylindrische Element (124), das zweite zylindrische Element (126) und das dritte zylindrische Element (208) in Sektionen geteilt ist, und ein zweiter elastischer Körper (214) in der zweiten Umfangsnut (210) angeordnet ist.

13. Lenkkraftübertragungsvorrichtung für ein Kraftfahrzeug gemäß einem der Ansprüche 2 bis 12, wobei zumindest entweder ein Öffnungsumfangsabschnitt (154) des Paares der Seitenwandflächen (152), der an einem Ende des Paares der Seitenwandflächen (152) in einer Drehachsenrichtung der zweiten Welle positioniert ist, und / oder ein Rand (156) einer Außenfläche des ersten Glattheitselementes (140), der an der Seite der zweiten Welle positioniert ist, abgeschrägt ist.

14. Lenkkraftübertragungsvorrichtung für ein Kraftfahrzeug gemäß Anspruch 2, wobei der Führungskanal (150) einen Öffnungsrand (155) hat, der zu der Außenseite hin in der radialen Richtung der zweiten Welle offen ist,

32

wobei der Führungskanal (150) folgendes aufweist:

einen ersten Kanalabschnitt, für den ein Abstand zwischen dem Paar der Seitenwandflächen (152) so festgelegt ist, dass er kleiner als ein Außendurchmesser des vorragenden Abschnittes ist, wobei der erste Kanalabschnitt den Versatz des vorragenden Abschnittes in einer Umfangsrichtung der zweiten Welle steuert; und
einen zweiten Kanalabschnitt, der in einem Bereich von dem ersten Kanalabschnitt zu dem Öffnungsrand (155) angeordnet ist und für den ein Abstand zwischen dem Paar an Seitenwandflächen (152) so festgelegt ist, dass er größer als der Außendurchmesser des vorragenden Abschnittes ist.

15. Lenkkraftübertragungsvorrichtung für ein Kraftfahrzeug gemäß Anspruch 14, wobei
der vorragende Abschnitt sich innerhalb eines Bereiches des ersten Kanalabschnittes bewegt, wenn, aufgrund einer Drehung entweder der ersten Welle oder der zweiten Welle, die andere Welle der Wellen sich dreht.

16. Lenkkraftübertragungsvorrichtung für ein Kraftfahrzeug gemäß Anspruch 15, wobei
der erste Kanalabschnitt (157) derart festgelegt ist, dass der Abstand zwischen dem Paar an Seitenwandflächen (152) zu dem zweiten Kanalabschnitt (158) hin allmählich zunimmt, und
der vorragende Abschnitt sich innerhalb eines Bereiches bis zu einer Grenze zwischen dem ersten Kanalabschnitt (157) und dem zweiten Kanalabschnitt (158) bewegt, wenn, aufgrund einer Drehung entweder der ersten Welle oder der zweiten Welle, die andere Welle der Wellen sich dreht, oder wobei
zumindest ein Teil (308) des ersten Kanalabschnittes derart festgelegt ist, dass der Abstand zwischen dem Paar an Seitenwandflächen (152) fixiert ist, und
zumindest ein Teil (308) des zweiten Kanalabschnittes derart festgelegt ist, dass der Abstand zwischen dem Paar an Seitenwandflächen (152) zu dem Öffnungsrand (155) hin von dem ersten Kanalabschnitt zunimmt.

17. Lenkkraftübertragungsvorrichtung für ein Kraftfahrzeug gemäß einem der Ansprüche 14 bis 16, die des Weiteren folgendes aufweist:

ein erstes Wellengehäuse (84), das drehbar in ihm die erste Welle hält; und
ein zweites Wellengehäuse (56), das drehbar in ihm die zweite Welle hält, wobei
ein Rand des ersten Wellengehäuses (84) mit einem Rand des zweiten Wellengehäuses (56) verbunden ist, und
der vorragende Abschnitt der ersten Welle gänzlich von dem Rand des ersten Wellengehäuses (84), das mit dem zweiten Wellengehäuse (56) verbunden ist, in der Drehachsenrichtung vorragt.

18. Lenkkraftübertragungsvorrichtung für ein Kraftfahrzeug gemäß Anspruch 17, wobei
der vorragende Abschnitt von der Außenseite des zweiten Wellenkragenabschnittes (64) in der radialen Richtung zu dem zweiten Kanalabschnitt über den Öffnungsrand (155) des Führungskanals (150) eingeführt ist.

19. Lenkkraftübertragungsvorrichtung für ein Kraftfahrzeug gemäß Anspruch 1, wobei
der vorragende Abschnitt ein Paar an Kontaktflächen aufweist, die sich relativ zu dem ersten Wellenkragenabschnitt (116) drehen und die dem Paar der Seitenwandflächen (152) zugewandt sind, und
wenn, aufgrund der Drehung entweder der ersten Welle oder der zweiten Welle, die andere Welle der Wellen sich dreht, der vorragende Abschnitt in dem Führungskanal (150) in einem Zustand gleitet, bei dem zumindest eine Kontaktfläche von dem Paar an Kontaktflächen mit einer Seitenwandfläche (152) von dem Paar an Seitenwandflächen in Kontakt steht.

20. Lenkkraftübertragungsvorrichtung für ein Kraftfahrzeug gemäß Anspruch 19, wobei
zumindest eine aus dem Paar an Kontaktflächen und dem Paar an Seitenwandflächen (152) das erste Glattheitselement (428, 626) aufweist.

21. Lenkkraftübertragungsvorrichtung für ein Kraftfahrzeug gemäß Anspruch 19 oder 20, wobei
wenn, aufgrund der Drehung entweder der ersten Welle oder der zweiten Welle, die andere Welle der Wellen sich dreht, der vorragende Abschnitt in dem Führungskanal (150) in einem Zustand gleitet, bei dem jede der Kontaktflächen mit einer jeweiligen der Seitenwandflächen (152) in Kontakt steht.

22. Lenkkraftübertragungsvorrichtung für ein Kraftfahrzeug gemäß einem der Ansprüche 19 bis 21, die des Weiteren folgendes aufweist:

einen zweiten elastischen Körper (426); und

ein zweites Glattheitselement (428), wobei

der erste elastische Körper (426), der zweite elastische Körper (426), das erste Glattheitselement (428) und das zweite Glattheitselement (428) jeweils in einer Plattenform sind,

der Basiskörper des vorragenden Abschnittes drehbar zwischen dem ersten Glattheitselement (428) und dem zweiten Glattheitselement (428) angeordnet ist,

der erste elastische Körper (426) zwischen dem Basiskörper und dem ersten Glattheitselement (428) angeordnet ist,

der zweite elastische Körper (426) zwischen dem Basiskörper und dem zweiten Glattheitselement (428) angeordnet ist,

das erste Glattheitselement (428) mit einer Seitenwandfläche (152) des Paares an Seitenwandflächen (152) in Kontakt steht, indem es durch jedes der elastischen Elemente gedrängt wird, und

das zweite Glattheitselement (428) mit der anderen Seitenwandfläche (152) des Paares an Seitenwandflächen (152) in Kontakt steht, indem es durch jedes der elastischen Elemente gedrängt wird; oder die des Weiteren folgendes aufweist:

einen zweiten elastischen Körper (624); und

ein zweites Glattheitselement (626), wobei

der erste elastische Körper (624), der zweite elastische Körper (624), das erste Glattheitselement (626) und das zweite Glattheitselement (626) jeweils in einer Plattenform sind,

der Basiskörper des vorragenden Abschnittes drehbar zwischen dem ersten Glattheitselement (626) und dem zweiten Glattheitselement (626) angeordnet ist,

ein radialer Vertiefungsabschnitt (622), der zu der Seite der ersten Welle hin offen ist und der sich in der radialen Richtung der zweiten Welle erstreckt, an einer Endfläche des zweiten Wellenkragenabschnittes (64) vorgesehen ist,

das erste Glattheitselement (626) und das zweite Glattheitselement (626) in dem radialen Vertiefungsabschnitt (622) in einer Erstreckungsrichtung des radialen Vertiefungsabschnittes (622) angeordnet sind,

der erste elastische Körper (624) zwischen dem ersten Glattheitselement (626) und einer Wandfläche des radialen Vertiefungsabschnittes (622) angeordnet ist,

der zweite elastische Körper (624) zwischen dem zweiten Glattheitselement (626) und der anderen Wandfläche des radialen Vertiefungsabschnittes (622) angeordnet ist, und

das erste Glattheitselement (626) und das zweite Glattheitselement (626) durch ein jeweiliges der elastischen Elemente so gedrängt werden, dass sie mit den Paar an Kontaktflächen der Basiskörper jeweils in Kontakt gelangen.

23. Lenkkraftübertragungsvorrichtung für ein Kraftfahrzeug gemäß einem der Ansprüche 1 bis 22, wobei der erste Wellenkragenabschnitt (716) ein erster Erstreckungsabschnitt (716) ist, der sich lediglich von einem Teil einer Außenfläche des ersten Wellenhauptkörperabschnittes in einer Umfangsrichtung nach außen erstreckt.

24. Lenkkraftübertragungsvorrichtung für ein Kraftfahrzeug gemäß einem der Ansprüche 1 bis 23, wobei der zweite Wellenkragenabschnitt (764) ein zweiter Erstreckungsabschnitt (764) ist, der sich lediglich von einem Teil einer Außenfläche des zweiten Wellenhauptkörperabschnittes (62) in einer Umfangsrichtung nach außen erstreckt,

wobei der zweite Erstreckungsabschnitt (764) ein Paar an aufgerichteten Abschnitten (710) aufweist, und das Paar an Seitenwandflächen (152) Oberflächen hat, die einem des Paares der aufgerichteten Abschnitte (710) jeweils zugewandt sind.

25. Lenkkraftübertragungsvorrichtung für ein Kraftfahrzeug gemäß Anspruch 24, wobei der zweite Erstreckungsabschnitt (764) ein Paar an Armabschnitten (712) aufweist,

wobei die aufgerichteten Abschnitte (710) von dem Paar an Armabschnitten (712) zu der ersten Welle hin aufgerichtet sind, und

die Oberflächen, die einem jeweiligen des Paares an aufgerichteten Abschnitten (710) zugewandt sind, sich parallel erstrecken.

26. Lenkkraftübertragungsvorrichtung für ein Kraftfahrzeug gemäß Anspruch 24 oder 25, wobei wenn der vorragende Abschnitt sich zu einer Position bewegt, die am Weitesten entfernt von der Drehachse der zweiten Welle ist, eine Position eines Endstücks des aufgerichteten Abschnittes (710) so festgelegt ist, dass zumindest ein Teil des vorragenden Abschnittes im Inneren einer Drehortskurve positioniert ist, die um die Drehachse der zweiten Welle an einem Endstück des aufgerichteten Abschnittes (710) in der radialen Richtung der zweiten Welle ausgemittelt ist.

**27.** Lenkkraftübertragungsvorrichtung für ein Kraftfahrzeug gemäß einem der Ansprüche 24 bis 26, wobei der zweite Wellenhauptkörperabschnitt (62) durch ein Lager (78) drehbar gehalten wird, und das Lager (78) nicht an der Außenseite des zweiten Erstreckungsabschnittes (764) in der radialen Richtung angeordnet ist.

**Revendications**

**1.** Dispositif de transmission de force de direction pour un véhicule, comportant :

un élément de commande de direction (10) qui est commandé par un conducteur ;

un dispositif de direction (14) qui oriente une roue ;

un premier arbre (18) qui est lié à l'un de l'élément de commande de direction (10) et du dispositif de direction (14), et est installé de façon à être rotatif ; et

un deuxième arbre (54) qui est lié à l'autre de l'élément de commande de direction (10) et du dispositif de direction (14), et est installé de façon à être rotatif dans un état où un axe de rotation du premier arbre et un axe de rotation du deuxième arbre sont en parallèle et les axes de rotation sont décalés d'une distance prédéterminée, dans lequel

le premier arbre comporte :

(i) une partie de corps principal de premier arbre, (ii) une partie de collier de premier arbre (116, 716) qui est formée d'un seul tenant avec un bord sur le côté de deuxième arbre de la partie de corps principal de premier arbre, et dépasse dans une direction radiale du premier arbre de la partie de corps principal de premier arbre, et (iii) une partie saillante (122, 138, 140) qui est disposée en position à une distance, de plus de la distance prédéterminée, de l'axe de rotation du premier arbre dans la direction radiale du premier arbre, et dépasse de la partie de collier de premier arbre (116, 716) vers le deuxième arbre dans une direction d'axe de rotation qui est une direction d'extension de l'axe de rotation du premier arbre, et

le deuxième arbre comporte (i) une partie de corps principal de deuxième arbre (62), (ii) une partie de collier de deuxième arbre (64, 764) qui est formée d'un seul tenant avec un bord du côté de premier arbre de la partie de corps principal de deuxième arbre (62), et dépasse dans une direction radiale du deuxième arbre de la partie de corps principal de deuxième arbre (62), et (iii) un passage de guide (150, 714) qui s'ouvre dans une face d'extrémité du côté de premier arbre de la partie de collier de deuxième arbre (64, 764), et est prévue en s'étendant dans la direction radiale du deuxième arbre, et comprend une paire de faces de paroi latérale (152) enserrant la partie saillante, de telle sorte que la partie saillante du premier arbre est engagée et la partie saillante se déplace dans la direction radiale du deuxième arbre,

la partie saillante (122, 138, 140) disposée dans le premier arbre comprenant (i) un corps de base (122) qui tourne par rapport à la partie de collier de premier arbre (116, 716),

**caractérisé en ce que**

la partie saillante ou le passage de guide (150, 714) comprend (ii) un premier corps élastique (138, 426, 624) et (iii) un premier élément de lissage (140, 428, 626) qui est supporté par le premier corps élastique (138, 426, 624), et est poussé par une force élastique du premier corps élastique (138, 426, 624), et

le premier élément de lissage (140, 428, 626) est configuré de façon à entrer en contact avec la partie saillante ou au moins une des faces de paroi latérale (152) en étant poussé par le premier corps élastique (138, 426, 624).

**2.** Dispositif de transmission de force de direction pour un véhicule selon la revendication 1, dans lequel

la partie saillante disposée dans le premier arbre comprend la totalité de (i) le corps de base, (ii) le premier corps élastique (138, 426) et (iii) le premier élément de lissage (140, 428),

le premier corps élastique (138, 426) est maintenu par le corps de base, et

le premier élément de lissage (140, 428) entre en contact avec les deux faces de la paire de faces de paroi latérale (152) du passage de guide (150, 714) dans un état de poussée par la force élastique du premier corps élastique (138, 426).

**3.** Dispositif de transmission de force de direction pour un véhicule selon la revendication 1 ou 2, comportant en outre un mécanisme de transmission de rotation qui est configuré de telle sorte qu'un changement dans un état d'engagement de la partie saillante et du passage de guide (150, 714) du fait d'une rotation d'un du premier arbre et du deuxième arbre amène l'autre des arbres à tourner tout en changeant une différence dans des phases de rotation entre le premier arbre et le deuxième arbre.

**4.** Dispositif de transmission de force de direction pour un véhicule selon l'une quelconque des revendications 1 à 3, dans lequel

une surface extérieure du corps de base a une forme cylindrique,
le premier corps élastique (138) est maintenu sur la surface extérieure du corps de base et a une forme annulaire, et
le premier élément de lissage (140) est inséré extérieurement dans le premier corps élastique (138), et a une forme annulaire.

5. Dispositif de transmission de force de direction pour un véhicule selon la revendication 4, dans lequel
une première face cylindrique (128) et une deuxième face cylindrique (130) ayant un diamètre plus petit que la première face cylindrique (128) sont formées sur la surface extérieure du corps de base, et
le premier corps élastique (138) est maintenu par la deuxième face cylindrique (130).

6. Dispositif de transmission de force de direction pour un véhicule selon la revendication 5, dans lequel
si un couple de rotation transmis depuis l'un du premier arbre et du deuxième arbre à l'autre des arbres est plus grand qu'un couple de rotation prédéterminé, une partie du premier élément de lissage (140) se déplace vers la deuxième face cylindrique (130) du corps de base, et la partie saillante tourne dans un état de la première face cylindrique (128) du corps de base en contact avec une face de la paire de faces de paroi latérale (152).

7. Dispositif de transmission de force de direction pour un véhicule selon la revendication 6, dans lequel
le corps de base comprend un premier élément cylindrique (124) comprenant une face de palier (132) reliant la première face cylindrique (128) et la deuxième face cylindrique (130), et un deuxième élément cylindrique (126) qui est fixé de manière coaxiale sur le premier élément cylindrique (124),
le corps de base comprend une première rainure circonférentielle (136) qui est coupée par la deuxième face cylindrique (130) et la face de palier (132) du premier élément cylindrique (124), et le deuxième élément cylindrique (126), et
le premier corps élastique (138) est disposé dans la première rainure circonférentielle (136).

8. Dispositif de transmission de force de direction pour un véhicule selon la revendication 7, dans lequel
un diamètre extérieur d'une surface extérieure d'un du premier élément cylindrique (124) et du deuxième élément cylindrique (126) est plus petit qu'un diamètre extérieur d'une surface extérieure de l'autre des éléments cylindriques.

9. Dispositif de transmission de force de direction pour un véhicule selon la revendication 8, dans lequel
si une force dépassant un niveau prédéterminé agit sur un du premier élément cylindrique (124) et du deuxième élément cylindrique (126), le premier élément cylindrique (124) et le deuxième élément cylindrique (126) se séparent.

10. Dispositif de transmission de force de direction pour un véhicule selon la revendication 9, dans lequel
un du premier élément cylindrique (124) et du deuxième élément cylindrique (126) est disposé dans une position plus près de la partie de collier de premier arbre (116) que l'autre des éléments cylindriques.

11. Dispositif de transmission de force de direction pour un véhicule selon la revendication 10, dans lequel
la partie de collier de premier arbre (116), sur laquelle le corps de base comprenant le premier élément cylindrique (124) et le deuxième élément cylindrique (126) est disposé, est disposée sous la partie de collier de deuxième arbre (64) sur laquelle le passage de guide (150) est disposé, et
un élément cylindrique séparé, parmi le premier élément cylindrique (124) et le deuxième élément cylindrique (126), se déplace vers la partie de collier de premier arbre (116).

12. Dispositif de transmission de force de direction pour un véhicule selon la revendication 7, dans lequel
le corps de base comprend en outre un troisième élément cylindrique (208) qui est fixé coaxialement sur le premier élément cylindrique (124),
le corps de base comprend une deuxième rainure circonférentielle (210) coupée par le premier élément cylindrique (124), le deuxième élément cylindrique (126) et le troisième élément cylindrique (208), et
un deuxième corps élastique (214) est disposé dans la deuxième rainure circonférentielle (210).

13. Dispositif de transmission de force de direction pour un véhicule selon l'une quelconque des revendications 2 à 12, dans lequel
au moins un d'une partie périphérique d'ouverture (154) de la paire de faces de paroi latérale (152), positionnée au niveau d'une extrémité de la paire de faces de paroi latérale (152) dans une direction d'axe de rotation du deuxième arbre, et d'un bord (156) d'une surface extérieure du premier élément de lissage (140), positionné sur le côté de deuxième arbre, est conique.

**14.** Dispositif de transmission de force de direction pour un véhicule selon la revendication 2, dans lequel le passage de guide (150) a un bord d'ouverture (155) qui s'ouvre vers l'extérieur dans la direction radiale du deuxième arbre,
le passage de guide (150) comprend :

une première partie de passage, pour laquelle une distance entre la paire de faces de paroi latérale (152) est prévue pour être plus petite qu'un diamètre extérieur de la partie saillante, la première partie de passage commandant le déplacement de la partie saillante dans une direction circonférentielle du deuxième arbre ; et
une deuxième partie de passage qui est disposée dans une zone de la première partie de passage au bord d'ouverture (155), et pour laquelle une distance entre la paire de faces de paroi latérale (152) est prévue pour être plus grande que le diamètre extérieur de la partie saillante.

**15.** Dispositif de transmission de force de direction pour un véhicule selon la revendication 14, dans lequel la partie saillante se déplace dans une plage de la première partie de passage quand, du fait de la rotation d'un du premier arbre et du deuxième arbre, l'autre des arbres tourne.

**16.** Dispositif de transmission de force de direction pour un véhicule selon la revendication 15, dans lequel la première partie de passage (157) est prévue de telle sorte que la distance entre la paire de faces de paroi latérale (152) augmente progressivement vers la deuxième partie de passage (158), et
la partie saillante se déplace dans une plage jusqu'à une limite entre la première partie de passage (157) et la deuxième partie de passage (158) quand, du fait d'une rotation d'un du premier arbre et du deuxième arbre, l'autre des arbres tourne,
ou dans lequel
au moins une partie (308) de la première partie de passage est prévue de telle sorte que la distance entre la paire de faces de paroi latérale (152) est fixe, et
au moins une partie (308) de la deuxième partie de passage est prévue de telle sorte que la distance entre la paire de faces de paroi latérale (152) augmente vers le bord d'ouverture (155) par rapport à la première partie de passage.

**17.** Dispositif de transmission de force de direction pour un véhicule selon l'une quelconque des revendications 14 à 16, comportant en outre :

un logement de premier arbre (84) qui maintient de façon rotative le premier arbre à l'intérieur ; et
un logement de deuxième arbre (56) qui maintient de façon rotative le deuxième arbre à l'intérieur, dans lequel
un bord du logement de premier arbre (84) est relié à un bord du logement de deuxième arbre (56), et
la partie saillante du premier arbre dépasse entièrement du bord du logement de premier arbre (84) relié au logement de deuxième arbre (56), dans la direction d'axe de rotation.

**18.** Dispositif de transmission de force de direction pour un véhicule selon la revendication 17, dans lequel la partie saillante est insérée depuis l'extérieur de la partie de collier de deuxième arbre (64) dans la direction radiale jusqu'à la deuxième partie de passage en passant par le bord d'ouverture (155) du passage de guide (150).

**19.** Dispositif de transmission de force de direction pour un véhicule selon la revendication 1, dans lequel la partie saillante comprend une paire de faces de contact qui tournent par rapport à la partie de collier de premier arbre (116), et qui font face à la paire de faces de paroi latérale (152), et
quand, du fait de la rotation d'un du premier arbre et du deuxième arbre, l'autre des arbres tourne, la partie saillante coulisse dans le passage de guide (150) dans un état où au moins une face de contact parmi la paire de faces de contact est en contact avec une face de paroi latérale (152) parmi la paire de faces de paroi latérale.

**20.** Dispositif de transmission de force de direction pour un véhicule selon la revendication 19, dans lequel au moins une de la paire de faces de contact et de la paire de faces de paroi latérale (152) comprend le premier élément de lissage (428, 626).

**21.** Dispositif de transmission de force de direction pour un véhicule selon la revendication 19 ou 20, dans lequel quand, du fait de la rotation d'un du premier arbre et du deuxième arbre, l'autre des arbres tourne, la partie saillante coulisse dans le passage de guide (150) dans un état où chacune des faces de contact est en contact avec chacune des faces de paroi latérale (152) respectivement.

**22.** Dispositif de transmission de force de direction pour un véhicule selon l'une quelconque des revendications 19 à 21, comportant en outre :

un deuxième corps élastique (426) ; et
un deuxième élément de lissage (428), dans lequel
le premier corps élastique (426), le deuxième corps élastique (426), le premier élément de lissage (428) et le deuxième élément de lissage (428) sont de manière respective en forme de plaque,
le corps de base de la partie saillante est disposé de façon rotative entre le premier élément de lissage (428) et le deuxième élément de lissage (428),
le premier corps élastique (426) est disposé entre le corps de base et le premier élément de lissage (428),
le deuxième corps élastique (426) est disposé entre le corps de base et le deuxième élément de lissage (428),
le premier élément de lissage (428) est en contact avec une face de paroi latérale (152) de la paire de faces de paroi latérale (152) en étant poussé par chacun des éléments élastiques, et
le deuxième élément de lissage (428) est en contact avec l'autre face de paroi latérale (152) de la paire de faces de paroi latérale (152) en étant poussé par chacun des éléments élastiques ;
ou comportant en outre :
un deuxième corps élastique (624) ; et
un deuxième élément de lissage (626), dans lequel
le premier corps élastique (624), le deuxième corps élastique (624), le premier élément de lissage (626) et le deuxième élément de lissage (626) sont de manière respective en forme de plaque,
le corps de base de la partie saillante est disposé de façon rotative entre le premier élément de lissage (626) et le deuxième élément de lissage (626),
une partie radiale de renfoncement (622) qui est ouverte vers le côté de premier arbre et qui s'étend dans la direction radiale du deuxième arbre, est prévue dans une face d'extrémité de la partie de collier de deuxième arbre (64),
le premier élément de lissage (626) et le deuxième élément de lissage (626) sont disposés dans la partie radiale de renfoncement (622) dans une direction d'extension de la partie radiale de renfoncement (622),
le premier corps élastique (624) est disposé entre le premier élément de lissage (626) et une face de paroi de la partie radiale de renfoncement (622),
le deuxième corps élastique (624) est disposé entre le deuxième élément de lissage (626) et l'autre face de paroi de la partie radiale de renfoncement (622), et
le premier élément de lissage (626) et le deuxième élément de lissage (626) sont poussés par chacun des éléments élastiques de façon à venir en contact de manière respective avec la paire de faces de contact du corps de base.

**23.** Dispositif de transmission de force de direction pour un véhicule selon l'une quelconque des revendications 1 à 22, dans lequel
la partie de collier de premier arbre (716) est une première partie d'extension (716) qui s'étend vers l'extérieur seulement depuis une partie d'une surface extérieure de la partie de corps principal de premier arbre dans une direction circonférentielle.

**24.** Dispositif de transmission de force de direction pour un véhicule selon l'une quelconque des revendications 1 à 23, dans lequel
la partie de collier de deuxième arbre (764) est une deuxième partie d'extension (764) qui s'étend vers l'extérieur seulement depuis une partie d'une surface extérieure de la partie de corps principal de deuxième arbre (62) dans une direction circonférentielle,
la deuxième partie d'extension (764) comprend une paire de parties redressées (710), et
la paire de faces de paroi latérale (152) est constituée par des surfaces l'une en face de l'autre de la paire de parties redressées (710).

**25.** Dispositif de transmission de force de direction pour un véhicule selon la revendication 24, dans lequel
la deuxième partie d'extension (764) comprend une paire de parties de bras (712),
les parties redressées (710) sont redressées depuis la paire de parties de bras (712) vers le premier arbre, et
les surfaces l'une en face de l'autre de la paire de parties redressées (710) s'étendent en parallèle.

**26.** Dispositif de transmission de force de direction pour un véhicule selon la revendication 24 ou 25, dans lequel
quand la partie saillante se déplace jusqu'à une position la plus éloignée de l'axe de rotation du deuxième arbre, une position d'une extrémité de la partie redressée (710) est prévue de telle sorte qu'au moins une partie de la partie saillante se positionne à l'intérieur d'un lieu de rotation, centré sur l'axe de rotation du deuxième arbre à l'extrémité de la partie redressée (710) dans la direction radiale du deuxième arbre.

27. Dispositif de transmission de force de direction pour un véhicule selon l'une quelconque des revendications 24 à 26, dans lequel

la partie de corps principal de deuxième arbre (62) est maintenue de façon rotative par un palier (78), et le palier (78) n'est pas disposé à l'extérieur de la deuxième partie d'extension (764) dans la direction radiale.

FIG.1

EP 2 177 420 B1

# FIG.2

EP 2 177 420 B1

# FIG.3

EP 2 177 420 B1

# F I G . 4

# FIG.5

# FIG.6

# FIG.7A

64(60)  88

122

150  140

$\alpha = \beta = 0°$

# FIG.7B

$\beta < 90°$

$\alpha = 90°$

# FIG.7C

$\beta < 90°$

$\alpha = 90°$

# FIG.7D

$\alpha = \beta = 180°$

# FIG.8

ROTATION
ANGLE β
OF INPUT
SIDE SHAFT
(AT RIGHT TURN)

180°

α = β

(AT LEFT   180°
TURN)

0   180°   ROTATION
ANGLE α
OF LOWER
SHAFT (AT
RIGHT TURN)

180°

(AT LEFT TURN)

# F I G . 9

GEAR RATIO $\dfrac{d\beta}{d\alpha}$

1+e

1

1-e

180° (AT LEFT TURN)   90°   0   90°   180°   ROTATION ANGLE $\alpha$ OF LOWER SHAFT (AT RIGHT TURN)

EP 2 177 420 B1

# FIG.10A

STEERING
TORQUE

0

CONTROL
ANGLE

# FIG.10B

STEERING
TORQUE

0

CONTROL
ANGLE

WHEN
CONTACTING
TEFLON RING

WHEN
CONTACTING
ROLLER

49

# FIG.11

# F I G . 12

STEERING TORQUE

CONTROL ANGLE

0

WHEN CONTACTING TEFLON RING

WHEN CONTACTING ROLLER

# FIG.13

EP 2 177 420 B1

# FIG. 14

EP 2 177 420 B1

EP 2 177 420 B1

# F I G . 15

54

# FIG.16

# FIG. 17A    FIG. 17B

64(60)    88

159

157

152    152

$\alpha = \beta = 0°$

$\beta < 90°$

$\alpha = 90°$

# FIG. 17C    FIG. 17D

140

152    152

157    156

$\beta < 90°$

$\alpha = 90°$

$\alpha = \beta = 180°$

# FIG.18

EP 2 177 420 B1

# FIG.19

# FIG.20

EP 2 177 420 B1

# FIG.21

# FIG.22A

# FIG.22B

64(60)   88

428
150   122

α = β = 0°

β < 90°
α = 90°

# FIG.22C

# FIG.22D

β < 90°
α = 90°

α = β = 180°

# FIG.23

# F I G . 24

# FIG.25

EP 2 177 420 B1

# FIG.26

# F I G . 27

# F I G . 28

FIG. 29A    FIG. 29B

$\alpha = \beta = 0°$

$\beta < 90°$    $\alpha = 90°$

FIG. 29C    FIG. 29D

$\beta < 90°$    $\alpha = 90°$

$\alpha = \beta = 180°$

# FIG.30A

# FIG.30B

EP 2 177 420 B1

# FIG.31A

# FIG.31B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4054769 A
- JP 4054769 U
- JP 3227772 A
- DE 4102913 A1
- JP 5178222 A
- JP 6092245 A
- US 5303793 A
- WO 2009077832 A1